# EUROPEAN PATENT APPLICATION

(11) **EP 4 131 156 A1**
(43) Date of publication of application: **08.02.2023**
(21) Application number: 21780790.8
(22) Date of filing: 22.03.2021
(51) Int. Cl.: G06T 7/00, G06N 3/04

(54) **INFORMATION PROCESSING DEVICE, INFORMATION PROCESSING METHOD, AND INFORMATION PROCESSING PROGRAM**

(30) Priority: 31.03.2020 JP 2020064086
(71) Applicant: Sony Group Corporation, Minato-Ku, Tokyo, 108-0075 (JP)
(72) Inventor: AOKI, Suguru, Tokyo 108-0075 (JP); SATOH, Ryuta, Tokyo 108-0075 (JP); HIEIDA, Yusuke, Tokyo 108-0075 (JP)
(74) Representative: Witte, Weller & Partner Patentanwälte mbB
(86) International application number: PCT/JP2021/011645
(87) International publication number: WO 2021/200330

(57) **Abstract**

It is possible to improve characteristics of recognition processing using a captured image. An information processing device according to the present disclosure includes: a setting section (124) that sets a pixel position for acquiring a sampling pixel for each divided region obtained by dividing imaging information including pixels; a calculation section (221) that calculates a feature amount of a sampling image including the sampling pixel; and a recognition section (225) that performs recognition processing on the basis of the feature amount of the sampling image and outputs a recognition processing result. The setting section sets different pixel positions for first imaging information and second imaging information acquired after the first imaging information in time series among pieces of the imaging information.

## Description

### TECHNICAL FIELD

The present disclosure relates to an information processing device, an information processing method, and an information processing program.

### BACKGROUND ART

In recent years, with an increase in resolution of imaging devices such as digital still cameras, digital video cameras, and small cameras mounted on multifunctional mobile phones (smartphones) and the like, information processing devices having an image recognition function for recognizing a predetermined target object included in a captured image have been developed.

### CITATION LIST

### PATENT DOCUMENT

Patent Document 1: Japanese Patent Application Laid-Open No. 2017-112409

### SUMMARY OF THE INVENTION

### PROBLEMS TO BE SOLVED BY THE INVENTION

With the image recognition function, it is possible to improve performance in detecting a target object by using a captured image with a higher resolution. However, in the conventional technology, image recognition using a captured image with a high resolution requires a large calculation workload related to image recognition processing, and it is difficult to improve the simultaneity of recognition processing for a captured image.

An object of the present disclosure is to provide an information processing device, an information processing method, and an information processing program capable of improving characteristics of recognition processing using a captured image.

### SOLUTIONS TO PROBLEMS

An information processing device according to the present disclosure includes: a setting section that sets a pixel position for acquiring a sampling pixel for each divided region obtained by dividing imaging information including pixels; a calculation section that calculates a feature amount of a sampling image including the sampling pixel; and a recognition section that performs recognition processing on the basis of the feature amount of the sampling image and outputs a recognition processing result, in which the setting section sets different pixel positions for first imaging information and second imaging information acquired after the first imaging information in time series among pieces of the imaging information.

### BRIEF DESCRIPTION OF DRAWINGS

Fig. 1 is a block diagram depicting a basic configuration example of an information processing device applied to each embodiment.
Fig. 2A is a diagram schematically depicting an example of recognition processing using a deep neural network (DNN).
Fig. 2B is a diagram schematically depicting an example of recognition processing using the DNN.
Fig. 3A is a diagram schematically depicting a first example of identification processing using the DNN in a case where time-series information is used.
Fig. 3B is a diagram schematically depicting the first example of identification processing using the DNN in a case where time-series information is used.
Fig. 4A is a diagram schematically depicting a second example of identification processing using the DNN in a case where time-series information is used.
Fig. 4B is a diagram schematically depicting the second example of identification processing using the DNN in a case where time-series information is used.
Fig. 5 is a block diagram schematically depicting a hardware configuration example of an imaging device as the information processing device applicable to each embodiment.
Fig. 6A is a diagram depicting an example in which an imaging section is implemented by a multilayer complementary metal oxide semiconductor (CMOS) image sensor (CIS) having a two-layer structure.
Fig. 6B is a diagram depicting an example in which an imaging section 1200 is implemented by a multilayer CIS having a three-layer structure.
Fig. 7 is a block diagram depicting a configuration of an example of the imaging section applicable to each embodiment.
Fig. 8A is a diagram for explaining resolution of an image used for recognition processing.
Fig. 8B is a diagram for explaining resolution of an image used for recognition processing.
Fig. 9 is a block diagram depicting a configuration of an example of an information processing device according to a first embodiment of the present disclosure.
Fig. 10 is a schematic diagram for explaining recognition processing according to the first embodiment.
Fig. 11 is a schematic diagram for explaining sampling processing according to the first embodiment.
Fig. 12A is a diagram for more specifically explaining the recognition processing according to the first embodiment.
Fig. 12B is a diagram for more specifically explaining the recognition processing according to the first embodiment.
Fig. 12C is a diagram for more specifically explaining the recognition processing according to the first embodiment.
Fig. 12D is a diagram for more specifically explaining the recognition processing according to the first embodiment.
Fig. 12E is a diagram for more specifically explaining the recognition processing according to the first embodiment.
Fig. 13A is a schematic diagram for explaining subsampling processing in the recognition processing according to the first embodiment.
Fig. 13B is a schematic diagram for explaining the subsampling processing in the recognition processing according to the first embodiment.
Fig. 14 is a timing chart of an example illustrating an example of control of reading and recognition processing according to the first embodiment.
Fig. 15 is a functional block diagram of an example for explaining more detailed functions of a preprocessing section and a recognition section according to the first embodiment.
Fig. 16 is a schematic diagram for explaining a first example of a method of reducing a calculation workload according to an existing technology.
Fig. 17 is a schematic diagram for explaining a second example of the method of reducing a calculation workload according to an existing technology.
Fig. 18 is a schematic diagram depicting an example in which 1/N × 1/N size reduction, 1/N × 1/N cropping, and the recognition processing according to the first embodiment are compared with recognition processing using an original image as it is.
Fig. 19A is a diagram schematically depicting recognition processing using a size-reduced image according to an existing technology.
Fig. 19B is a diagram schematically depicting the recognition processing according to the first embodiment.
Fig. 20 is a timing chart of an example illustrating control of reading and recognition processing in a case where image data of a captured image is used without being reduced in size according to an existing technology.
Fig. 21 is a timing chart of an example illustrating control of reading and recognition processing in a case of "1/N × 1/N size reduction" according to an existing technology.
Fig. 22 is a schematic diagram for explaining a latency of a recognition result according to the first embodiment and a latency of a recognition result according to an existing technology.
Fig. 23A is a schematic diagram for schematically explaining a relationship between recognition processing and braking of a vehicle.
Fig. 23B is a schematic diagram for schematically explaining the relationship between recognition processing and braking of a vehicle.
Fig. 24 is a diagram for explaining an example of improving recognition processing of an existing technology by the recognition processing according to the first embodiment.
Fig. 25A is a schematic diagram depicting a first example of effective application of the recognition processing according to the first embodiment.
Fig. 25B is a schematic diagram depicting a second example of the effective application of the recognition processing according to the first embodiment.
Fig. 26A is a schematic diagram depicting an example in which subsampling is performed by selecting, as sampling pixels, every other pixel of a divided region in a row direction and a column direction.
Fig. 26B is a schematic diagram depicting an example in which subsampling is performed by selecting, as sampling pixels, every three other pixel of a divided region in the row direction and the column direction.
Fig. 27 is a schematic diagram for explaining subsampling according to a fourth modified example of the first embodiment.
Fig. 28 is a schematic diagram for explaining subsampling according to a fifth modified example of the first embodiment.
Fig. 29 is a schematic diagram depicting an example of exposure control according to a sixth modified example of the first embodiment.
Fig. 30 is a block diagram depicting a configuration of an example of an information processing device according to a second embodiment.
Fig. 31 is a timing chart of an example of control of reading and recognition processing according to the second embodiment.
Fig. 32 is a schematic diagram for explaining a first application example of the second embodiment.
Fig. 33 is a schematic diagram for explaining a second application example of the second embodiment.
Fig. 34 is a schematic diagram for explaining a third application example of the second embodiment.
Fig. 35 is a block diagram depicting a configuration of an example of an information processing device according to a third embodiment.
Fig. 36 is a schematic diagram for explaining subsampling processing in recognition processing according to a fourth embodiment.
Fig. 37 is a diagram depicting examples of use of the information processing devices according to the first embodiment and each modified example thereof, the second embodiment, the third embodiment, and the fourth embodiment.
Fig. 38 is a block diagram depicting an example of schematic configuration of a vehicle control system.
Fig. 39 is a diagram of assistance in explaining an example of installation positions of an outside-vehicle information detecting section and an imaging section.

### MODE FOR CARRYING OUT THE INVENTION

Hereinafter, embodiments of the present disclosure will be described in detail with reference to the drawings. Note that, in the following embodiments, the same parts are denoted by the same reference signs, and a redundant description will be omitted.

Hereinafter, embodiments of the present disclosure will be described in the following order.
1. Technology Applicable to Each Embodiment
   1-0. Outline of Recognition Processing Applicable to Each Embodiment
   1-1. Hardware Configuration Applicable to Each Embodiment
      1-1-1. Configuration Example of Imaging Section Applicable to Each Embodiment
      1-1-2. Resolution of Captured Image
2. First Embodiment
   2-1. Configuration According to First Embodiment
      2-1-1. Outline of Configuration Applicable to First Embodiment
      2-1-2. Example of Recognition Processing According to First Embodiment
      2-1-3. Subsampling Processing According to First Embodiment
      2-1-4. More Specific Configuration Example According to First Embodiment
   2-2. Effects According to First Embodiment
      2-2-1. Outline of Existing Technologies
      2-2-2. Comparison of Technology According to Present Disclosure with Existing Technologies
         2-2-2-1. Comparison in Recognition Result
         2-2-2-2. Comparison in Recognition Processing Control
         2-2-2-3. Comparison in Latency in Recognition Processing
         2-2-2-4. Example of Improvement by Recognition Processing According to First Embodiment
         2-2-2-5. Effective Application of Recognition Processing According to First Embodiment
   2-3. Modified Examples of First Embodiment
      2-3-1. First Modified Example
      2-3-2. Second Modified Example
      2-3-3. Third Modified Example
      2-3-4. Fourth Modified Example
      2-3-5. Fifth Modified Example
      2-3-6. Sixth Modified Example
      2-3-7. Seventh Modified Example
3. Second Embodiment
   3-1. Configuration Example According to Second Embodiment
   3-2. Application Example of Second Embodiment
      3-2-1. First Application Example
      3-2-2. Second Application Example
      3-2-3. Third Application Example
4. Third Embodiment
5. Fourth Embodiment
6. Fifth Embodiment
   6-1. Application Example of Technology According to Present Disclosure
   6-2. Example of Application to Mobile Body

### [1. Technology Applicable to Each Embodiment]

First, a technology applicable to each embodiment will be schematically described in order to facilitate understanding.

### (1-0. Outline of Recognition Processing Applicable to Each Embodiment)

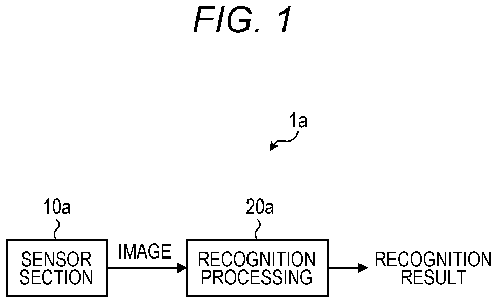

Fig. 1 is a block diagram depicting a basic configuration example of an information processing device applied to each embodiment. In Fig. 1, an information processing device 1a includes a sensor section 10a and a recognition processing section 20a. Although not illustrated, the sensor section 10a includes imaging means (camera) and an imaging control section that controls the imaging means.

The sensor section 10a performs imaging under the control of the imaging control section, and supplies image data of a captured image acquired by imaging to the recognition processing section 20a. The recognition processing section 20a performs recognition processing on image data by using a deep neural network (DNN). More specifically, the recognition processing section 20a includes a recognition model trained in advance by machine learning using predetermined training data, and performs recognition processing using the DNN on the image data supplied from the sensor section 10a on the basis of the recognition model. The recognition processing section 20a outputs a recognition result obtained by the recognition processing to the outside of the information processing device 1a, for example.

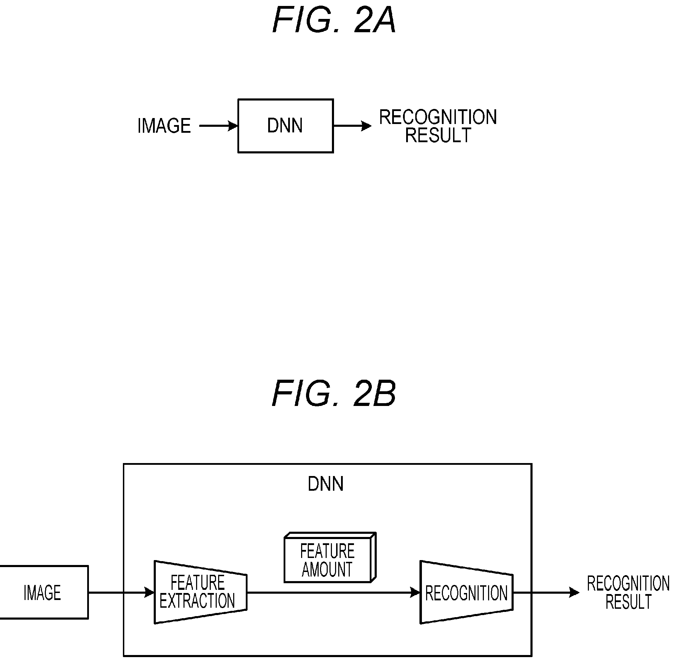

Figs. 2A and 2B are diagrams schematically depicting an example of recognition processing using the DNN. In this example, as depicted in Fig. 2A, one image is input to the DNN. In the DNN, recognition processing is performed on the input image, and a recognition result is output.

The processing of Fig. 2A will be described in more detail with reference to Fig. 2B. As depicted in Fig. 2B, the DNN performs feature extraction processing and recognition processing. In the DNN, a feature amount is extracted from the input image by the feature extraction processing. This feature extraction processing is performed using a convolutional neural network (CNN) as a type of DNN, for example. Furthermore, in the DNN, recognition processing is performed on the extracted feature amount to obtain a recognition result.

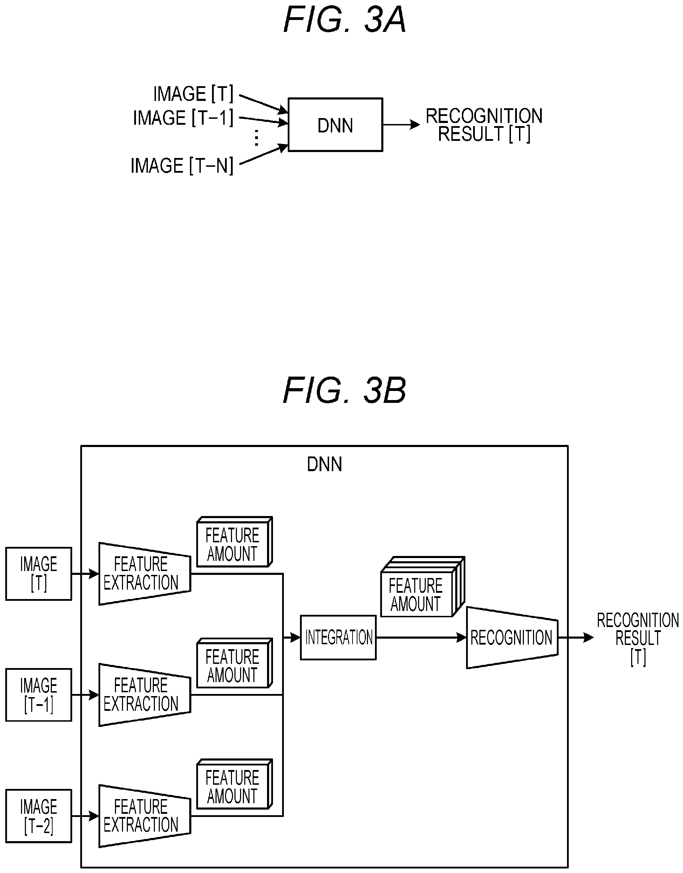

In the DNN, recognition processing can be performed using time-series information. Figs. 3A and 3B are diagrams schematically depicting a first example of identification processing using the DNN in a case where time-series information is used. In the example of Figs. 3A and 3B, the identification processing using the DNN is performed using a fixed number of pieces of past information in time series. In the example of Fig. 3A, an image [T] at time T, an image [T-1] at time T-1 before time T, and an image [T-2] at time T-2 before time T-1 are input to the DNN. In the DNN, the identification processing is performed on each of the input images [T], [T-1], and [T-2] to obtain a recognition result [T] at time T.

Fig. 3B is a diagram for explaining the processing of Fig. 3A in more detail. As depicted in Fig. 3B, in the DNN, the feature extraction processing described above with reference to Fig. 2B is performed on a one-to-one basis for each of the input images [T], [T-1], and [T-2], and feature amounts corresponding to the respective images [T], [T-1], and [T-2] are extracted. In the DNN, the respective feature amounts obtained on the basis of the images [T], [T-1], and [T-2] are integrated, the identification processing is performed on the integrated feature amount, and the recognition result [T] at time T is obtained. It can be said that the respective feature amounts obtained on the basis of the images [T], [T-1], and [T-2] are intermediate data for obtaining the integrated feature amount to be used for recognition processing.

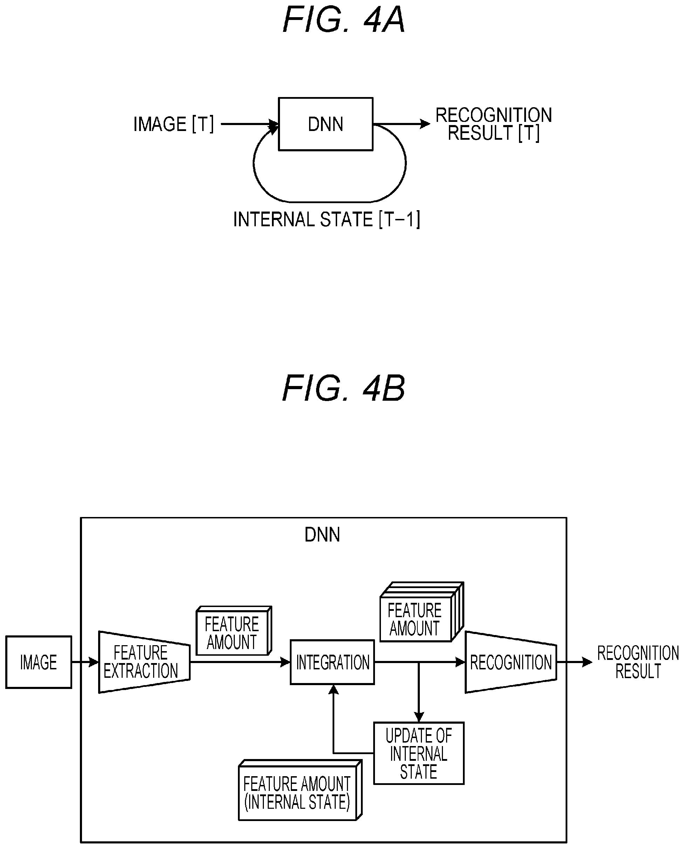

Figs. 4A and 4B are diagrams schematically depicting a second example of the identification processing using the DNN in a case where time-series information is used. In the example of Fig. 4A, an image [T] at time T is input to the DNN whose internal state has been updated to a state at time T-1, and a recognition result [T] at time T is obtained.

Fig. 4B is a diagram for describing the processing of Fig. 4A in more detail. As depicted in Fig. 4B, in the DNN, the feature extraction processing described above with reference to Fig. 2B is performed on the input image [T] at time T, and a feature amount corresponding to the image [T] is extracted. In the DNN, the internal state is updated by an image before time T, and a feature amount related to the updated internal state is stored. The feature amount related to the stored internal information and the feature amount in the image [T] are integrated, and the identification processing is performed on the integrated feature amount. In this case, it can be said that each of the feature amount related to the stored internal information and the feature amount in the image [T] is intermediate data for obtaining the integrated feature amount to be used for the recognition processing.

The identification processing illustrated in Figs. 4A and 4B is performed using, for example, the DNN whose internal state has been updated using the immediately previous recognition result, and is recurrent processing. A DNN that performs recurrent processing in this manner is referred to as a recurrent neural network (RNN). Identification processing using the RNN is generally used for moving image recognition or the like, and for example, the internal state of the DNN is sequentially updated by frame images updated in time series, whereby the identification accuracy can be improved.

### (1-1. Hardware Configuration Applicable to Each Embodiment)

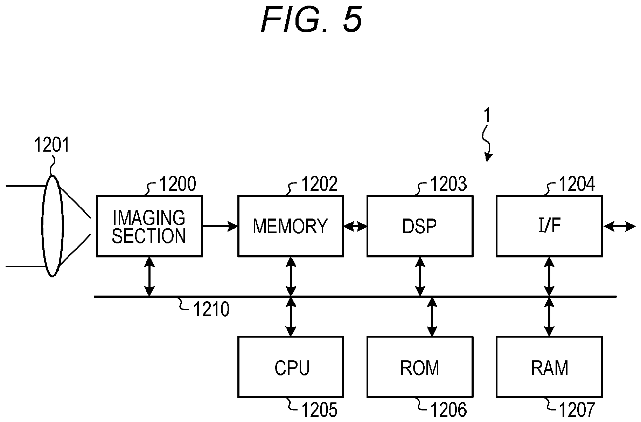

Fig. 5 is a block diagram schematically depicting a hardware configuration example of an information processing device applicable to each embodiment. In Fig. 5, an information processing device 1 includes an imaging section 1200, a memory 1202, a digital signal processor (DSP) 1203, an interface (I/F) 1204, a central processing unit (CPU) 1205, a read only memory (ROM) 1206, and a random access memory (RAM) 1207, which are communicably connected to one another via a bus 1210. The information processing device 1 can further include an input device that receives a user operation, a display device for displaying information for a user, and a storage device that stores data in a nonvolatile manner.

The CPU 1205 is operated using the RAM 1207 as a work memory according to a program stored in advance in the ROM 1206, and controls the overall operation of the information processing device 1. The interface 1204 communicates with the outside of the information processing device 1 by wired or wireless communication. For example, in a case where the information processing device 1 is used for in-vehicle use, the information processing device 1 can communicate with a braking control system or the like of a vehicle on which the information processing device 1 is mounted via the interface 1204.

The imaging section 1200 captures a moving image in a predetermined frame cycle and outputs pixel data for forming a frame image. More specifically, the imaging section 1200 includes a plurality of photoelectric conversion elements that converts light received by each photoelectric conversion element into a pixel signal that is an electric signal by photoelectric conversion, and a drive circuit that drives each photoelectric conversion element. In the imaging section 1200, the plurality of photoelectric conversion elements is arranged in a matrix array to constitute a pixel array.

For example, the sensor section 10a in Fig. 1 includes the imaging section 1200, and outputs pixel data output from the imaging section 1200 within one frame period as image data for one frame.

Here, each photoelectric conversion element corresponds to a pixel in the image data, and in a pixel array section, photoelectric conversion elements whose number corresponds to, for example, 1920 pixels × 1080 pixels (rows × columns) are arranged in a matrix array. Note that an image of one frame is formed by pixel signals from the photoelectric conversion elements whose number corresponds to 1920 pixels × 1080 pixels.

The optical section 1201 includes a lens, an autofocus mechanism, and the like, and causes the pixel array section included in the imaging section 1200 to emit light incident on the lens. The imaging section 1200 generates a pixel signal for each photoelectric conversion element according to light emitted to the pixel array section via the optical section 1201. The imaging section 1200 converts a pixel signal that is an analog signal into pixel data that is a digital signal, and outputs the pixel data. The pixel data output from the imaging section 1200 is stored in the memory 1202. The memory 1202 is, for example, a frame memory, and can store pixel data for at least one frame.

The DSP 1203 performs predetermined image processing on the pixel data stored in the memory 1202. Furthermore, the DSP 1203 includes a recognition model trained in advance, and performs the recognition processing using the DNN described above on the image data stored in the memory 1202 on the basis of the recognition model. The recognition result that is a result of the recognition processing performed by the DSP 1203 is temporarily stored in, for example, a memory included in the DSP 1203 or the RAM 1207, and is output from the interface 1204 to the outside. Alternatively, in a case where the information processing device 1 includes a storage device, the recognition result may be stored in the storage device.

Alternatively, and the function of the DSP 1203 may be implemented by the CPU 1205. In addition, a graphics processing unit (GPU) may be used instead of the DSP 1203.

A complementary metal oxide semiconductor (CMOS) image sensor (CIS) in which each section included in the imaging section 1200 is integrally formed using a CMOS can be applied as the imaging section 1200. The imaging section 1200 can be formed on one substrate. Alternatively, the imaging section 1200 may be a multilayer CIS in which a plurality of semiconductor chips is stacked and integrally formed. Note that the imaging section 1200 is not limited to this example, and may be another type of optical sensor such as an infrared light sensor that performs imaging with infrared light.

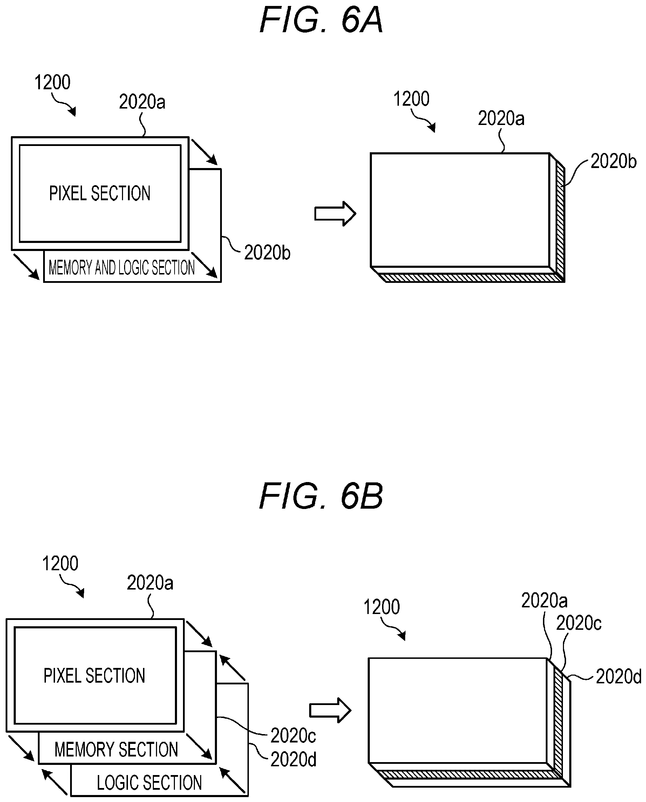

As an example, the imaging section 1200 can be formed by a multilayer CIS having a two-layer structure in which semiconductor chips are stacked in two layers. Fig. 6A is a diagram depicting an example in which the imaging section 1200 is formed by a multilayer CIS having a two-layer structure. In the structure of Fig. 6A, a pixel section 2020a is formed in a semiconductor chip of a first layer, and a memory+logic section 2020b is formed in a semiconductor chip of a second layer. The pixel section 2020a includes at least the pixel array section in the imaging section 1200. The memory+logic section 2020b includes, for example, a drive circuit for driving the pixel array section. The memory+logic section 2020b can further include the memory 1202.

As illustrated on the right side of Fig. 6A, the imaging section 1200 is configured as one solid-state imaging element by bonding the semiconductor chip of the first layer and the semiconductor chip of the second layer in such a way that the semiconductor chip of the first layer and the semiconductor chip of the second layer are in electrical contact with each other.

As another example, the imaging section 1200 can be formed to have a three-layer structure in which three semiconductor chips are stacked. Fig. 6B is a diagram depicting an example in which the imaging section 1200 is formed by a multilayer CIS having a three-layer structure. In the structure of Fig. 6B, a pixel section 2020a is formed in a semiconductor chip of a first layer, a memory section 2020c is formed in a semiconductor chip of a second layer, and a logic section 2020d is formed in a semiconductor chip of a third layer. In this case, the logic section 2020d includes, for example, a drive circuit for driving the pixel array section. Furthermore, the memory section 2020c can include a frame memory and the memory 1202.

As illustrated on the right side of Fig. 6B, the imaging section 1200 is configured as one solid-state imaging element by bonding the semiconductor chip of the first layer, the semiconductor chip of the second layer, and the semiconductor chip of the third layer in such a way that the semiconductor chip of the first layer, the semiconductor chip of the second layer, and the semiconductor chip of the third layer are in electrical contact with one another.

Note that, in the configurations of Figs. 6A and 6B, the memory+logic section 2020b can include components corresponding to the DSP 1203, the interface 1204, the CPU 1205, the ROM 1206, and the RAM 1207 depicted in Fig. 5.

### (1-1-1. Configuration Example of Imaging Section Applicable to Each Embodiment)

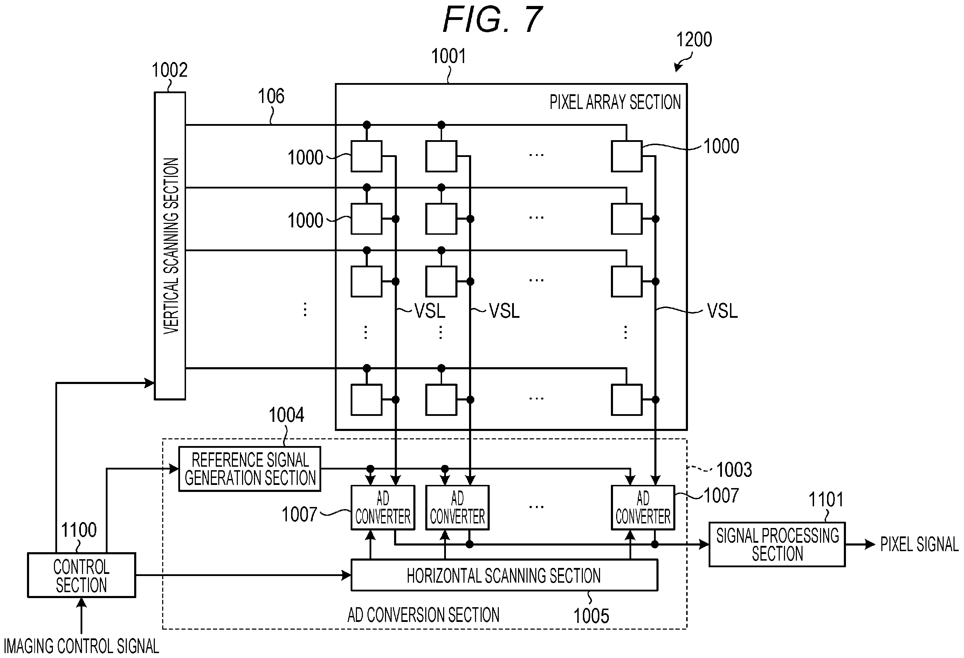

Fig. 7 is a block diagram depicting a configuration of an example of the imaging section 1200 applicable to each embodiment. In Fig. 7, the imaging section 1200 includes a pixel array section 1001, a vertical scanning section 1002, an analog-to-digital (AD) conversion section 1003, a pixel signal line 1006, a vertical signal line VSL, a control section 1100, and a signal processing section 1101. Note that, in Fig. 7, the control section 1100 and the signal processing section 1101 can also be implemented by, for example, the CPU 1205 and the DSP 1203 depicted in Fig. 5.

The pixel array section 1001 includes a plurality of pixel circuits 1000 including photoelectric conversion elements that are implemented by, for example, photodiodes, and perform photoelectric conversion on respective received light, and a circuit that reads electric charges from the photoelectric conversion elements. In the pixel array section 1001, the plurality of pixel circuits 1000 is arranged in a matrix array in a horizontal direction (row direction) and a vertical direction (column direction). In the pixel array section 1001, the arrangement of the pixel circuits 1000 in the row direction is referred to as a line. For example, in a case where an image of one frame is formed with 1920 pixels × 1080 lines, the pixel array section 1001 includes at least 1080 lines each including at least 1920 pixel circuits 1000. An image (image data) of one frame is formed by pixel signals read from the pixel circuits 1000 included in the frame.

Furthermore, in the pixel array section 1001, the pixel signal line 1006 is connected to each row and column of the pixel circuits 1000, and the vertical signal line VSL is connected to each column. An end of the pixel signal line 1006 that is not connected to the pixel array section 1001 is connected to the vertical scanning section 1002. The vertical scanning section 1002 transmits a control signal such as a drive pulse at the time of reading a pixel signal from a pixel to the pixel array section 1001 via the pixel signal line 1006 under the control of the control section 1100 described later. An end of the vertical signal line VSL that is not connected to the pixel array section 1001 is connected to the AD conversion section 1003. A pixel signal read from a pixel is transmitted to the AD conversion section 1003 via the vertical signal line VSL.

Control of reading of a pixel signal from the pixel circuit 1000 will be schematically described. The reading of a pixel signal from the pixel circuit 1000 is performed by transferring electric charges accumulated in the photoelectric conversion element by exposure to a floating diffusion (FD) layer, and converting the transferred electric charges into a voltage in the floating diffusion layer. The voltage obtained by converting the electric charges in the floating diffusion layer is output as a pixel signal to the vertical signal line VSL via an amplifier.

More specifically, in the pixel circuit 1000, during exposure, the photoelectric conversion element and the floating diffusion layer are cut off from each other (open state), and electric charges generated in response to incident light are accumulated by photoelectric conversion in the photoelectric conversion element. After the exposure is completed, the floating diffusion layer and the vertical signal line VSL are connected according to a selection signal supplied via the pixel signal line 1006. Further, the floating diffusion layer is connected to a supply line for a power supply voltage VDD or a black level voltage in a short period of time according to a reset pulse supplied via the pixel signal line 1006, and the floating diffusion layer is reset. A voltage of a reset level of the floating diffusion layer (referred to as a voltage A) is output to the vertical signal line VSL. Thereafter, the photoelectric conversion element and the floating diffusion layer are connected (closed state) by a transfer pulse supplied via the pixel signal line 1006, and the electric charges accumulated in the photoelectric conversion element are transferred to the floating diffusion layer. A voltage corresponding to an electric charge amount of the floating diffusion layer (referred to as a voltage B) is output to the vertical signal line VSL.

The AD conversion section 1003 includes an AD converter 1007 provided for each vertical signal line VSL, a reference signal generation section 1004, and a horizontal scanning section 1005. The AD converter 1007 is a column AD converter that performs AD conversion processing on each column of the pixel array section 1001. The AD converter 1007 performs AD conversion processing on a pixel signal supplied from the pixel circuit 1000 via the vertical signal line VSL, and generates two digital values (values respectively corresponding to the voltage A and the voltage B) for correlated double sampling (CDS) processing for noise reduction.

The AD converter 1007 supplies the generated two digital values to the signal processing section 1101. The signal processing section 1101 performs CDS processing on the basis of the two digital values supplied from the AD converter 1007, and generates pixel data that is a pixel signal by a digital signal.

The reference signal generation section 1004 generates, as a reference signal, a ramp signal used by each AD converter 1007 to convert a pixel signal into two digital values on the basis of a control signal input from the control section 1100. The ramp signal is a signal whose level (voltage value) decreases at a constant slope with respect to time, or a signal whose level decreases stepwise. The reference signal generation section 1004 supplies the generated ramp signal to each AD converter 1007. The reference signal generation section 1004 is implemented using, for example, a digital-to-analog converter (DAC) or the like.

In a case where a ramp signal whose voltage decreases stepwise at a predetermined slope is supplied from the reference signal generation section 1004, a counter starts counting according to a clock signal. A comparator compares a voltage of the pixel signal supplied from the vertical signal line VSL with a voltage of the ramp signal, and the counter stops counting at a timing at which the voltage of the ramp signal exceeds the voltage of the pixel signal. The AD converter 1007 converts a pixel signal by an analog signal into digital values by outputting a value corresponding to a count value at a time point when the counting is stopped.

The AD converter 1007 supplies the generated two digital values to the signal processing section 1101. The signal processing section 1101 performs CDS processing on the basis of the two digital values supplied from the AD converter 1007, and generates a pixel signal (pixel data) by a digital signal. The pixel data generated by the signal processing section 1101 is stored in a frame memory (not illustrated), and in a case where pixel data for one frame is stored in the frame memory, the pixel data is output from the imaging section 1200 as image data of one frame.

Under the control of the control section 1100, the horizontal scanning section 1005 performs selective scanning to select the respective AD converters 1007 in a predetermined order, thereby sequentially outputting each digital value temporarily held by each AD converter 1007 to the signal processing section 1101. The horizontal scanning section 1005 includes, for example, a shift register, an address decoder, and the like.

The control section 1100 performs drive control for the vertical scanning section 1002, the AD conversion section 1003, the reference signal generation section 1004, the horizontal scanning section 1005, and the like in accordance with an imaging control signal supplied from a sensor control section 11. The control section 1100 generates various drive signals serving as references for operations of the vertical scanning section 1002, the AD conversion section 1003, the reference signal generation section 1004, and the horizontal scanning section 1005. The control section 1100 generates a control signal for causing the vertical scanning section 1002 to supply a signal to each pixel circuit 1000 via the pixel signal line 1006 on the basis of, for example, a vertical synchronization signal included in the imaging control signal or an external trigger signal, and a horizontal synchronization signal. The control section 1100 supplies the generated control signal to the vertical scanning section 1002.

Furthermore, the control section 1100 passes, for example, information indicating an analog gain included in an imaging control signal supplied from the CPU 1205 to the AD conversion section 1003. The AD conversion section 1003 controls a gain of a pixel signal input to each AD converter 1007 included in the AD conversion section 1003 via the vertical signal line VSL according to the information indicating the analog gain.

The vertical scanning section 1002 supplies various signals including a drive pulse to the pixel signal line 1006 of the selected pixel row of the pixel array section 1001 to each pixel circuit 1000 for each line on the basis of the control signal supplied from the control section 1100, and causes each pixel circuit 1000 to output a pixel signal to the vertical signal line VSL. The vertical scanning section 1002 includes, for example, a shift register, an address decoder, and the like. Furthermore, the vertical scanning section 1002 controls the exposure in each pixel circuit 1000 according to information indicating exposure supplied from the control section 1100.

The imaging section 1200 configured as described above is a column AD type CMOS image sensor in which the AD converters 1007 are arranged for each column.

### (1-1-2. Resolution of Captured Image)

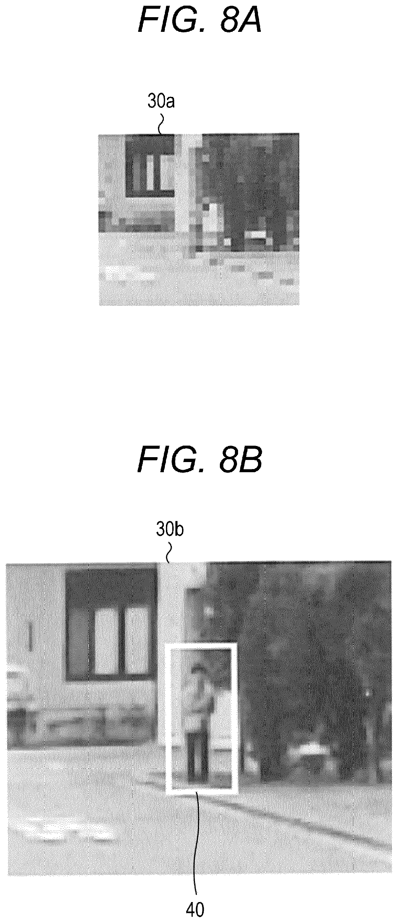

Next, resolution of an image used for the recognition processing will be described with reference to Figs. 8A and 8B. Figs. 8A and 8B are diagrams schematically depicting an example of captured images 30a and 30b in a case where the same imaging range is imaged using each of a low-resolution imaging device and a high-resolution imaging device. In the imaging range illustrated in Figs. 8A and 8B, a "person" is included in a central portion at a position away from the imaging device to some extent. A case where the "person" as a target object is recognized by the recognition processing will be considered.

In the example of low resolution of Fig. 8A, it is difficult to recognize the "person" included in the captured image 30a, and performance in recognizing the "person" by the recognition processing is extremely low. On the other hand, in the example of high resolution of Fig. 8B, the "person" included in the captured image 30b is easily recognized, the recognized "person" is obtained as a recognition result 40, and the recognition performance is higher than that of the example of low resolution of Fig. 8A.

Meanwhile, the recognition processing for a high-resolution image requires a larger calculation workload as compared with the recognition processing for a low-resolution image, and thus, the processing takes time. Therefore, it is difficult to enhance simultaneity between a recognition result and a captured image. On the other hand, since the recognition processing for a low-resolution image requires a small calculation workload, the processing can be performed in a short time, and the simultaneity with the captured image can be relatively easily enhanced.

As an example, a case where the recognition processing is performed on the basis of a captured image captured by an in-vehicle imaging device will be considered. In this case, since it is necessary to recognize a distant target object (for example, an oncoming vehicle traveling on an opposite lane in a direction opposite to a traveling direction of a host vehicle) with high simultaneity, it is conceivable to perform the recognition processing for a low-resolution image. However, as described with reference to Fig. 8A, in a case where a low-resolution captured image is used, it is difficult to recognize a distant target object. In addition, in a case where a high-resolution captured image is used, it is relatively easy to recognize a distant target object, but it is difficult to enhance the simultaneity with respect to the captured image, and there is a possibility that it is difficult to cope with an urgent situation.

In each embodiment of the present disclosure, in order to enable easy and high-speed recognition of a distant target object, recognition processing is performed on a sampling image including pixels obtained by thinning a high-resolution captured image by subsampling according to a predetermined rule. Sampling of pixels different from those of subsampling for the immediately previous captured image is performed for a captured image acquired in the next frame, and the recognition processing is performed on a sampling image including the sampled pixels.

In a second captured image acquired after a first captured image in time series, an operation of performing the recognition processing on a sampling image obtained by sampling pixels different from those of the first captured image is repeatedly performed in units of frames. This makes it possible to rapidly acquire a recognition result while using a high-resolution captured image. Furthermore, it is possible to acquire a more accurate recognition result by sequentially integrating a feature amount extracted at the time of performing the recognition processing with a feature amount extracted in the recognition processing for the next sampling image.

### [2. First Embodiment]

Next, a first embodiment of the present disclosure will be described.

### (2-1. Configuration According to First Embodiment)

### (2-1-1. Outline of Configuration Applicable to First Embodiment)

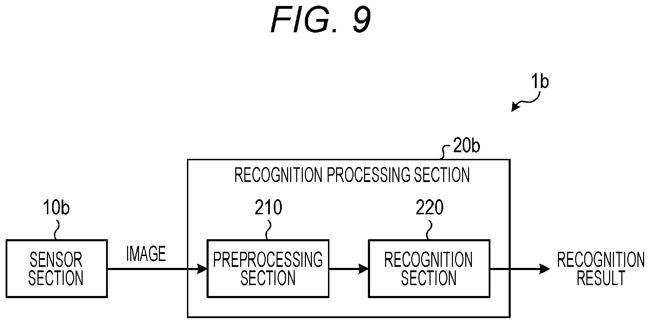

Fig. 9 is a block diagram depicting a configuration of an example of an information processing device according to the first embodiment of the present disclosure. In Fig. 9, an information processing device 1b includes a sensor section 10b and a recognition processing section 20b. Although not illustrated, the sensor section 10b includes imaging means (camera) and an imaging control section that controls the imaging means, similarly to the sensor section 10a described with reference to Fig. 1. It is assumed that the imaging means performs imaging with high resolution (for example, 1920 pixels × 1080 pixels). The sensor section 10b supplies image data of a captured image captured by the imaging means to the recognition processing section 20b.

The recognition processing section 20b includes a preprocessing section 210 and a recognition section 220. Image data supplied from the sensor section 10b to the recognition processing section 20b is input to the preprocessing section 210. The preprocessing section 210 performs subsampling on the input image data by thinning out pixels according to a predetermined rule. A sampling image obtained by performing subsampling on the image data is input to the recognition section 220.

The recognition section 220 performs the recognition processing on the image data by using the DNN, similarly to the recognition processing section 20a in Fig. 1. More specifically, the recognition processing section 20a includes a recognition model trained in advance by machine learning using predetermined training data, and performs recognition processing using the DNN on the image data supplied from the sensor section 10a on the basis of the recognition model. At this time, a sampling image obtained by subsampling in a manner similar to that for the preprocessing section 210 is used as the training data.

The recognition section 220 outputs a recognition result obtained by the recognition processing to, for example, the outside of the information processing device 1b.

### (2-1-2. Example of Recognition Processing According to First Embodiment)

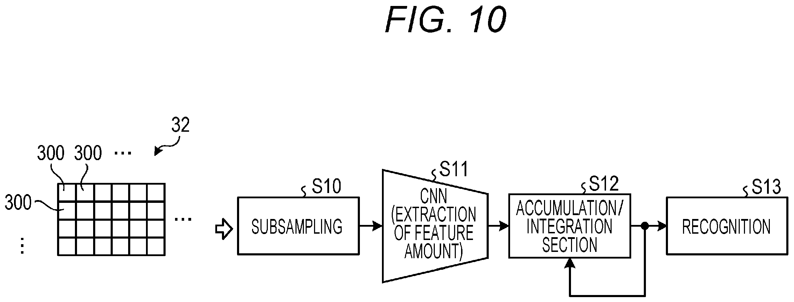

Fig. 10 is a schematic diagram for explaining recognition processing according to the first embodiment. Image data 32 schematically indicates image data of one frame based on a captured image captured by the sensor section 10b. The image data 32 includes a plurality of pixels 300 arranged in a matrix. The image data 32 is input to the preprocessing section 210 in the recognition processing section 20b. The preprocessing section 210 performs subsampling on the image data 32 by performing thinning according to a predetermined rule (Step S10).

A sampling image including sampling pixels obtained by subsampling is input to the recognition section 220. The recognition section 220 extracts a feature amount of the input sampling image by the DNN (Step S11). Here, the recognition section 220 extracts the feature amount by using the CNN as a type of DNN.

The recognition section 220 stores the feature amount extracted in Step S11 in an accumulation section (for example, the RAM 1207) (not illustrated). At this time, for example, in a case where the feature amount extracted in the immediately previous frame has already been stored in the accumulation section, the recognition section 220 recursively uses the feature amount stored in the memory to integrate the extracted feature amount with the feature amount stored in the memory (Step S12). The recognition section 220 stores, accumulates, and integrates the feature amounts extracted up to the immediately previous frame in the accumulation section. That is, the processing in Step S12 corresponds to processing using the RNN as a type of DNN.

The recognition section 220 performs the recognition processing on the basis of the feature amounts accumulated and integrated in Step S12 (Step S13) .

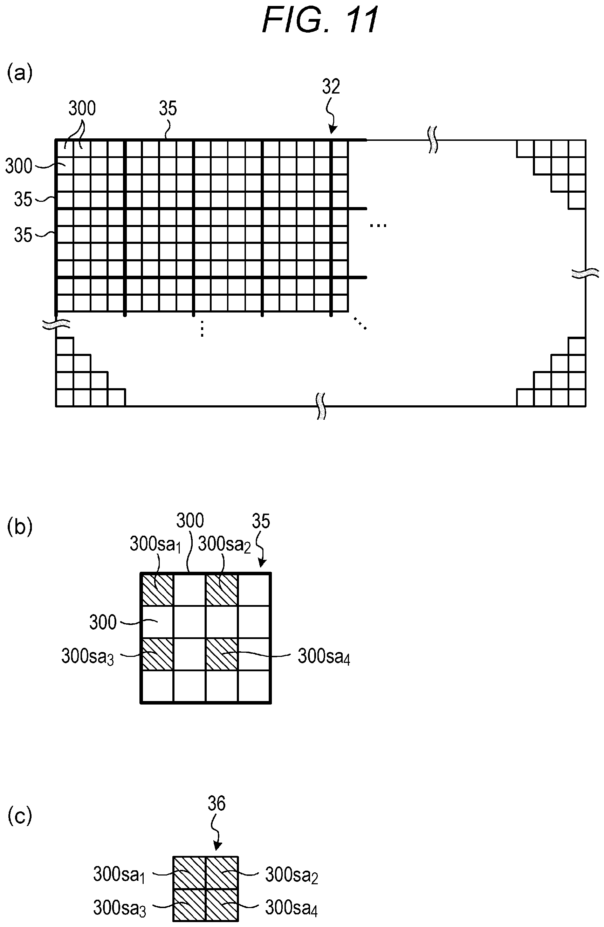

Here, the subsampling processing performed by the preprocessing section 210 in Step S10 will be described in more detail. Fig. 11 is a schematic diagram for explaining sampling processing according to the first embodiment. In Fig. 11, Section (a) schematically depicts an example of the image data 32. As described above, the image data 32 includes the plurality of pixels 300 arranged in a matrix. The preprocessing section 210 divides the image data 32 into divided regions 35 each including two or more pixels 300. In the example of Fig. 11, the divided region 35 is a region having a size of 4 pixels × 4 pixels, and includes 16 pixels 300.

The preprocessing section 210 sets a pixel position for selecting a sampling pixel by subsampling from the respective pixels 300 included in the divided region 35 for the divided region 35. Furthermore, the preprocessing section 210 sets different pixel positions for each frame as pixel positions for selecting sampling pixels.

Section (b) in Fig. 11 depicts an example of pixel positions set for the divided region 35 in a certain frame. In this example, in the divided region 35, the pixel positions are set so as to select every other pixel 300 in each of the row direction and the column direction, and pixels 300sa₁, 300sa₂, 300sa₃, and 300sa₄ at the set pixel positions are selected as sampling pixels. In this manner, the preprocessing section 210 performs subsampling in units of the divided regions 35.

The preprocessing section 210 generates, as a sampling image including sampling pixels, an image including the respective pixels 300sa₁ to 300sa₄ selected as sampling pixels in a certain frame. Section (c) in Fig. 11 depicts an example of a sampling image 36 generated from the respective pixels 300sa₁ to 300sa₄ selected as the sampling pixels in Section (b) in Fig. 11. The preprocessing section 210 inputs the sampling image 36 to the recognition section 220. The recognition section 220 performs the recognition processing on the sampling image 36.

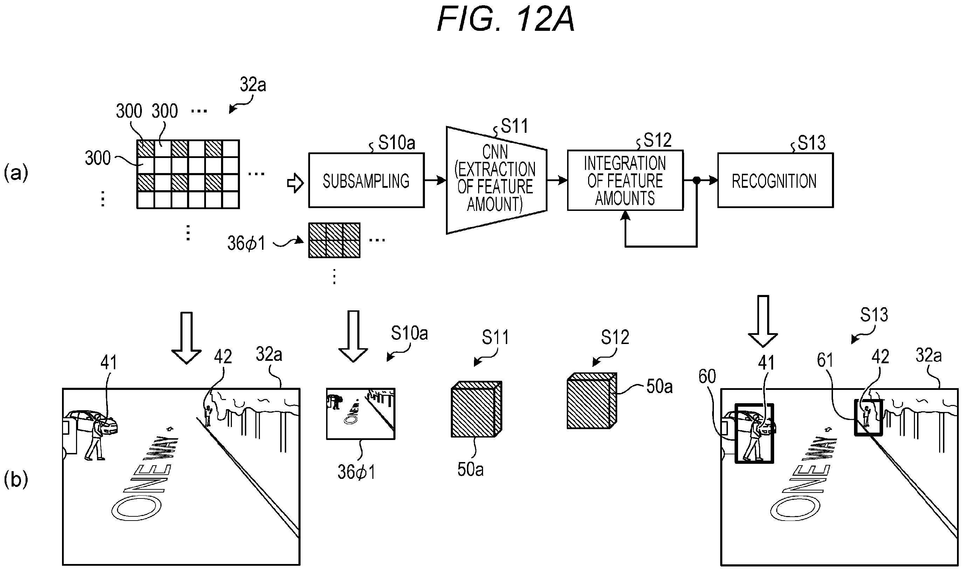

The recognition processing according to the first embodiment will be described more specifically with reference to Figs. 12A to 12E. As described above, the preprocessing section 210 sets different pixel positions for each frame as pixel positions for selecting sampling pixels. The recognition section 220 performs the recognition processing on the basis of a sampling image including the respective pixels 300 of the set pixel positions for each frame. Figs. 12A to 12E depict recognition processing for each piece of image data 32a to 32d and 32a' of frames #1 to #5 sequentially captured in time series by the sensor section 10b.

Note that, in each of Figs. 12A to 12E, images of the image data 32a to 32d and 32a' each include target objects 41 and 42 that are persons. The target object 41 is positioned at a relatively short distance (middle distance) with respect to the sensor section 10b. On the other hand, the target object 42 is positioned at a distance (long distance) longer than the middle distance with respect to the sensor section 10b, and the size of the target object 42 in the image is smaller than that of the target object 41.

In Section (a) of Fig. 12A, the preprocessing section 210 performs subsampling on each divided region 35 of the image data 32a of the frame #1, for example, with a pixel position at the upper-left corner as a base point. More specifically, the preprocessing section 210 performs subsampling on each divided region 35 of the image data 32a to select, as the pixel 300sa₁ to 300sa₄ which are sampling pixels, every other pixel 300 in the row and column directions with the pixel position at the upper-left corner as a base point (Step S10a).

As depicted in Section (b), the preprocessing section 210 generates a sampling image 36Φ1 of a first phase by using the respective pixels 300sa₁ to 300sa₄ obtained by subsampling. The generated sampling image 36Φ1 is input to the recognition section 220.

The recognition section 220 extracts a feature amount 50a of the input sampling image 36Φ1 by using the DNN (Step S11). The recognition section 220 stores and accumulates the feature amount 50a extracted in Step S11 in the accumulation section (Step S12). In a case where the feature amount is already accumulated in the accumulation section, the recognition section 220 can accumulate the feature amount 50a in the accumulation section and can integrate the feature amount 50a with the already accumulated feature amount. Section (b) in Fig. 12A depicts a state in which the first feature amount 50a is stored in the empty accumulation section as the processing of Step S12.

The recognition section 220 performs the recognition processing on the basis of the feature amount 50a accumulated in the accumulation section (Step S13). In the example of Fig. 12A, as shown as Step S13 in Section (b), the target object 41 positioned at a middle distance is recognized and obtained as a recognition result 60. On the other hand, the target object 42 positioned at a long distance is not recognized.

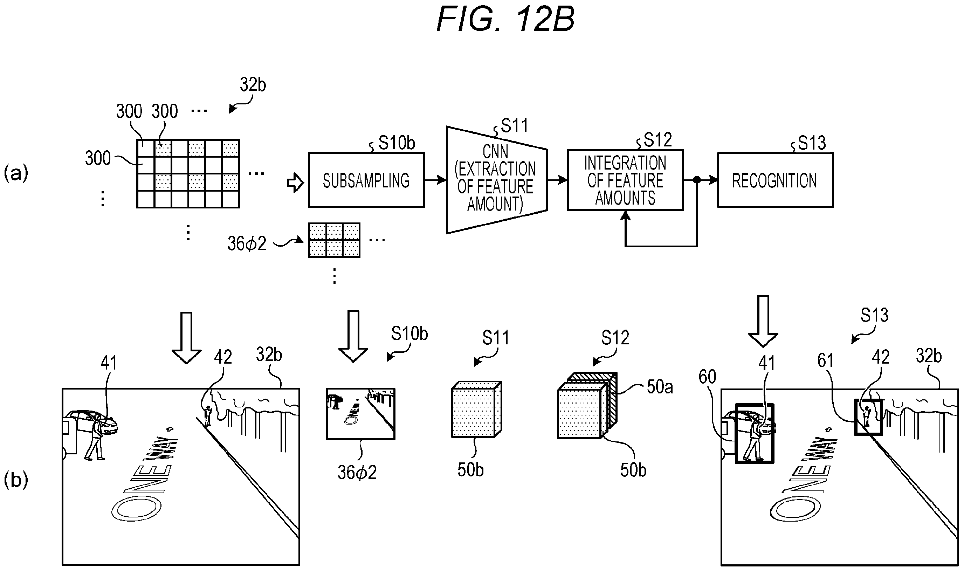

In Section (a) of Fig. 12B, the preprocessing section 210 performs, on each divided region 35 of the image data 32b of the frame #2, subsampling in which respective pixel positions shifted in the horizontal direction by one pixel with respect to the pixel positions set for each divided region 35 of the image data 32a of the frame #1 depicted in Fig. 12A are set as pixel positions of sampling pixels (Step SlOb). That is, each sampling pixel selected in Step SlOb is each pixel 300 at a pixel position adjacent to the pixel position of each sampling pixel selected in Step S10a in Fig. 12A on the right side in the drawing.

As depicted in Section (b), the preprocessing section 210 generates a sampling image 36Φ2 of a second phase by using the respective sampling pixels obtained by subsampling in Step SlOb. The generated sampling image 36Φ2 is input to the recognition section 220.

The recognition section 220 extracts a feature amount 50b of the input sampling image 36Φ2 by using the DNN (Step S11). The recognition section 220 stores and accumulates the feature amount 50b extracted in Step S11 in the accumulation section (Step S12). In this example, as shown as Step S12 in Section (b), the feature amount 50a extracted from the sampling image 36Φ1 of the first phase is already accumulated in the accumulation section. Therefore, the recognition section 220 accumulates the feature amount 50b in the accumulation section, and integrates the feature amount 50b with the accumulated feature amount 50a.

The recognition section 220 performs the recognition processing on the basis of a feature amount obtained by integrating the feature amount 50a and the feature amount 50b (Step S13). In the example of Fig. 12B, as shown as Step S13 in Section (b), the target object 41 positioned at a middle distance is recognized and obtained as the recognition result 60, but the target object 42 positioned at a long distance is not recognized at this time.

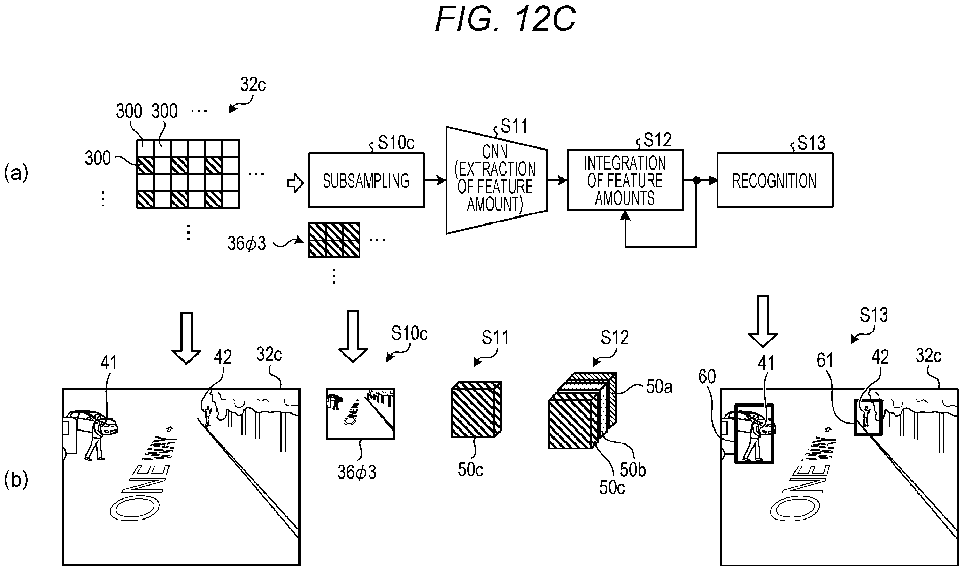

In Section (a) of Fig. 12C, the preprocessing section 210 performs, on each divided region 35 of the image data 32c of the frame #3, subsampling in which respective pixel positions shifted in the column direction by one pixel with respect to the pixel positions set for each divided region 35 of the image data 32a of the frame #1 depicted in Fig. 12A are set as pixel positions of respective sampling pixels (Step S10c). That is, each sampling pixel selected in Step S10c is each pixel 300 at a pixel position adjacent to the pixel position of each sampling image selected in Step S10a in Fig. 12A from below in the drawing.

As depicted in Section (b), the preprocessing section 210 generates a sampling image 36Φ3 of a third phase by using the respective samplings obtained by subsampling in Step S10c. The generated sampling image 36Φ3 is input to the recognition section 220.

The recognition section 220 extracts a feature amount 50c of the input sampling image 36Φ3 by using the DNN (Step S11). The recognition section 220 stores and accumulates the feature amount 50c extracted in Step S11 in the accumulation section (Step S12). In this example, as shown as Step S12 in Section (b), the feature amounts 50a and 50b extracted from the sampling images 36Φ1 and 36Φ2 of the first and second phases, respectively, are already accumulated in the accumulation section. Therefore, the recognition section 220 accumulates the feature amount 50c in the accumulation section, and integrates the feature amount 50c with the accumulated feature amounts 50a and 50b.

The recognition section 220 performs the recognition processing on the basis of a feature amount obtained by integrating the feature amount 50a and the feature amount 50b and the feature amount 50c (Step S13). In the example of Fig. 12C, as shown as Step S13 in Section (b), the target object 41 positioned at a middle distance is recognized and obtained as the recognition result 60, but the target object 42 positioned at a long distance is not recognized at this time.

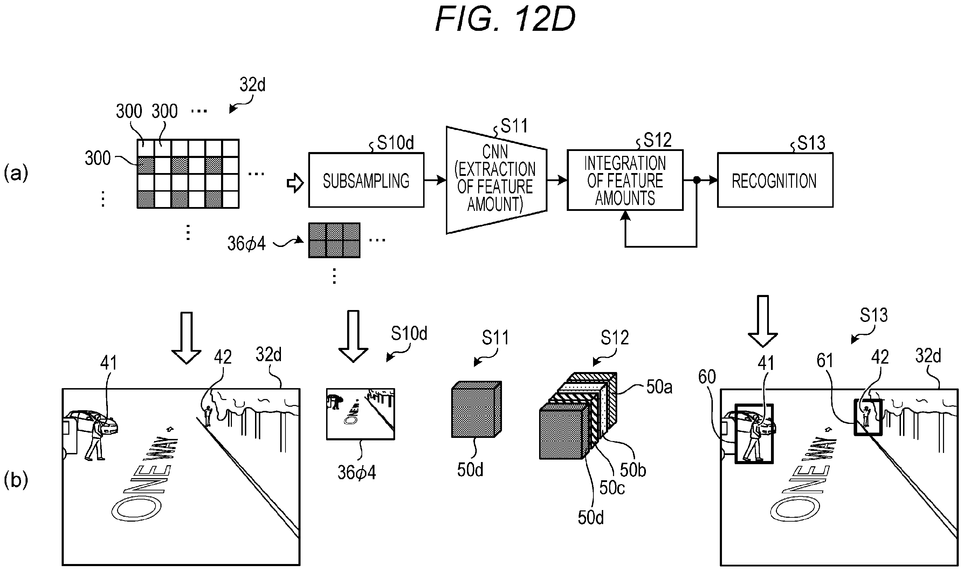

In Section (a) of Fig. 12D, the preprocessing section 210 performs, on each divided region 35 of the image data 32d of the frame #4, subsampling in which respective pixel positions shifted in the horizontal direction by one pixel with respect to the pixel positions set for each divided region 35 of the image data 32c of the frame #3 depicted in Fig. 12C are set as pixel positions of sampling pixels (Step S10d). That is, each sampling pixel selected in Step S10d is each pixel 300 at a pixel position adjacent to the pixel position of each sampling image selected in Step S10c in Fig. 12C on the right side in the drawing.

As depicted in Section (b), the preprocessing section 210 generates a sampling image 36Φ4 of a fourth phase by using the respective samplings obtained by subsampling in Step S10d. The generated sampling image 36Φ4 is input to the recognition section 220.

The recognition section 220 extracts a feature amount 50d of the input sampling image 36Φ4 by using the DNN (Step S11). The recognition section 220 stores and accumulates the feature amount 50d extracted in Step S11 in the accumulation section (Step S12). In this example, as shown as Step S12 in Section (b), the feature amounts 50a to 50c respectively extracted from the sampling images 36Φ1 to 36Φ3 of the first to third phases are already accumulated in the accumulation section. Therefore, the recognition section 220 accumulates the feature amount 50d in the accumulation section, and integrates the feature amount 50d with the accumulated feature amounts 50a to 50c.

The recognition section 220 performs the recognition processing on the basis of a feature amount obtained by integrating the feature amounts 50a to 50c and the feature amount 50d (Step S13). In the example of Fig. 12D, as shown as Step S13 in Section (b), the target object 41 positioned at a middle distance is recognized and obtained as the recognition result 60, and the target object 42 positioned at a long distance is further recognized and obtained as a recognition result 61.

By the processing of Figs. 12A to 12D, all the pixel positions of 16 pixels 300 included in each divided region 35 are selected as the pixel positions of the sampling pixels. In other words, the preprocessing section 210 selects the pixel positions of all the pixels 300 included in one frame as the pixel positions of the sampling pixels. A period from a time point at which a pixel position of a sampling pixel is first selected for each divided region 35 or one frame to a time point at which pixel positions of all the pixels 300 included in each divided region 35 or one frame are selected as the pixel positions of the sampling pixels is defined as one cycle. That is, the preprocessing section 210 rotates each pixel position of each divided region 35 in a constant cycle, and sets all pixel positions in the divided region 35 as pixel positions for acquiring sampling pixels.

Once subsampling and recognition processing for one cycle is completed, subsampling and recognition processing for the next cycle are started.

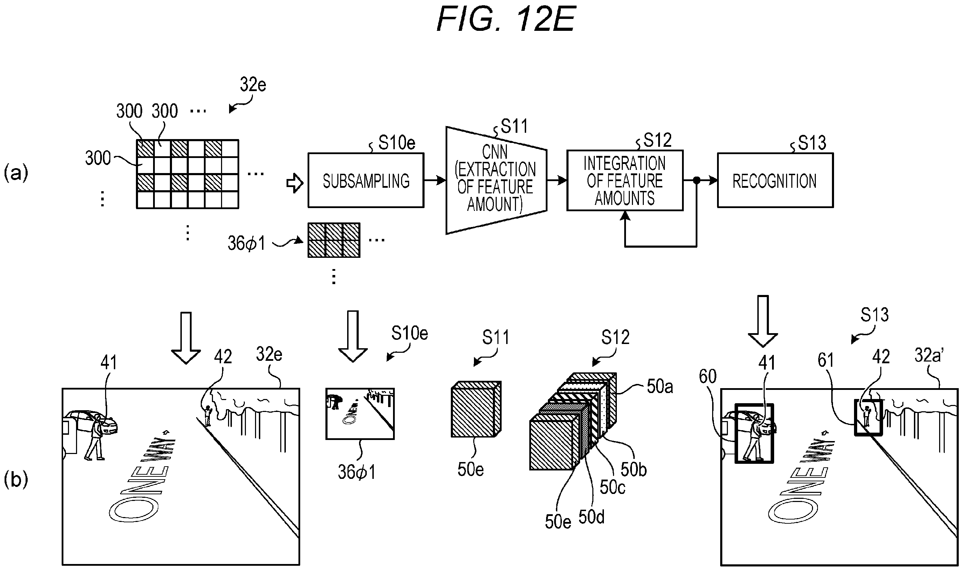

That is, in Section (a) of Fig. 12E, the preprocessing section 210 performs subsampling on each divided region 35 of the image data 32a' of a frame #1' with the pixel position at the upper-left corner as a base point, similarly to the example of Fig. 12A (Step S10a'). As depicted in Section (b), the preprocessing section 210 generates a sampling image 36Φ1' of the first phase by using the respective samplings obtained by subsampling in Step S10a'. The generated sampling image 36Φ1' is input to the recognition section 220.

The recognition section 220 extracts a feature amount 50a' of the input sampling image 36Φ1' by using the DNN (Step S11). The recognition section 220 stores and accumulates the feature amount 50a' extracted in Step S11 in the accumulation section (Step S12). In this example, as shown as Step S12 in Section (b), the feature amounts 50a to 50d respectively extracted from the sampling images 36Φ1 to 36Φ4 of the first to fourth phases in the immediately previous cycle are already accumulated in the accumulation section. Therefore, the recognition section 220 accumulates the feature amount 50a' in the accumulation section, and integrates the feature amount 50a' with the accumulated feature amounts 50a to 50d.

Alternatively, the recognition section 220 may reset the accumulation section for each cycle of selection of pixel positions of sampling pixels. The accumulation section can be reset, for example, by deleting the feature amounts 50a to 50d for one cycle accumulated in the accumulation section from the accumulation section.

Furthermore, the recognition section 220 can always accumulate a certain amount of feature amounts in the accumulation section. For example, the recognition section 220 accumulates the feature amounts for one cycle, that is, the feature amounts for four frames in the accumulation section. Here, in a case where the new feature amount 50a' is extracted, the recognition section 220 deletes, for example, the oldest feature amount 50d among the feature amounts 50a to 50d accumulated in the accumulation section, and stores and accumulates the new feature amount 50a' in the accumulation section. The recognition section 220 performs the recognition processing on the basis of an accumulation amount obtained by integrating the feature amounts 50a to 50c remaining after deleting the feature amount 50d and the new feature amount 50a'.

The recognition section 220 performs the recognition processing on the basis of the feature amount obtained by integrating the feature amounts 50a to 50d already accumulated in the accumulation section and the newly extracted feature amount 50a' (Step S13). In the example of Fig. 12E, as shown as Step S13 in Section (b), the target object 41 positioned at a middle distance is recognized and obtained as the recognition result 60, and the target object 42 positioned at a long distance is further recognized and obtained as the recognition result 61.

Here, the sampling image 36 is a thinned image obtained by thinning out pixels from the original image data 32. In the example of Fig. 11, the sampling image 36 is image data obtained by reducing the size of the image data 32 to 1/2 in each of the row direction and the column direction, and is a size-reduced image of which the number of pixels is 1/4 of the original image data 32. Therefore, the recognition section 220 can perform the recognition processing on the sampling image 36 at a higher speed as compared with the recognition processing using all the pixels 300 included in the original image data 32.

Furthermore, the pixel positions of the pixels 300 to be set as the sampling pixels in order to generate the sampling image 36 are selected so as to be shifted by one pixel for each frame in the divided region 35. Therefore, it is possible to obtain the sampling image 36 whose phase is shifted by one pixel for each frame. Furthermore, at this time, the pixel positions of all the pixels 300 included in the divided region 35 are selected as the pixel positions of the pixels 300 to be set as the sampling pixels.

In this way, the pixel positions of the pixels 300 for generating the sampling image 36 are selected, and the feature amounts calculated from the respective sampling images 36 are accumulated and integrated. As a result, the pixels 300 at all the pixel positions included in the image data 32 can be involved in the recognition processing, and for example, a distant target object can be easily recognized.

Note that, in the above description, the preprocessing section 210 sets pixel positions for selecting sampling pixels according to a predetermined rule, but the present disclosure is not limited to this example. For example, the preprocessing section 210 may set pixel positions for selecting sampling pixels according to an instruction from the outside of the recognition processing section 20b or the outside of the information processing device 1b including the recognition processing section 20b.

### (2-1-3. Subsampling Processing According to First Embodiment)

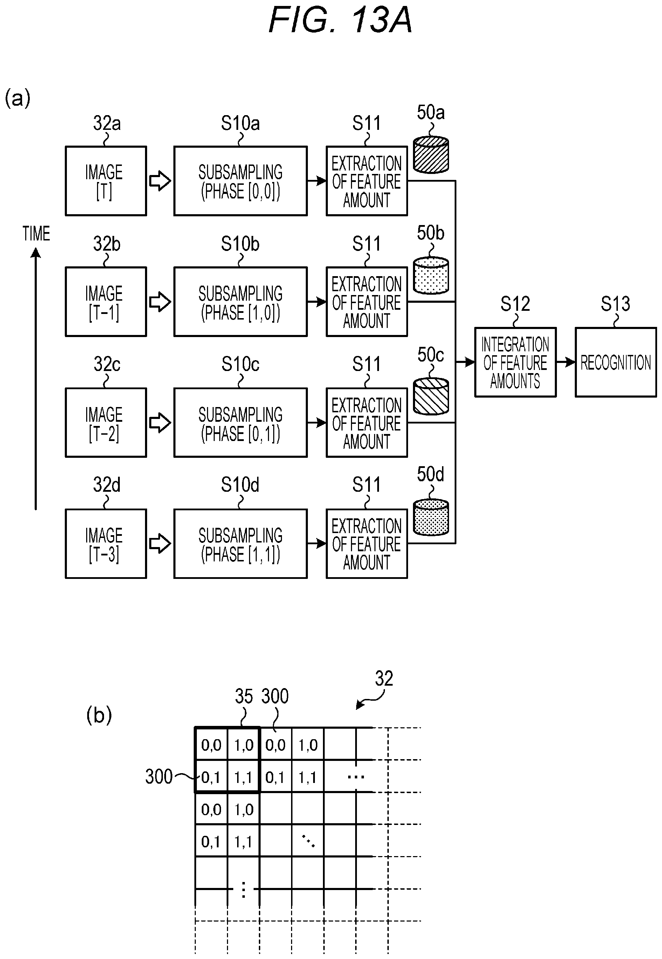

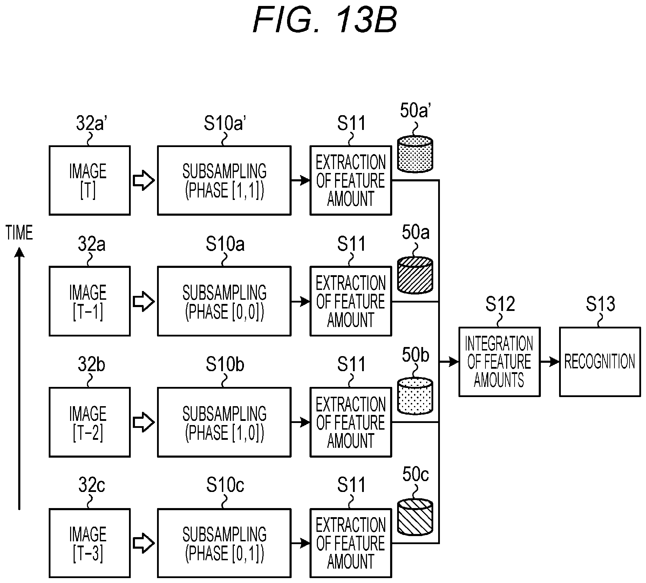

Next, the subsampling processing in the recognition processing according to the first embodiment will be described more specifically. Figs. 13A and 13B are schematic diagrams for explaining the subsampling processing in the recognition processing according to the first embodiment. Here, for explanation, as depicted in Section (b) of Fig. 13A, the divided region 35 is a region of 2 pixels × 2 pixels. In each divided region 35, an upper-left pixel position is set to origin coordinates [0,0], and upper-right, lower-left, and lower-right pixel positions are set to coordinates [1,0], [0,1], and [1,1], respectively. Furthermore, sampling of the pixels 300 is performed in the order of coordinates [1,1], [1,0], [0,1], and [0,0] with the lower-right pixel position [1,1] as a base point in each divided region 35.

In Section (a) of Fig. 13A, time advances from bottom to top in the drawing. In the example of Fig. 13A, the image data 32a is an image [T] at the most recent time T, the image data 32b is an image [T-1] of the image data 32 at time T-1 that is older than the image [T] by one frame, the image data 32c is an image [T-2] of the image data 32 at time T-2 that is older than the image [T-1] by one frame, and the image data 32d is an image [T-3] of the image data 32 at time T-3 that is older than the image [T-2] by one frame, corresponding to Figs. 12A to 12E described above.

The preprocessing section 210 selects, as a sampling pixel, the pixel 300 having the coordinates [1,1] in each divided region 35 for the image data 32a at time T-3 (Step S10a), and the recognition section 220 extracts the feature amount of the sampling image 36Φ1 including the selected sampling pixel (Step S11). The recognition section 220 integrates the feature amount 50a extracted from the sampling image 36Φ1 with, for example, a feature amount extracted in the previous predetermined period (Step S12), and performs the recognition processing on the basis of the integrated feature amount (Step S13).

Here, for example, the sampling image 36Φ1 obtained by uniformly thinning the image data 32a can be obtained by the subsampling processing (Step S10a) for each divided region 35 of the image data 32a described above. The recognition processing for the entire image data 32a can be performed using the feature amount 50a extracted from the sampling image 36Φ1 in Step S11. The recognition processing for the image data 32 can be completed by the recognition processing for the sampling image including the sampling pixel selected from the image data 32 by the subsampling.

A series of processing of generating a sampling image from the image data 32, extracting a feature amount from the generated sampling image, and performing the recognition processing on the basis of the extracted feature amount is referred to as one-unit processing. In the example of Fig. 13A, for example, the subsampling processing of Step S10a, the feature amount extraction processing of Step S11 for the sampling image 36Φ1 generated by the subsampling processing, the feature amount integration processing of Step S12, and the recognition processing of Step S13 are included in the one-unit processing. The recognition section 220 can perform the recognition processing on the thinned image data 32 for each one-unit processing (Step S13).

Thereafter, similarly, the recognition processing section 20b performs the above-described one-unit processing for each of the pieces of image data 32b, 32c, and 32d sequentially updated in the frame cycle, and performs the recognition processing. At this time, the feature amount integration processing of Step S12 and the recognition processing of Step S13 can be common to each unit processing.

By performing the one-unit processing on each of the pieces of image data 32a to 32d described above, the selection of a sampling pixel for each pixel position included in each divided region 35 is completed once. Fig. 13B depicts the next one-unit processing after the selection of a sampling pixel for each pixel position included in each divided region 35 is completed once. That is, once the one-unit processing for each of the pieces of image data 32a, 32b, 32c, and 32d is completed once, the one-unit processing for the image data 32a' of the next frame input to the recognition processing section 20b is performed.

In this example, the feature amount 50d extracted on the basis of the oldest image data 32d is discarded, and the feature amount 50a' is extracted from the new image data 32a'. That is, the preprocessing section 210 selects each pixel 300 having the coordinates [1,1] in each divided region 35 of the image data 32a' as a sampling pixel, and generates the sampling image 36Φ1. The recognition section 220 extracts the feature amount 50a' from the sampling image 36Φ1 selected from the image data 32a'. The recognition section 220 integrates the feature amount 50a' and the feature amounts 50a, 50b, and 50c extracted so far, and performs the recognition processing on the basis of the integrated feature amount. In this case, it is sufficient if the recognition section 220 performs the feature amount extraction processing only on the newly acquired image data 32a'.

As described above, the recognition processing according to the first embodiment is performed by performing the one-unit processing in the same processing system in the recognition processing section 20b. More specifically, the recognition processing section 20b repeats a processing system including the subsampling processing and the feature amount extraction processing for the image data 32 for each frame as the one-unit processing, integrates the feature amounts extracted by the repetition, and performs the recognition processing.

Furthermore, the recognition processing section 20b performs the subsampling processing for the pixel positions of all the pixels 300 included in the image data 32 while periodically shifting the pixel position for selecting the sampling pixel. In addition, the recognition processing section 20b performs the recognition processing by integrating the feature amounts as the intermediate data extracted from the sampling image including the sampling pixels selected from the image data 32 of each frame in Step S11.

Since the recognition processing according to the first embodiment configured as described above is a processing system that can be completed by one-unit processing, a recognition result can be obtained more quickly. In addition, since sampling pixels are selected from the entire image data 32 in one-unit processing, a wide range of recognition results can be confirmed by one-unit processing. Furthermore, since pieces of intermediate data (feature amounts) based on a plurality of pieces of image data 32 are integrated, it is possible to acquire a more detailed recognition result that may be acquired by performing the processing multiple times.

That is, by using the information processing device 1b according to the first embodiment, it is possible to achieve both improvement of the simultaneity of a recognition result and acquisition of a recognition result based on a high resolution of a captured image, and it is possible to improve the characteristics of the recognition processing using a captured image.

### (2-1-4. More Specific Configuration Example According to First Embodiment)

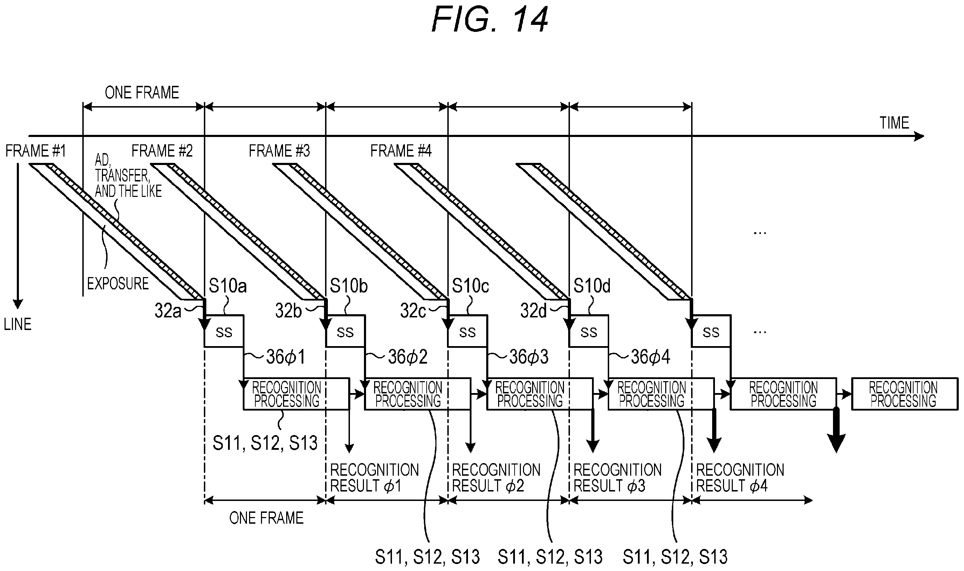

Next, a more specific configuration example for implementing the recognition processing according to the first embodiment will be described. Fig. 14 is a timing chart of an example illustrating control of reading and the recognition processing according to the first embodiment. In Fig. 14, an imaging cycle is a frame cycle, and is, for example, 50 [ms] (20 [frame per second (fps)]). Furthermore, here, reading from the pixel circuits 1000 arranged in a matrix array in the pixel array section 1001 is performed line by line by a rolling shutter method. Here, in Fig. 14, time advances to the right, and line positions are arranged from top to bottom.

For example, in imaging processing for the frame #1, exposure is performed for a predetermined time in each line, and after the exposure ends, a pixel signal is transferred from each pixel circuit 1000 to the AD conversion section 1003 via the vertical signal line VSL, and each AD converter 1007 in the AD conversion section 1003 converts the transferred analog pixel signal into pixel data that is a digital signal. Once the conversion from a pixel signal into pixel data is performed for all the lines, the image data 32a based on the pixel data of the frame #1 is input to the preprocessing section 210. The preprocessing section 210 performs the subsampling processing (indicated as "SS" in the drawing) as described above on the input image data 32a, acquires the pixel 300 from the pixel position of the sampling pixel selected for each divided region 35, and generates the sampling image 36Φ1 (Step S10a).

The preprocessing section 210 passes the sampling image 36Φ1 to the recognition section 220. At this time, the sampling image 36Φ1 passed from the preprocessing section 210 to the recognition section 220 is an image which is thinned out by the subsampling processing and of which the number of pixels is reduced as compared with the image data 32a. The recognition section 220 performs the recognition processing on the sampling image 36Φ1. Here, the feature extraction processing (Step S11), the feature amount integration processing (Step S12), and the recognition processing (Step S13) are illustrated as being included in the recognition processing. The processings of Steps S11 to S13 are performed, for example, within a period of one frame. A recognition result Φ1 based on the sampling image 36Φ1 is output to the outside of the recognition processing section 20b.

In parallel with the above-described processing for the frame #1, processing for the next frame #2 is performed. The image data 32b including the pixel data of the frame #2 is input to the preprocessing section 210. The preprocessing section 210 performs the subsampling processing on the input image data 32b at a phase different from that of the image data 32a to generate the sampling image 36Φ2.

The preprocessing section 210 passes, to the recognition section 220, the sampling image 36Φ2 of which the number of pixels is reduced as compared with the image data 32b by the subsampling. The recognition section 220 performs the recognition processing on the sampling image 36Φ2 within a period of one frame.

At this time, the recognition section 220 integrates the feature amount 50b extracted from the sampling image 36Φ2 and the feature amount 50a extracted by the feature amount extraction processing for the image data 32a by the feature amount integration processing in Step S12. The recognition section 220 performs the recognition processing by using the integrated feature amount. A recognition result Φ2 obtained by the recognition processing is output to the outside of the recognition processing section 20b.

Thereafter, similarly, the preprocessing section 210 performs the subsampling processing on the next frame #3 in parallel with the processing for the image data 32b of the immediately previous frame #2, and the recognition section 220 extracts the feature amount 50c from the sampling image 36Φ3 generated by the subsampling processing. The recognition section 220 further integrates the feature amount obtained by integrating the feature amounts 50a and 50b extracted from the image data 32a and 32b, respectively, and the extracted feature amount 50c, and performs the recognition processing on the basis of the integrated feature amount. The recognition section 220 outputs a recognition result Φ3 obtained by the recognition processing to the outside.

Similarly, the recognition processing section 20b performs the subsampling processing and the feature amount extraction processing on the next frame #4 in parallel with the processing for the image data 32c of the immediately previous frame #3, and acquires the feature amount 50d. The recognition processing section 20b further integrates the feature amount obtained by integrating the feature amounts 50a to 50c extracted from the image data 32a to 32c, respectively, and the extracted feature amount 50d by the recognition section 220, and performs the recognition processing on the basis of the integrated feature amount. The recognition section 220 outputs a recognition result Φ4 obtained by the recognition processing to the outside.

Here, in Fig. 14, the thicknesses of vertical arrows, that is, arrows indicating the respective pieces of image data 32a to 32d, the respective recognition processings from Steps S10a to S10d, and the outputs of the respective recognition results Φ1 to Φ4 by the respective recognition processings, each schematically indicate an information amount.

More specifically, in the example of Fig. 14, the data amount of each of the sampling images 36Φ1 to 36Φ4 subjected to the subsampling by the processings of Steps S10a to S10d and passed from the preprocessing section 210 to the recognition section 220 is smaller than the data amount of each of the pieces of image data 32a to 32d input to the preprocessing section 210 for the processings of Steps S10a to S10d.

On the other hand, the information amount of each of the recognition results Φ1 to Φ4 obtained by the recognition processing based on each of the pieces of image data 32a to 32d increases every time the recognition processing is repeated, which indicates that the obtained recognition result becomes more detailed every time the recognition processing is performed. This is because the feature amount obtained by integrating the feature amount acquired while shifting the phase of the sampling image immediately before and the feature amount newly acquired by further shifting the phase with respect to the sampling image so far is used for each recognition processing.

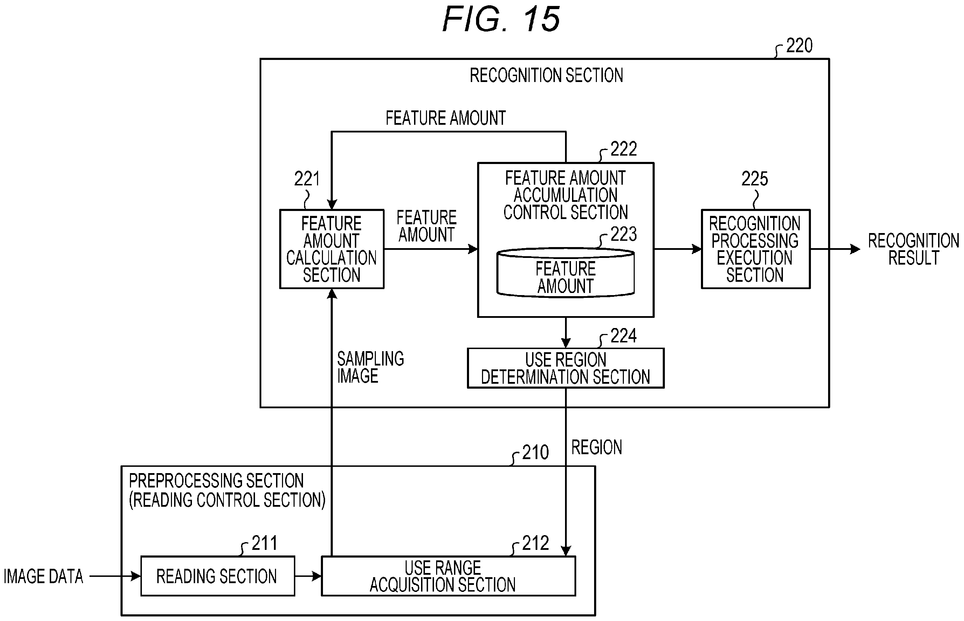

Next, more detailed functions of the preprocessing section 210 and the recognition section 220 according to the first embodiment will be described. Fig. 15 is a functional block diagram of an example for explaining more detailed functions of the preprocessing section 210 and the recognition section 220 according to the first embodiment. In Fig. 15, the preprocessing section 210 includes a reading section 211 and a use region acquisition section 212. Furthermore, the recognition section 220 includes a feature amount calculation section 221, a feature amount accumulation control section 222, a feature amount accumulation section 223, and a use region determination section 224.

The reading section 211, the use region acquisition section 212, the feature amount calculation section 221, the feature amount accumulation control section 222, the feature amount accumulation section 223, and the use region determination section 224 are implemented by, for example, an information processing program operating on the CPU 1205. This information processing program can be stored in the ROM 1206 in advance. Alternatively, the information processing program can also be supplied from the outside via the interface 1204 and written in the ROM 1206.

Furthermore, the reading section 211, the use region acquisition section 212, the feature amount calculation section 221, the feature amount accumulation control section 222, the feature amount accumulation section 223, and the use region determination section 224 may be implemented by the CPU 1205 and the DSP 1203 operating in accordance with the information processing program. Furthermore, some or all of the reading section 211, the use region acquisition section 212, the feature amount calculation section 221, the feature amount accumulation control section 222, the feature amount accumulation section 223, and the use region determination section 224 may be implemented by hardware circuits that operate in cooperation with each other.

In the preprocessing section 210, the reading section 211 reads the image data 32 from the sensor section 10b. The reading section 211 passes the image data 32 read from the sensor section 10b to the use region acquisition section 212. The use region acquisition section 212 performs the subsampling processing on the image data 32 passed from the reading section 211 according to information indicating a use region passed from the use region determination section 224 described later, and extracts sampling pixels. The use region acquisition section 212 generates a sampling image 36Φx of a phase Φx from the extracted sampling pixels.

The use region acquisition section 212 passes the generated sampling image 36Φx to the recognition section 220. The passed sampling image 36Φx is passed from the recognition section 220 to the feature amount calculation section 221.

In the recognition section 220, the feature amount calculation section 221 calculates a feature amount on the basis of the passed sampling image 36Φx. That is, the feature amount calculation section 221 functions as a calculation section that calculates the feature amount of the sampling image 36Φx including the sampling pixels. Alternatively, the feature amount calculation section 221 may acquire information for setting exposure and an analog gain from the reading section 211, for example, and calculate the feature amount by further using the acquired information. The feature amount calculation section 221 passes the calculated feature amount to the feature amount accumulation control section 222.

The feature amount accumulation control section 222 accumulates the feature amount transferred from the feature amount calculation section 221 in the feature amount accumulation section 223. At this time, the feature amount accumulation control section 222 can integrate the past feature amount already accumulated in the feature amount accumulation section 223 and the feature amount passed from the feature amount calculation section 221 to generate an integrated feature amount. Furthermore, in a case where the feature amount accumulation section 223 is initialized and there is no feature amount, for example, the feature amount accumulation control section 222 accumulates, as the first feature amount, the feature amount transferred from the feature amount calculation section 221 in the feature amount accumulation section 223.

In addition, the feature amount accumulation control section 222 can delete a feature amount satisfying a predetermined condition from among the feature amounts accumulated in the feature amount accumulation section 223. The feature amount accumulation control section 222 can apply time information, an external instruction, an exposure condition, and the like as conditions for deleting the feature amount.

For example, in a case where the time information is applied as the condition for deleting the feature amount, the feature amount accumulation control section 222 can delete a feature amount based on a sampling image obtained by the first subsampling in the subsampling of the immediately previous cycle among the feature amounts accumulated in the feature amount accumulation section 223.

Furthermore, in a case where the imaging section 1200 has an automatic exposure setting function, the feature amount accumulation control section 222 can determine that the scene of the captured image has been changed in a case where a predetermined level or more of change in exposure is detected, and can delete the feature amounts accumulated in the feature amount accumulation section 223 so far. Furthermore, the feature amount accumulation control section 222 can delete all the feature amounts accumulated in the feature amount accumulation section 223 and initialize the feature amount accumulation section 223, for example, according to an instruction from the outside.

Note that the condition for deleting the feature amount accumulated in the feature amount accumulation section 223 by the feature amount accumulation control section 222 is not limited to each condition described above.

The feature amount accumulation control section 222 passes the feature amount accumulated in the feature amount accumulation section 223 or the feature amount obtained by integrating the feature amount accumulated in the feature amount accumulation section 223 and the feature amount passed from the feature amount calculation section 221 to the use region determination section 224 and a recognition processing execution section 225. The recognition processing execution section 225 performs the recognition processing on the basis of the feature amount passed from the feature amount accumulation control section 222. The recognition processing execution section 225 performs object detection, person detection, face detection, and the like by the recognition processing. The recognition processing execution section 225 outputs the recognition result obtained by the recognition processing to the outside of the recognition processing section 20b.

Here, in a case where a predetermined condition is satisfied, the feature amount accumulation control section 222 can pass the feature amount accumulated in the feature amount accumulation section 223 to the use region determination section 224 and the recognition processing execution section 225. For example, the feature amount accumulation control section 222 can apply time information, an external instruction, an exposure condition, and the like as conditions for passing the feature amount to the use region determination section 224 and the recognition processing execution section 225.

For example, in a case where the time information is applied as the condition for accumulating the feature amount, the feature amount accumulation control section 222 can integrate the feature amount newly passed to the feature amount accumulation control section 222 and the feature amount already accumulated in the feature amount accumulation section 223, and passes the integrated feature amount to the use region determination section 224 and the recognition processing execution section 225.

Furthermore, in a case where the imaging section 1200 has the automatic exposure setting function, the feature amount accumulation control section 222 can determine that the scene of the captured image has been changed in a case where a predetermined level or more of change in exposure is detected, and can pass only the feature amount newly passed to the feature amount accumulation control section 222 to the use region determination section 224 and the recognition processing execution section 225. At this time, as described above, the feature amount accumulation control section 222 can delete the feature amounts already accumulated in the feature amount accumulation section 223. Furthermore, for example, according to an instruction from the outside, the feature amount accumulation control section 222 can select a feature amount according to the instruction from the outside from among a newly passed feature amount and one or more feature amounts already accumulated in the feature amount accumulation section 223 and pass the selected feature amount to the use region determination section 224 and the recognition processing execution section 225.

Note that the conditions for the feature amount accumulation control section 222 to pass the feature amount to the use region determination section 224 and the recognition processing execution section 225 are not limited to the above-described conditions.

The use region determination section 224 determines a pixel position for reading pixel data as a sampling pixel from the image data 32 read by the reading section 211. The use region determination section 224 determines the pixel position according to, for example, a predetermined pattern and timing. Alternatively, the use region determination section 224 can also decide a pixel position on the basis of the feature amount passed from the feature amount accumulation control section 222. The use region determination section 224 passes information indicating the determined pixel position to the preprocessing section 210 as use region information, and the use region information is input to the use region acquisition section 212.

As described above, the use region acquisition section 212 performs the subsampling processing on the image data 32 passed from the reading section 211 according to the information indicating the use region passed from the use region determination section 224. That is, the use region acquisition section 212 or the preprocessing section 210, and the use region determination section 224 described above function as a setting section that sets a sampling pixel for the divided region 35 obtained by dividing the image data 32, that is, imaging information including pixels.

### (2-2. Effects According to First Embodiment)

Next, effects of the recognition processing according to the first embodiment will be described in comparison with existing technologies.

### (2-2-1. Outline of Existing Technologies)

Here, a case where an information processing device that performs the recognition processing based on a captured image is used for in-vehicle use will be considered. In this case, there is a demand for recognition of a distant target, and a resolution of 1920 pixels × 1080 pixels or more (for example, 4096 pixels × 2160 pixels with 4K resolution) may be required in consideration of the angle of view of a camera, an installation position, a recognition target, the moving speed of a vehicle, and the like. Meanwhile, a processing speed of a recognizer that performs the recognition processing is limited, and it is thus difficult to process a high-resolution image as it is. In a case where the resolution is, for example, several 100 pixels × several 100 pixels, it is conceivable that the recognition processing can be performed with high simultaneity with respect to the captured image, but in this case, as described with reference to Figs. 8A and 8B, there is a possibility that it becomes difficult to recognize a distant target.

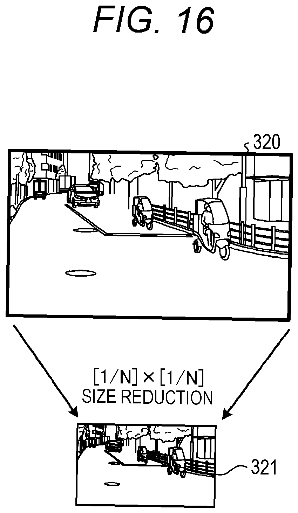

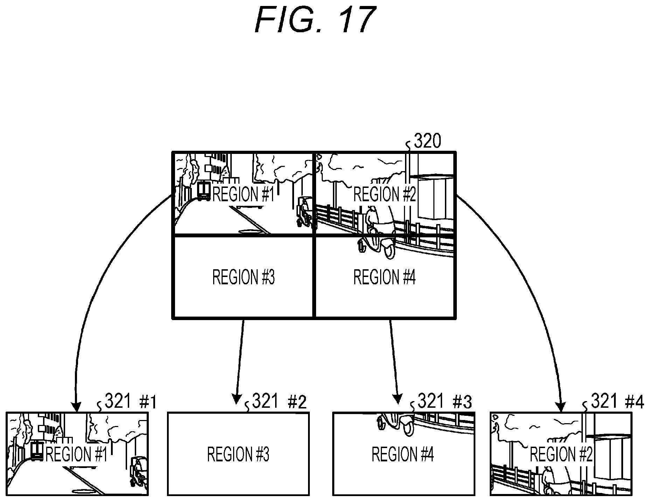

Therefore, conventionally, a method of reducing a calculation workload for the recognition processing has been proposed. An example of a method of reducing the calculation workload of the recognition processing according to the related art will be described with reference to Figs. 16 and 17.

Fig. 16 is a schematic diagram for explaining a first example of the method of reducing the calculation workload according to an existing technology. The first example is an example in which a size-reduced image 321 is generated by reducing the sizes of an original image 320, which is a captured image, in the row and column directions to 1/N (N is an integer of 2 or more), for example. The original image 320 can be reduced in size by, for example, thinning out pixels at predetermined intervals in each of the row direction and the column direction. For example, in a case of thinning out every other pixel, N = 2, and the number of pixels of the size-reduced image 321 is 1/N × 1/N = 1/N² = 1/4 of the original image 320. In the simple comparison, a calculation workload related to the recognition processing for the size-reduced image 321 is 1/N² of a calculation workload related to the recognition processing for the original image 320. Meanwhile, in the first example, the resolution of the size-reduced image 321 is 1/N² of the resolution of the original image 320. Hereinafter, this first example is referred to as "1/N × 1/N size reduction".

Fig. 17 is a schematic diagram for explaining a second example of the method of reducing the calculation workload according to an existing technology. The second example is an example in which the original image 320 is cropped for each divided region obtained by dividing the original image 320 into N regions. In the example of Fig. 17, N = 2, and the cropping is performed according to each divided region obtained by dividing the original image 320 into four regions. Each of cropped images 322#1, 322#2, 322#3, and 322#4 has a size of 1/N², that is, 1/4 of the original image 320. Each of cropped images 303#1 to 303#4 has the same resolution as the resolution of the original image 320, and a calculation workload related to the recognition processing is 1/N² of that for the original image 320 in a simple comparison. Hereinafter, this second example is referred to as "1/N × 1/N cropping".

### (2-2-2. Comparison of Technology According to Present Disclosure with Existing Technologies)

### (2-2-2-1. Comparison in Recognition Result)

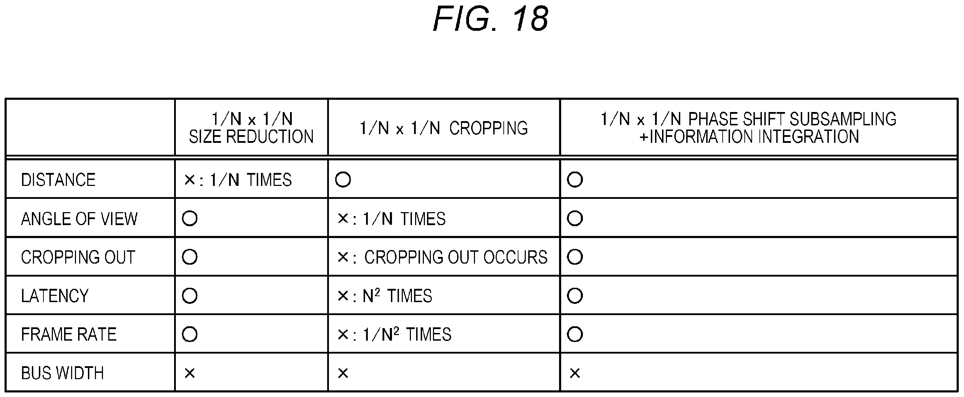

Next, the technology according to an embodiment of the present disclosure is compared with the existing technologies, and effects of the technology according to an embodiment of the present disclosure will be described. Fig. 18 is a schematic diagram depicting an example of evaluation of the "1/N × 1/N size reduction", the "1/N × 1/N cropping", and the recognition processing according to the first embodiment described above. In Fig. 18, respective columns represent "1/N × 1/N size reduction", "1/N × 1/N cropping", and the recognition processing (1/N × 1/N phase shift subsampling + information integration) according to the first embodiment from the left. Furthermore, in Fig. 18, "o (circle)" indicates an evaluation result considered to be favorable, and "× (cross)" indicates an evaluation result considered to be unfavorable.

Furthermore, in Fig. 18, respective rows represent "distance", "angle of view", "cropping out", "latency", "frame rate", and "bus width" from the top. Among these, the "distance" indicates a recognizable distance. The "angle of view" indicates an angle of view with respect to an image as a recognition processing target. The "cropping out" indicates whether or not a target object included in an image as a recognition target is cut at an end of the image. The "latency" indicates a latency of a recognition result for a captured image (original image 320). The "frame rate" indicates a recognition result update cycle. Furthermore, the "bus width" indicates a bus width for the imaging section 1200 to output a captured image. Here, the "bus width" is "× (cross mark)" in a case where the bus width is not reduced for the recognition processing using the original image 320.

"1/N × 1/N size reduction" will be described. The "distance" is "×". This is because the number of pixels of "1/N × 1/N size reduction" is 1/N in each of the row direction and the column direction. On the other hand, the "view angle" and the "cropping out" are "o" because the entire original image 320 is thinned out and used. Furthermore, the "latency" and the "frame rate" are "∘" because the number of pixels is reduced as compared with the original image 320 and high-speed processing is possible.

The method "1/N × 1/N phase shift subsampling + information integration" according to the first embodiment will be described. The "distance" is equivalent to that of the original image 320 in a case where the recognition processing for one cycle of the phase is performed, and is "o". The "angle of view" and the "cropping out" are "o" because the entire original image 320 is used. Furthermore, the "latency" and the "frame rate" are "o" because the recognition result can be output in each phase.

"1/N × 1/N cropping" will be described. The "distance" is "o" because the resolution of each of cropped images #1 to #4 is equivalent to that of the original image 320. On the other hand, since N² frames are required to view the entire angle of view of the original image 320, the "angle of view" is 1/N times per frame, which is "×". As for the "cropping out", since each of the cropped images #1 to #4 is obtained by dividing the original image 320, there is a possibility that cropping out may occur at a division position, and thus, the "cropping out" is "×". As for the "latency", similarly to the "angle of view", N² frames are required to view the entire angle of view of the original image 320, and thus, the "latency" is "×". Furthermore, the "frame rate" is 1/N² times because N² frames are required to view the entire angle of view of the original image 320, and thus, the "frame rate" is "×".

Note that the "bus width" is "×" in any case since the captured image is output from the imaging section 1200 with the resolution of the original image 320.

In the evaluation example depicted in Fig. 18, "1/N × 1/N size reduction" which is a method in which a preferable evaluation result is obtained in the existing technology is compared with "1/N × 1/N phase shift subsampling + information integration" which is the method according to the first embodiment.

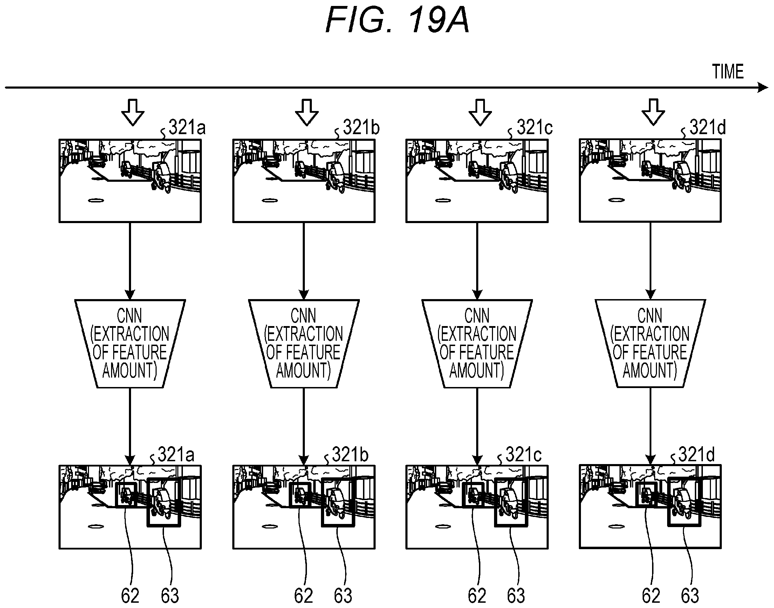

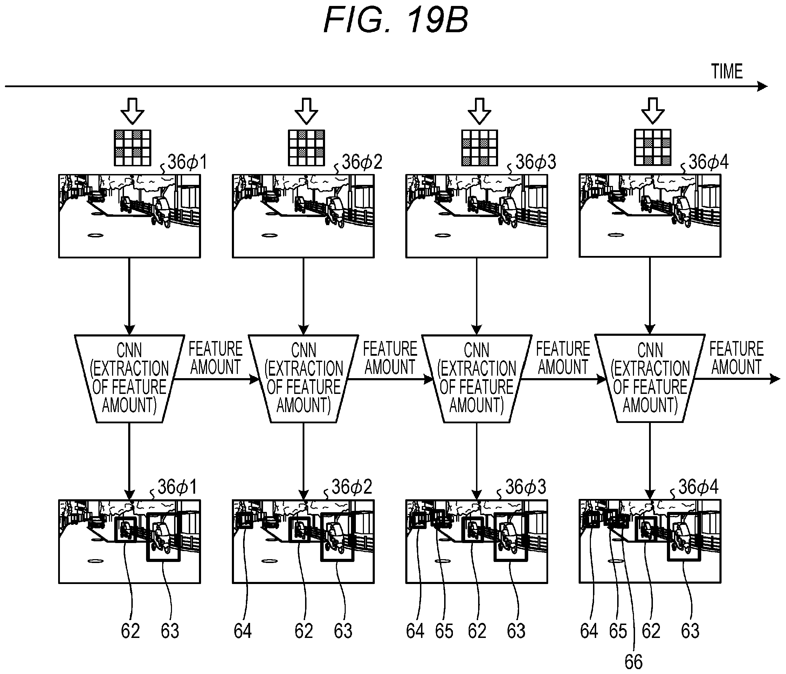

Fig. 19A is a diagram schematically depicting recognition processing using "1/N × 1/N size reduction" of the existing technology. Further, Fig. 19B is a diagram schematically depicting recognition processing using "1/N × 1/N phase shift subsampling + information integration" according to the first embodiment. Note that, in Fig. 19A and Fig. 19B to be described later, it is assumed that time advances from left to right in the drawing. Furthermore, a captured image (original images 320) that is a recognition processing target is common in Figs. 19A and 19B.

Here, in "1/N × 1/N size reduction" depicted in Fig. 19A, size-reduced images 321a, 321b, 321c, and 321d for which 1/2 × 1/2 = 1/4 are generated by thinning the original image 320 (not illustrated) by one pixel in each of the row direction and the column direction. Furthermore, similarly, in "1/N × 1/N phase shift subsampling + information integration" depicted in Fig. 19B, subsampling of thinning out one pixel in each of the row direction and the column direction is performed on each divided region 35 of the original image 320.

Therefore, the resolution in one frame is the same between a case of "1/N × 1/N size reduction" depicted in Fig. 19A and a case of "1/N × 1/N phase shift subsampling + information integration" depicted in Fig. 19B. In the example of Fig. 19B, a pixel position (a phase of a pixel) to be sampled is further shifted by one pixel for each frame.

First, a case of "1/N × 1/N size reduction" will be described. In Fig. 19A, the size-reduced image 321a is generated from the captured image at a certain frame timing, and the feature amount extraction processing is performed on the size-reduced image 321a by using, for example, the CNN. Then, the recognition processing is performed on the basis of the extracted feature amount. In the example of Fig. 19A, recognition results 62 and 63 in which a person is recognized are obtained by the recognition processing for the size-reduced image 321a.

The size-reduced image 321b is generated from the captured image at the next frame timing. Similarly to the case of the size-reduced image 321a, the recognition results 62 and 63 are obtained by the recognition processing based on the feature amount extracted from the size-reduced image 321b. Similarly, the recognition results 62 and 63 are obtained also for the size-reduced image 321c at the next frame timing and the size-reduced image 321d at the further next frame timing by the recognition processing based on the extracted feature amount. As described above, in a case of "1/N × 1/N size reduction", only a target object positioned at a distance according to the resolution of each of the size-reduced images 321a, 321b, and the like can be recognized.

Next, a case of "1/N × 1/N phase shift subsampling + information integration" will be described. In Fig. 19B, the subsampling is performed on the captured image with the first phase at a certain frame timing, and the sampling image 36Φ1 of the first phase is generated. The size of the sampling image 36Φ1 is the same as the size of the size-reduced image 321a described above. The sampling image 36Φ1 is subjected to the feature amount extraction processing by using, for example, the CNN in a similar manner to that in the example of Fig. 19A to extract the feature amount. Then, the recognition processing is performed on the basis of the extracted feature amount. In the example of Fig. 19B, the recognition results 62 and 63 in which a person is recognized are obtained by the recognition processing for the sampling image 36Φ1, similarly to the case of Fig. 19A.

The sampling image 36Φ2 of the second phase is generated from the captured image at the next frame timing, the phase of the sampling image 36Φ2 being shifted from the sampling image 36Φ1 by one pixel. The recognition processing is performed on the basis of the feature amount extracted from the sampling image 36Φ2.

At this time, the recognition processing is performed on the basis of a feature amount obtained by integrating the feature amount extracted from the sampling image 36Φ2 and the feature amount extracted from the sampling image 36Φ1 used in the immediately previous recognition processing. As a result, in addition to the recognition results 62 and 63 based on the sampling image 36Φ1, a recognition result 64 in which a person positioned farther than the person recognized as the recognition results 62 and 63 is recognized is obtained.

Also for the sampling image 36Φ3 at the further next frame timing, the feature amount based on the sampling image 36Φ3 is integrated with the feature amount used in the immediately previous recognition processing, and a recognition result 65 in which a person positioned farther than the person recognized as the above-described recognition result 64 is recognized is obtained. Similarly, also for the sampling image 36Φ4 at the still further next frame timing, the feature amount based on the sampling image 36Φ4 is integrated with the feature amount used in the immediately previous recognition processing, and a recognition result 66 in which a person positioned farther than the person recognized as the above-described recognition result 65 is recognized is obtained.

As described above, in the first embodiment, the respective feature amounts based on the sampling images 36Φ1 to 36Φ4 of a plurality of frames subsampled are sequentially integrated for each frame, and the recognition processing is performed on the basis of the integrated feature amount. Therefore, for example, in a case where the images of the respective frames from which the sampling images 36Φ1 to 36Φ4 are generated has temporal continuity, it can be considered that the feature amount obtained by integrating the feature amounts extracted from the sampling images 36Φ1 to 36Φ4 corresponds to the feature amount extracted from one captured image for which the subsampling is not performed.

Therefore, with the recognition processing according to the first embodiment, it is possible to recognize a distant target object by fully utilizing the resolution of the camera (imaging section 1200). In addition, since a recognition result can be obtained by performing the recognition processing for each frame, a large target object can be recognized on an image in a short time. A small target object on an image is recognized with an N² frame latency, for example, but since such a target object is predicted to be far away, a slight latency in the recognition result can be allowed.

### (2-2-2-2. Comparison in Recognition Processing Control)

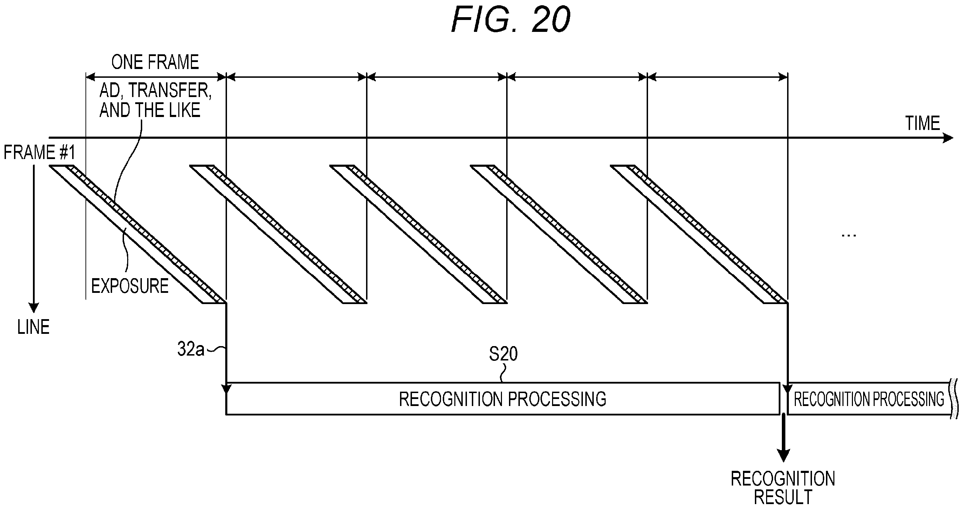

Next, control of the recognition processing according to the existing technology will be described and compared with control of the reading and recognition processing according to the first embodiment described with reference to Fig. 14. Fig. 20 is a timing chart of an example illustrating control of reading and recognition processing in a case where the image data 32 of the captured image is used without being reduced in size according to the existing technology. Since the meaning of each section in Fig. 20 is equivalent to that in Fig. 14 described above, a description thereof will be omitted here.

In the example of Fig. 20, the recognition processing (Step S20) for the image data 32a based on the captured image of the frame #1 takes time equivalent to four frames. Since the recognition processing is performed using the image data 32a that is not reduced in size, for example, a distant target object can be recognized. On the other hand, a latency of the recognition result based on the image data 32a for the image data 32a occurs due to the restriction in processing amount in the CPU 1205, the DSP 1203 (see Fig. 5), and the like that perform the recognition processing.

In addition, since the recognition processing for the image data 32a that is not reduced in size requires a lot of time, an update interval of the recognition result becomes long, and the frame rate for the recognition result decreases. Furthermore, in a case where the recognition processing is performed on the basis of the image data 32a that is not reduced in size, for example, it is necessary to secure a large memory capacity for the image data 32a. Furthermore, in Fig. 20, while the recognition processing is performed on the image data 32a, the recognition processing cannot be performed on the captured images of the frames #2 to #4 subsequent to the frame #1, as a result of which the imaging processing for the frames #2 to #4 is wasted.

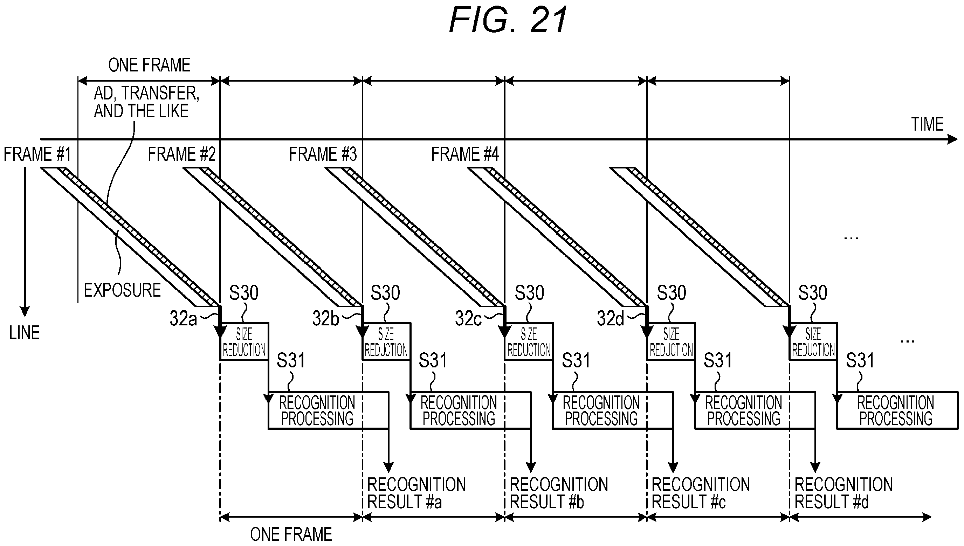

Fig. 21 is a timing chart of an example illustrating control of reading and recognition processing in a case of "1/N × 1/N size reduction" according to the existing technology. Since the meaning of each section in Fig. 21 is equivalent to that in Fig. 14 described above, a description thereof will be omitted here.

In the example of Fig. 21, for example, the image data 32a based on the captured image of the frame #1 is reduced in size by thinning or the like (Step S30), and the recognition processing is performed on image data of the size-reduced image to obtain a recognition result #a (Step S31). Since the recognition processing is performed on the image data of the size-reduced image, the recognition result can be updated in a shorter time as compared with a case where the recognition processing is performed on the image data 32a that is not reduced in size described above. For example, in a case where the size-reduced image is obtained by thinning out every other pixel in each of the row direction and the column direction of the image data 32a, the recognition processing can be performed in an equivalent time to that for the recognition processing according to the first embodiment described with reference to Fig. 14, that is, the recognition processing using "1/N × 1/N phase shift subsampling + information integration".

On the other hand, since the recognition processing is performed on the basis of the size-reduced image obtained by thinning the image data 32a, the resolution of the image data 32a cannot be utilized, and it is difficult to recognize a distant target object. Similar processing applies to a recognition result #b, a recognition result #c, and a recognition result #d of the image data 32b, 32c, and 32d of the frames #2, #3, and #4, respectively.

On the other hand, in the recognition processing according to the first embodiment described with reference to Fig. 14, a timing of the recognition processing and the like is equivalent to that in a case of "1/N × 1/N size reduction" depicted in Fig. 21. However, in the example of Fig. 14, the feature amount that is the intermediate data in the recognition processing is integrated with the feature amount extracted from the image data of the next frame, and the recognition processing for the image data is performed. Furthermore, the subsampling for the image data is performed with a phase shifted for each frame.

Therefore, it is possible to recognize a distant target object by fully utilizing the resolution of the camera (imaging section 1200). In addition, since a recognition result can be obtained by performing the recognition processing for each frame, a large target object can be recognized on an image in a short time. For example, A small target object, which can be recognized by fully using the resolution of a captured image, on the image is recognized with an N² frame latency, for example, but since such a target object is predicted to be far away, a slight latency in the recognition result can be allowed.

### (2-2-2-3. Comparison in Latency in Recognition Processing)

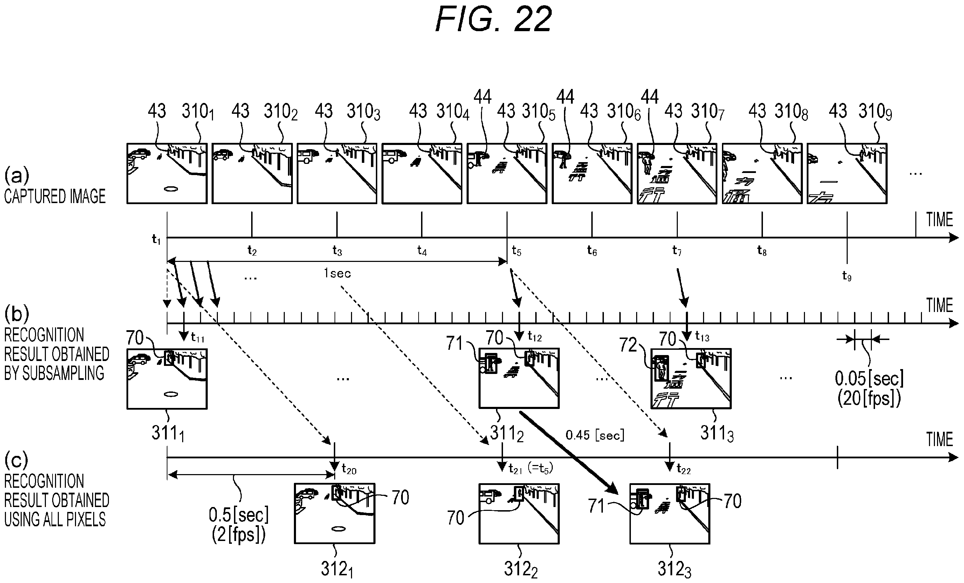

Next, a latency of the recognition processing according to the existing technology and a latency of the recognition processing according to the first embodiment will be described. Fig. 22 is a schematic diagram for explaining a latency of a recognition result according to the first embodiment and a latency of a recognition result according to the existing technology.

In Fig. 22, time advances from left to right. Furthermore, Section (a) on the upper side schematically depicts captured images 310₁ to 310₉ captured by the imaging section 1200. Section (b) on the middle side schematically depicts an example of a recognition result obtained by the phase shift subsampling in the recognition processing according to the first embodiment. Section (c) on the lower side schematically depicts an example of a recognition result in a case where the resolution of the captured image is used as it is according to the existing technology. In addition, respective images 311₁, 311₂, and 311₃ in Section (b) and respective images 312₁, 312₂, and 312₃ in Section (c) indicate images imitating the captured images at respective times.

Note that, here, an example in which the recognition processing is performed using the resolution of the captured image as it is without thinning or the like in consideration of recognition of a distant target object is applied as the existing technology in Section (c). Furthermore, the frame rate of the captured image is, for example, 20 [fps] or more.

It is assumed that the captured images 310₁, 310₂, ..., 310₉, and the like depicted in Section (a) of Fig. 22 are captured by an in-vehicle camera (imaging section 1200). At this time, a vehicle on which the camera is mounted moves forward. Note that, in Section (a) of Fig. 22, the respective captured images 310₁ to 310₉ are assumed to be acquired at times t₁, t₂, ..., and t₉, respectively, in units of time (0.25 [second (s)]) obtained by dividing one second into four equal parts for explanation.

In Section (a) of Fig. 22, each of the captured images 310₁, 310₂, ..., 310₉, and the like includes a target object 43 that is a person positioned far away. In addition, the captured images 310₅ to 310₇ further include a target object 44 that is a person in addition to the target object 43. The target object 44 suddenly appears from behind a vehicle 45 in the captured image 310₅, and moves toward the captured images 310₆, 310₇, and the like and the vehicle (referred to as a host vehicle) on which the camera is mounted. The host vehicle is required to quickly recognize the target object 44.

In the example of Fig. 22, the recognition processing using the phase shift subsampling depicted in Section (b) is updated at a frame rate of 20 [fps], that is, every 0.05 [S]. On the other hand, in the existing technology depicted in Section (c), the recognition processing is updated at a frame rate of 2 [fps], that is, every 0.5 [s].

For the target object 43 included in the captured image 310₁, in the recognition processing using the phase shift subsampling depicted in Section (b), as illustrated in the image 311₁, a recognition result 70 in which the target object 43 is recognized is obtained at time t₁₁ delayed by 0.05 [s] from time t₁ at which the captured image 310₁ is acquired. In the recognition processing using the subsampling, the recognition result is updated at intervals of 0.05 [s] even thereafter.

On the other hand, in the recognition processing using the resolution of the captured image depicted in Section (c), for the target object 43, the recognition result 70 based on the captured image 310₁ is obtained at time t₂₀ delayed by 0.5 [s] from time t₁ as shown in the image 312₁. In the recognition processing using the resolution of the captured image, the recognition result is updated next at time t₂₁ after 0.5 [s] from time t₂₀.

Next, the captured image 310s in which the target object 44 that is a person appears from behind the vehicle 45 will be considered. In this case, in the recognition processing using the phase shift subsampling depicted in Section (b), a recognition result 71 in which the target object 44 is recognized is obtained at time t₁₂ after 0.05 [s] from time t₅ at which the captured image 310₅ is acquired as shown in the image 311₂. Furthermore, in the recognition processing using the phase shift subsampling, the recognition result is updated every 0.05 [s], and the target object 44 moving toward the host vehicle is obtained as a recognition result 72 at time t13 after 0.5 [s] from time t₁₂ as shown in the image 311₃.

On the other hand, in the recognition processing using the resolution of the captured image depicted in Section (c), the target object 44 is recognized at time t₂₂ after 0.5 [s] from time t₅ at which the captured image 310₅ is acquired, and the recognition result 71 corresponding to the target object 44 is obtained. That is, in the recognition processing using the resolution of the captured image, the target object 44 is recognized with a latency of 0.45 [s] as compared with the recognition processing using the phase shift subsampling.

Furthermore, in the recognition processing using the resolution of the captured image depicted in Section (c), the recognition result is updated only once at time t₂₁ between time t₂₀ and time t₂₂, and it is extremely difficult to confirm the state of the target object 44 with high simultaneity.

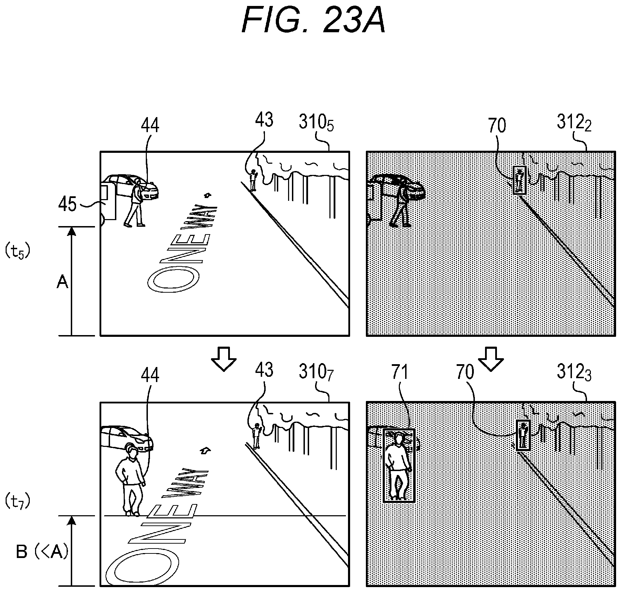

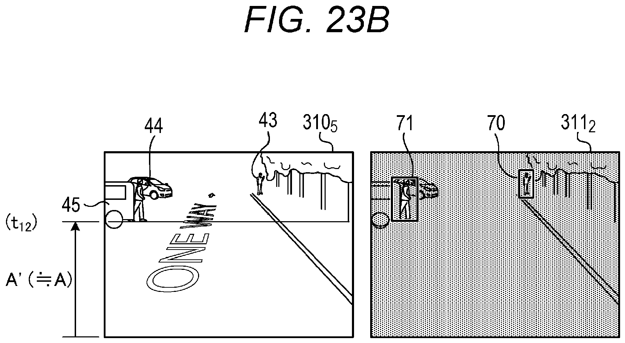

A relationship between the recognition processing and braking of the vehicle will be schematically described with reference to Figs. 23A and 23B. Note that, in Figs. 23A and 23B, the drawings on the left side schematically depict a captured image (or a scene in front of the host vehicle), and the drawings on the right side schematically depict an image including a recognition result obtained by the recognition processing. Further, in Fig. 23A, the upper part corresponds to a state at time t₅, and the lower part corresponds to a state at time t7 with reference to Fig. 22.

Fig. 23A is a diagram depicting an example of a case of the recognition processing using the resolution of the captured image. Referring to Fig. 22, at time t₅, the target object 44 that is a person appears from behind the vehicle 45 in the captured image 310s. Here, a distance from the host vehicle (imaging section 1200) to the target object 44 at time t₅ is defined as a distance A. Here, the distance A is a distance at which it is possible to avoid a situation in which the host vehicle comes into contact with or collides with the target object 44 by braking of the host vehicle such as deceleration or putting a brake.

In the recognition processing using the resolution of the captured image, a recognition result based on the captured image 310s at time t₃ before 0.5 [s] due to the latency is obtained at time t₅ (= time t₂₂). Since the captured image 310s includes the target object 43 but does not include the target object 44, only the recognition result 70 for the target object 43 is obtained as shown in the image 312₂ in the upper part of Fig. 23A.

At time t7, the target object 44 approaches the host vehicle so as to be positioned at a short distance B. Here, it is assumed that the distance B is a distance at which there is an extremely high possibility that the host vehicle comes into contact with or collides with the target object 44 even if braking of the host vehicle such as deceleration or putting a brake is made. For example, in a case where the speed of the host vehicle is 30 [km/h], the host vehicle moves by about 4.2 [m] within 0.5 [s]. In a case where the moving speed of the target object 44 is ignored, the distance B is a distance shorter than the distance A by about 4.2 [m].

In the recognition processing using the resolution of the captured image, a recognition result using the captured image 310s at time t₅ before 0.5 [s] corresponding to the latency is obtained at time t7. That is, the recognition result 71 for the target object 44 at the distance A is obtained at time t7 as shown in the image 312₃ on the right side in the lower part of Fig. 23A, and there is a high possibility that braking such as deceleration or putting a brake is not in time.

Fig. 23B is a diagram depicting an example of a case of the recognition processing using the phase shift subsampling. In this case, a recognition result based on the captured image 310s at time t₅ before 0.05 [s] is obtained at time t₂₂ due to the latency with reference to Fig. 22. In this case, the recognition result 71 corresponding to the target object 44 included in the captured image 310₅ is obtained by the recognition processing as shown in the image 311₂ on the right side of Fig. 23B. At time t₂₂, the target object 44 approaches the host vehicle so as to be positioned at a distance A' slightly shorter than the distance A.

Similarly to the above, in a case where the speed of the host vehicle is 30 [km/h], the host vehicle moves by about 40 [cm] within 0.05 [s]. Therefore, in a case where the moving speed of the target object 44 is ignored, the distance A' is a distance shorter than the distance A by about 40 [cm]. In this case, it is possible to avoid a situation in which the host vehicle comes into contact with or collides with the target object 44 by braking of the host vehicle such as deceleration or putting a brake.

As described above, with the recognition processing according to the first embodiment (the recognition processing using the phase shift subsampling), it is possible to recognize a target object more quickly, and for example, it is possible to more reliably perform an avoidance operation by braking of the vehicle.

### (2-2-2-4. Example of Improvement by Recognition Processing According to First Embodiment)

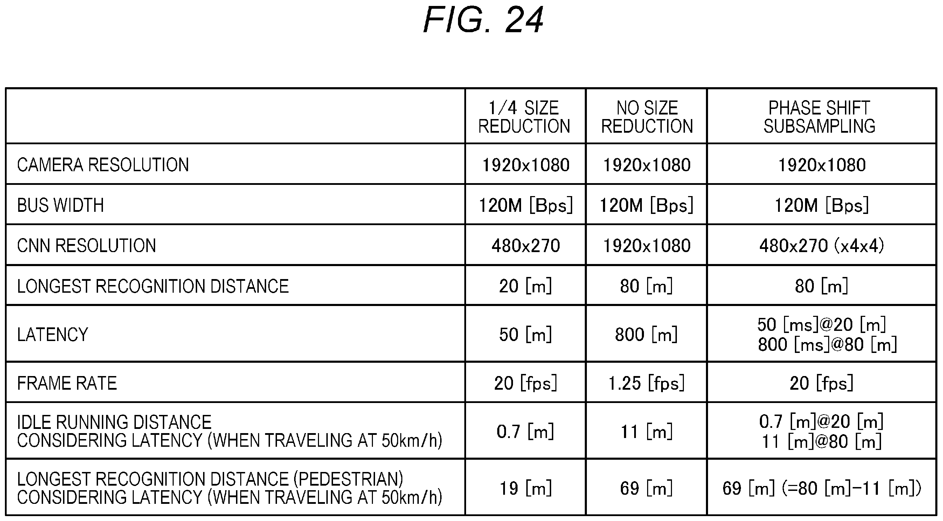

Next, an example of improving the recognition processing of the existing technology by the recognition processing according to the first embodiment will be described with reference to Fig. 24. In Fig. 24, respective columns represent "1/4 size reduction" that is the existing technology, "no size reduction" that is the existing technology, and "phase shift subsampling" that is the recognition processing according to the first embodiment, from the left. Furthermore, respective numerical values depicted in Fig. 24 are numerical values as an example for description, and the present disclosure is not limited to these values.

Note that the "1/4 size reduction" corresponds to "1/N × 1/N size reduction" described with reference to Fig. 16. The "no size reduction" corresponds to the above-described the "recognition processing using the resolution of the captured image". Furthermore, in the "phase shift subsampling", the size of the divided region 35 is set to 8 pixels × 8 pixels, and the subsampling is performed to select four pixels from the divided region 35 as sampling pixels by thinning out every three pixels in the row and column directions.

Furthermore, in Fig. 24, respective rows represent "camera resolution", "bus width", "CNN resolution", "longest recognition distance", "latency", "frame rate", and "idle running distance" from the top. Among them, the "camera resolution" is the resolution of the captured image captured by the imaging section 1200, and in the example of Fig. 24, the "camera resolution" is 1920 pixels × 1080 pixels for all of the "1/4 size reduction", the "no size reduction", and the "phase shift subsampling". Furthermore, the "bus width" indicates a bus width for the imaging section 1200 to output a captured image, and is 120 [megabyte per second (MBps)] for all of the "1/4 size reduction", the "no size reduction", and the "phase shift subsampling" in the example of Fig. 24.

The "CNN resolution" is a resolution at the time of extracting the feature amount using the CNN in the recognition section 220. In the example of Fig. 24, the "CNN resolution" is 1920 pixels × 1080 pixels equivalent to the camera resolution for the "no size reduction", and is 480 pixels × 270 pixels that is 1/4 of 1920 pixels × 1080 pixels in each matrix for the "1/4 size reduction". That is, the CNN resolution for the "no size reduction" is 16 times (= 4 × 4) that for the "1/4 size reduction".

On the other hand, in the "phase shift subsampling", since every three pixel is thinned out in the row and column directions, the "CNN resolution" is set to the resolution of 480 pixels × 270 pixels that is 1/4 of the "camera resolution". Here, in the first embodiment, all the pixel positions of the divided region 35 having a size of 8 pixels × 8 pixels are selected as the pixel positions of the sampling pixels in one cycle. Therefore, the CNN resolution in a case where the subsampling of one cycle is completed corresponds to 1920 pixels × 1080 pixels that is 480 pixels × 270 pixels × 4 × 4.

The "longest recognition distance" is the longest distance from the imaging section 1200 to a target object at which the target object can be recognized. In the example of Fig. 24, the "longest recognition distance" for the "1/4 size reduction" is 20 [m], and the "longest recognition distance" for each of the "no size reduction" and the "phase shift subsampling" is 80 [m]. The "longest recognition distance" for the "phase shift subsampling" is 80 [m], which is equivalent to that for the "no size reduction" in a case where the subsampling of one cycle is completed.

The "latency" indicates a latency of the recognition result for the captured image, and the "latency" for the "1/4 size reduction" is 50 [ms], and the "latency" for the "no size reduction" is 800 [ms] that is 16 times (= 4 × 4) that for the "1/4 size reduction". On the other hand, the "latency" for the "phase shift subsampling" is 50 [ms] in one subsampling, and is 800 [ms] that is equivalent to that for the "no size reduction" in a case where the subsampling for one cycle is completed. Note that, in the "phase shift subsampling", a symbol "@ (at mark)" is followed by the longest recognition distance. By doing so, in one subsampling, the latency is 50 [ms] which is short, while the longest recognition distance is 20 [m] which is short. Furthermore, in a case where the subsampling for one cycle is completed, the longest recognition distance increases to 80 [m].

The "frame rate" indicates a recognition result update cycle. In the example of Fig. 24, the "frame rate" for the "1/4 size reduction" and the "phase shift subsampling" is 20 [fps], and the "frame rate" for the "no size reduction" is 1.25 [fps]. Note that the frame rate for the "phase shift subsampling" of 20 [fps] is the frame rate of one subsampling.

The "idle running distance" is a distance by which the host vehicle travels until braking such as putting a brake for actually stopping the host vehicle is performed after a target object for which the host vehicle needs to be stopped appears, for example. More specifically, the "idle running distance" is a distance by which the host vehicle travels from a time point at which the target object appears to a time point at which the appearing target object is recognized by the recognition processing and braking of the host vehicle is started according to the recognition result. Here, the idle running distance is obtained on the basis of the traveling speed of the host vehicle set to 50 [km/h]. In order to obtain the "idle running distance", it is necessary to consider the value of the "latency" described above.

The "idle running distance" is 0.7 [m] for the "1/4 size reduction" and is 11 [m] for the "no size reduction". As described above, the "latency" for the "no size reduction" is 16 times that for the "1/4 size reduction". Therefore, the "idle running distance" is also 11 [m] that is approximately 16 times 0.7 [m]. Further, in the "1/4 size reduction", while the idle running distance is short, the longest recognition distance is 20 [m], and it is difficult to recognize a target object positioned at a distance exceeding 20 [m]. Further, in the "no size reduction", a target object positioned at a distance of up to 80 [m] can be recognized, while the idle running distance is 11 [m] which is long. In a case of the "no size reduction", the idle running distance is 11 [m] even for a target object positioned at a short distance of, for example, up to 20 [m], and there is a possibility that it becomes difficult to avoid contact with or collision with the target object.

On the other hand, in the "phase shift subsampling", a target object positioned at a distance of up to 20 [m] can be recognized with a latency of 50 [ms] in the first one subsampling for one cycle. Therefore, the "idle running distance" for a target object positioned at a distance of up to 20 [m] is 0.7 [m], which is equivalent to that for the "1/4 size reduction". In addition, the "idle running distance" for a target object positioned at a distance of more than 20 [m] and up to 80 [m] is 11 [m], which is equivalent to that for the "no size reduction".

The "longest recognition distance (pedestrian)" indicates the longest recognition distance for a pedestrian or the like in a case where braking of the vehicle is needed when the pedestrian or the like is recognized. The "longest recognition distance (pedestrian)" is a value obtained by subtracting the "idle running distance" from the "longest recognition distance" described above, and is approximately 19 [m] for the "1/4 size reduction", and is approximately 69 [m] for each of the "no size reduction" and the "phase shift subsampling".

As described above, in the "phase shift subsampling" which is the recognition processing method according to the first embodiment, a dramatic improvement from the recognition processing method of the existing technology can be seen in that it is possible to recognize a target object positioned at a long distance while decreasing the idle running distance at a short distance. Therefore, in the recognition processing according to the first embodiment, it is possible to recognize a target object positioned at a long distance, the idle running distance at a short distance is 0.7 [m] which is short, and it is easy to avoid contact and collision with a target object positioned at a short distance.

### (2-2-2-5. Effective Application of Recognition Processing According to First Embodiment)

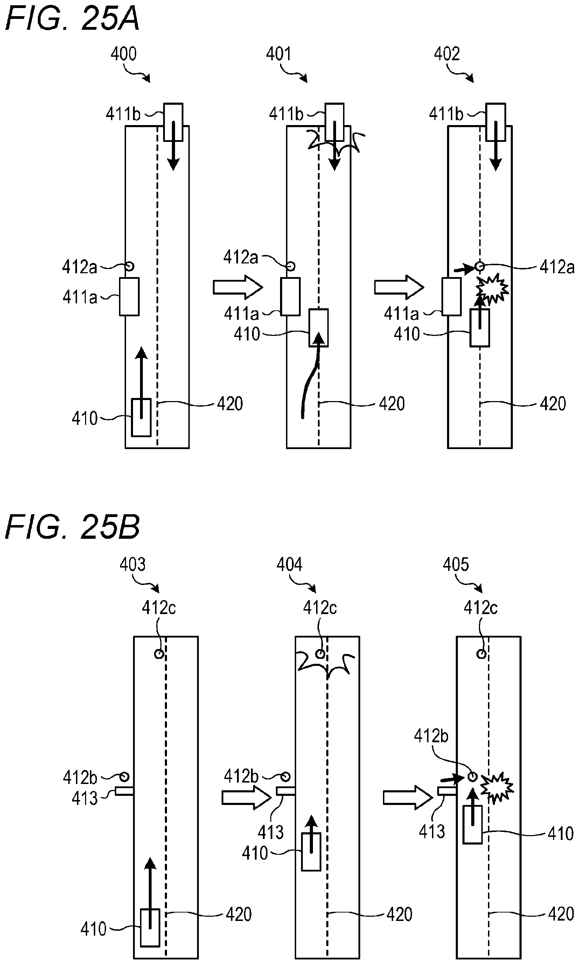

Next, an effective application of the recognition processing according to the first embodiment will be described with reference to Figs. 25A and 25B. Note that states 400 to 402 in Fig. 25A and states 403 to 405 in Fig. 25B each illustrate, in chronological order, a state in which a vehicle 410 (hereinafter, referred to as a host vehicle 410) that is a host vehicle is traveling on a road. The information processing device 1b capable of performing the recognition processing according to the first embodiment is mounted on the host vehicle 410, and a braking control system and the like can be controlled on the basis of a recognition result obtained by the information processing device 1b.

Fig. 25A is a schematic diagram depicting a first example of the effective application of the recognition processing according to the first embodiment. Referring to the state 400 in Fig. 25A, another vehicle 411a is stopped in front of the host vehicle 410 traveling forward, and a person 412a is present in a portion positioned behind the vehicle 411a so as not to be recognizable from the host vehicle 410. In addition, a still another vehicle 411b is traveling on the opposite lane of a traveling lane in which the host vehicle 410 travels.

The state 401 schematically shows a state in which the vehicle 411b protrudes from a lane 420 and enters the traveling lane of the host vehicle 410 after a predetermined time elapses in the state 400. In this state 402, the information processing device 1b mounted on the host vehicle 410 can recognize the vehicle 411b positioned at a long distance as a target object. Therefore, the information processing device 1b can recognize the vehicle 411b protruding from the lane 420, control the host vehicle 410 according to the recognition result, and cause the host vehicle 410 to perform an avoidance operation of avoiding the vehicle 411b.

The state 402 schematically shows a case where the person 412a suddenly appears from behind the vehicle 411a after a predetermined time elapses in the state 400. In this state 402, the information processing device 1b mounted on the host vehicle 410 can recognize the person 412a positioned at a short distance as a target object with a short latency. Therefore, the information processing device 1b can recognize the person 412a and start an operation of controlling the host vehicle 410 according to the recognition result with a short idle running distance, and can avoid contact or collision with the person 412a.

Fig. 25B is a schematic diagram depicting a second example of the effective application of the recognition processing according to the first embodiment. Referring to the state 403 in Fig. 25B, a shielding object 413 such as a wall is present in a region outside a road in front of the host vehicle 410 traveling forward, and the person 412b is present in a portion positioned behind the shielding object 413 so as not to be recognizable from the host vehicle 410. In addition, a person 412c is present at a long distance in front of the traveling lane in which the host vehicle 410 travels.

The state 404 schematically shows a state in which the person 412c is recognized by the information processing device 1b of the host vehicle 410. The information processing device 1b can recognize a distant target object. Therefore, it is possible to control the host vehicle 410 so as to perform gentle deceleration in a case where the person 412c who is positioned at a long distance in the traveling direction of the host vehicle 410 is recognized.

The state 405 schematically shows a state in which the person 412b suddenly appears from behind the shielding object 413 after a predetermined time elapses in the state 403. In this state 405, the information processing device 1b mounted on the host vehicle 410 can recognize the person 412b positioned at a short distance as a target object with a short latency. Therefore, the information processing device 1b can recognize the person 412b and start an operation of controlling the host vehicle 410 according to the recognition result with a short idle running distance, and can avoid contact or collision with the person 412b.

### (2-3. Modified Examples of First Embodiment)

Next, modified examples of the first embodiment will be described.

### (2-3-1. First Modified Example)

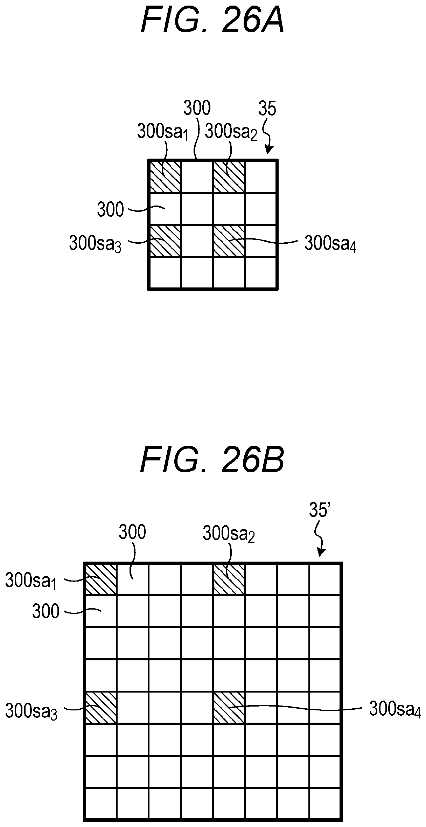

First, a first modified example of the first embodiment will be described. The first modified example of the first embodiment is an example in which a spatial interval of sampling by subsampling is changed according to a recognition target object, a situation in which the recognition processing is to be performed, or the like. Figs. 26A and 26B are schematic diagrams depicting an example of divided regions 35 and 35' having different sampling intervals.

Fig. 26A is a schematic diagram depicting an example in which four pixels 300sa₁, 300sa₂, 300sa₃, and 300sa₄ selected by thinning out every other pixel 300 included in the divided region 35 in each of the row direction and the column direction are sampling pixels. In this case, the sampling interval is two pixels. Note that, in the example of Fig. 26A, the size of the divided region 35 is 4 pixels × 4 pixels.

Fig. 26B is a schematic diagram depicting an example in which four pixels 300sa₁, 300sa₂, 300sa₃, and 300sa₄ selected by thinning out every three pixel 300 included in the divided region 35 in each of the row direction and the column direction are sampling pixels. In this case, the sampling interval is four pixels. Note that, in the example of Fig. 26B, the size of the divided region 35 is 8 pixels × 8 pixels.

As in the example of Fig. 26B, for example, in a case where the sampling interval is increased as compared to that in the example of Fig. 26A, a small number of sampling pixels are selected in one subsampling, and the latency is reduced. In this case, for example, the recognizable distance in the recognition processing by the first subsampling is decreased, and the resolution of the sampling image is low, which is suitable for recognizing a target object having a large size on the image.

On the other hand, as in Fig. 26A, for example, in a case where the sampling interval is decreased as compared to that in the example of Fig. 26B, a large number of sampling pixels are selected in one subsampling, and the latency is increased. In this case, for example, the recognizable distance in the recognition processing by the first subsampling is increased, and the resolution of the sampling image is higher than that in the example of Fig. 26B, which is suitable for recognizing a target object having a small size on the image.

For example, in a case where the information processing device 1b according to the first modified example of the first embodiment is used for in-vehicle use, it is important to recognize a target object positioned at a longer distance while the vehicle on which the information processing device 1b is mounted is traveling at a high speed. Therefore, the preprocessing section 210 decreases the sampling interval as depicted in Fig. 26A, for example, and the recognition section 220 performs the recognition processing using a sampling image with a higher resolution. On the other hand, when the vehicle is traveling, for example, in an urban area or the like, the latency is important. Therefore, the preprocessing section 210 increases the sampling interval as depicted in Fig. 26B, for example, and the recognition section 220 performs the recognition processing using a low-resolution sampling image.

For example, the information processing device 1b can acquire position information indicating a current position, and determine whether or not the current position is an urban area on the basis of the acquired position information and map information corresponding to the current position. The information processing device 1b can be configured to estimate the current position by using, for example, simultaneous localization and mapping (SLAM) or global navigation satellite system (GNSS). In addition, the information processing device 1b acquires information indicating a traveling speed from the vehicle via the interface 1204. In the information processing device 1b, for example, the preprocessing section 210 can set the sampling interval on the basis of the current position information and the traveling speed information. The sampling interval can be dynamically set on the basis of these pieces of information.

Note that the present disclosure is not limited thereto, and it is also conceivable to adjust the speed of the recognition processing and the recognizable distance by a method such as controlling a clock frequency supplied to the preprocessing section 210 and the recognition section 220 or narrowing a recognition region to be subjected to the recognition processing in the captured image. For example, during high-speed traveling in an urban area, a long-distance recognition result and a short-distance recognition result are required. In such a case, control such as increasing the clock frequency and narrowing the recognition region is performed.

As described above, in the first modified example of the first embodiment, the recognition result can be obtained more stably by appropriately performing switching between the recognition processing using the subsampling and the normal recognition processing. In addition, since the recognition processing using the subsampling and the normal recognition processing are alternately performed, a load of the recognition section 220 is reduced, and power consumption can be suppressed.

### (2-3-2. Second Modified Example)

Next, a second modified example of the first embodiment will be described. The second modified example of the first embodiment is an example in which an external device is controlled according to a latency of the recognition processing. As an example, in a case where the information processing device 1b according to the second modified example of the first embodiment is used for in-vehicle use, the speed (vehicle speed) of the vehicle on which the information processing device 1b is mounted is controlled according to the latency of the recognition processing. For example, a case where sampling pixels are selected as depicted in Fig. 26A described above is suitable for recognizing a target object having a small size on an image, but the latency is increased.

For example, in a school zone, there are many children who are small-sized target objects on the image. Therefore, for example, in a case where the current position is determined to be a school zone on the basis of the position information, the information processing device 1b according to the second modified example of the first embodiment selects the subsampling by the sampling pixels in Fig. 26A in which the resolution is higher. Since the subsampling by the sampling pixels in Fig. 26A causes a long latency, the information processing device 1b limits the vehicle speed of the vehicle on which the information processing device 1b is mounted.

### (2-3-3. Third Modified Example)

Next, a third modified example of the first embodiment will be described. The third modified example of the first embodiment is an example in which the recognition processing using the subsampling according to the first embodiment (hereinafter, referred to as the recognition processing using the subsampling) and the normal recognition processing in which the subsampling is not performed are switched. Here, the normal recognition processing refers to recognition processing using all pixels of a captured image without performing the subsampling and reducing the size of the captured image.

For example, the normal recognition processing can be performed at regular time intervals unlike the recognition processing using the subsampling. As a result, for example, it is possible to verify the recognition processing using the subsampling. Furthermore, for example, in an emergency, it is possible to perform switching from the recognition processing using the subsampling to the normal recognition processing. As a result, the stability of the recognition processing can be improved.

Here, in a case where the recognition processing using the subsampling is switched to the normal recognition processing, for example, the latency is increased, and thus the immediacy of the recognition result is deteriorated. Therefore, in a case of performing switching to the normal recognition processing, it is preferable to increase a frequency of a clock to be supplied to the preprocessing section 210 and the recognition section 220.

Furthermore, it is possible to perform switching between the recognition processing using the subsampling and the normal recognition processing according to the reliability of the recognition result obtained by the recognition processing. For example, in a case where the recognition processing using the subsampling is performed, the recognition section 220 acquires the reliability of the recognition result obtained by the recognition processing. In a case where the reliability is less than a predetermined value, for example, the recognition section 220 instructs the preprocessing section 210 to perform switching from the recognition processing using the subsampling to the normal recognition processing. In response to this instruction, the preprocessing section 210 stops the subsampling for the captured image and passes all the pixels of the captured image to the recognition section 220. The recognition section 220 performs the normal recognition processing on the basis of all the pixels of the captured image passed from the preprocessing section 210.

In the normal recognition processing switched from the recognition processing using the subsampling in this manner, the recognition section 220 acquires the reliability of the recognition result obtained by the recognition processing. In a case where the reliability is, for example, equal to or more than the predetermined value, the recognition section 220 instructs the preprocessing section 210 to perform switching from the normal recognition processing to the recognition processing using the subsampling. In response to this instruction, the preprocessing section 210 performs the subsampling for the captured image and passes the selected sampling pixels to the recognition section 220. The recognition section 220 performs the recognition processing using the subsampling on the basis of the sampling pixels passed from the preprocessing section 210.

As described above, in the third modified example of the first embodiment, the recognition result can be obtained more stably by performing switching between the recognition processing using the subsampling and the normal recognition processing according to the reliability of the recognition result obtained by the recognition processing. Furthermore, in a case where the reliability of the recognition result is high, the recognition processing using the subsampling is performed, so that the load of the recognition section 220 is reduced, and the power consumption can be suppressed.

### (2-3-4. Fourth Modified Example)

Next, a fourth modified example of the first embodiment will be described. In the fourth modified example of the first embodiment, a pixel 300 at a pixel position arbitrarily selected in a captured image is used as a sampling pixel by the subsampling.

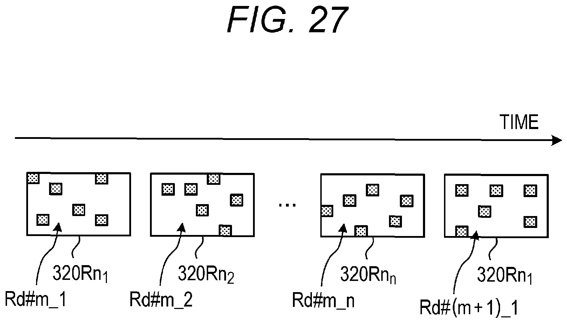

Fig. 27 is a schematic diagram for explaining subsampling according to the fourth modified example of the first embodiment. As depicted in Fig. 27, in the fourth modified example of the first embodiment, the preprocessing section 210 sets patterns R#m_1, R#m_2, ..., and R#m_n according to a plurality of arbitrarily selected pixel positions for each frame, with n frames of original images 320Rn₁, 320Rn₂, ..., and 320Rnₙ, which are captured images of the respective frames, as one cycle. As an example, in a case where the total number of pixels included in the frame is s and the number of frames in one cycle is n, the preprocessing section 210 sets the patterns R#m_1, R#m_2, ..., and R#m_n each including (s/n) pixel positions.

Here, the plurality of arbitrarily selected pixel positions includes, for example, a plurality of discrete and aperiodic pixel positions. For example, the preprocessing section 210 can select a plurality of pixel positions by using a pseudo random number. Furthermore, the selected pixel positions are preferably different for each frame, but some pixel positions may overlap between frames.

The recognition section 220 selects a pixel 300 at a pixel position included in each of the patterns R#m_1, R#m_2, ..., and R#m_n as a sampling pixel from each of the original images 320Rn₁, 320Rn₂, ..., and 320Rnₙ, and performs the recognition processing on the basis of the selected sampling pixel.

In the fourth modified example of the first embodiment, as described above, the recognition processing is performed on the basis of the sampling pixels arbitrarily selected from each of the original images 320Rn₁, 320Rn₂, ..., and 320Rnₙ and selected according to the patterns R#m_1, R#m_2, ..., and R#m_n including a plurality of pixel positions different for each frame. Therefore, for example, it is possible to reduce the artifact of sampling as compared with a case where pixels 300 at pixel positions obtained by periodically selecting, for example, every other pixel or every three other pixel in each of the row direction and the column direction are used as the sampling pixels.

For example, with the recognition processing according to the fourth modified example of the first embodiment, it is possible to suppress occurrence of erroneous recognition or unrecognition of a temporal cycle pattern such as flicker. Furthermore, with the recognition processing, it is also possible to suppress erroneous recognition or unrecognition of a spatial cycle pattern (fence, mesh-like structure, or the like).

Note that, in the above description, for example, in each of the original images 320Rn₁, 320Rn₂, ..., and 320Rnₙ, the sampling pixels are selected according to the pixel positions arbitrarily set for the entire image, but this is not limited to this example. For example, a sampling pixel may be selected according to a pixel position arbitrarily set in the divided region 35 obtained by dividing the original image 320.

### (2-3-5. Fifth Modified Example)

Next, a fifth modified example of the first embodiment will be described. The fifth modified example of the first embodiment is an example in which a configuration of a pixel position of a sampling pixel for performing the recognition processing is changed according to a recognition result.

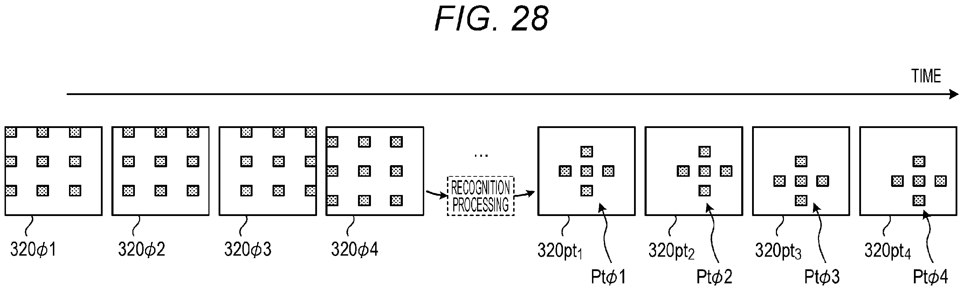

Fig. 28 is a schematic diagram for explaining subsampling according to the fifth modified example of the first embodiment. In Fig. 28, original images 320Φ1, 320Φ2, 320Φ3, and 320Φ4 schematically show images for one cycle of the subsampling in which pixel positions are selected every predetermined number of pixels in each of the row direction and the column direction. The recognition section 220 performs the recognition processing on the basis of sampling pixels selected from each of the original images 320Φ1, 320Φ2, 320Φ3, and 320Φ4.

The recognition section 220 sets a region of interest for the captured image on the basis of the recognition results for the original images 320Φ1, 320Φ2, 320Φ3, and 320Φ4. As an example, in a case where a recognition result in which a target object is recognized with low reliability is obtained, the recognition section 220 sets a region of a predetermined range including the target object in the captured image as the region of interest. The preprocessing section 210 sets a pixel position of a sampling pixel in the region of interest. In the example of Fig. 28, pixel positions PtΦ1, PtΦ2, PtΦ3, and PtΦ4 of the sampling pixels are respectively set for images 320Pt₁, 320Pt₂, 320Pt₃, and 320Pt₄ in which the region of interest is set for the original images 320Φ1, 320Φ2, 320Φ3, and 320Φ4.

At this time, the preprocessing section 210 can set all the pixel positions in the region of interest as the pixel positions of the sampling pixels without performing thinning. Alternatively, the preprocessing section 210 may set, for the region of interest, the pixel positions of the sampling pixels at a sampling interval smaller than a sampling interval of the sampling pixels set in the original images 320Φ1 to 320Φ4. Furthermore, the preprocessing section 210 may set, for the region of interest, the pixel positions of the sampling pixels at a sampling interval equivalent to the sampling interval of the sampling pixels set in the original images 320Φ1 to 320Φ4.

As described above, in the fifth modified example of the first embodiment, the pixel positions of the sampling pixels are set for the region of interest set for the captured image on the basis of the recognition results for the original images 320Φ1 to 320Φ4. Therefore, the load of the recognition section 220 is reduced, and power consumption can be suppressed. Furthermore, by setting the pixel positions of the sampling pixels at a smaller sampling interval for the region of interest, a more accurate recognition result can be acquired at a higher speed.

### (2-3-6. Sixth Modified Example)

Next, a sixth modified example of the first embodiment will be described. The sixth modified example of the first embodiment is an example in which the exposure performed by the imaging section 1200 is controlled for each phase of subsampling of one cycle.

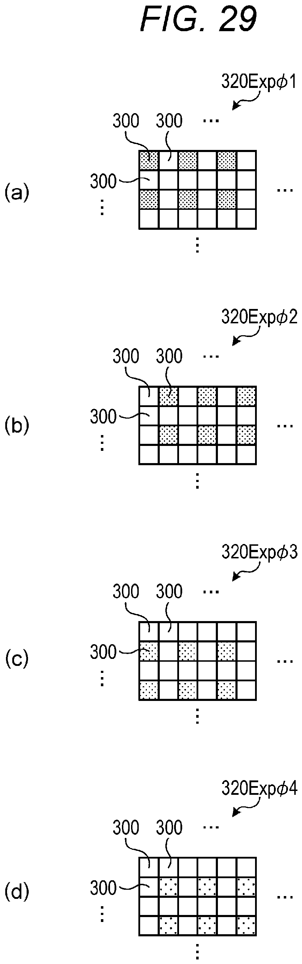

Fig. 29 is a schematic diagram depicting an example of the exposure control according to the sixth modified example of the first embodiment. In this example, it is assumed that the divided region 35 (not illustrated) has a size of 4 pixels × 4 pixels, and the subsampling is performed for each divided region 35 by thinning every other pixel in each of the row direction and the column direction. Sections (a), (b), (c), and (d) in Fig. 29 depict an original image 320ExpΦ1 to be subjected to subsampling with the first phase, an original image 320ExpΦ2 to be subjected to subsampling with the second phase, an original image 320ExpΦ4 to be subjected to subsampling with the third phase, and an original image 320ExpΦ4 to be subjected to subsampling with the fourth phase, respectively.

Here, the preprocessing section 210 sequentially sets, for each of the original images 320ExpΦ1, 320ExpΦ2, 320ExpΦ3, and 320ExpΦ4, an exposure time shorter than that for the immediately previous original image. As described above, in the subsampling for one cycle, a dynamic range for luminance can be widened by setting different exposure times for the original images 320ExpΦ1, 320ExpΦ2, 320ExpΦ3, and 320ExpΦ4.

### (2-3-7. Seventh Modified Example)

Next, a seventh modified example of the first embodiment will be described. The seventh modified example of the first embodiment is an example in which an analog gain for a pixel signal by the imaging section 1200 is controlled for each phase of subsampling of one cycle. For example, the preprocessing section 210 sets, in the imaging section 1200, an analog gain different for each phase of subsampling when reading, from the pixel array section 1001, pixel signals of the respective original images 320 to be subjected to subsampling with different phases.

In the imaging section 1200, the control section 1100 passes information indicating the set analog gain to the AD conversion section 1003. The AD conversion section 1003 controls a gain of a pixel signal input to each AD converter 1007 included in the AD conversion section 1003 via the vertical signal line VSL according to the information indicating the analog gain.

As described above, in the subsampling for one cycle, the dynamic range for luminance can be widened by setting different analog gains for the original images 320 to be subjected to subsampling with different phases.

Note that the sixth modified example of the first embodiment described above and the seventh modified example of the first embodiment are different in whether the luminance of the original image 320 is controlled by using the exposure time or the analog gain. Here, in a case where the luminance is controlled by using the exposure time, when the exposure time is increased, the original image 320 with a high luminance can be acquired, and noise of the acquired original image 320 can be suppressed. On the other hand, the increase in exposure time causes an increase in blurred portion in the original image 320.

On the other hand, in a case where the luminance is controlled by using the analog gain, the blurred portion in the original image 320 does not change even when a bright original image 320 is acquired by increasing the analog gain. Meanwhile, when the analog gain is increased, the high-luminance original image 320 can be acquired, but the noise increases.

Therefore, it is preferable that the sixth modified example of the first embodiment and the seventh modified example of the first embodiment are used depending on the purpose. For example, in a case where the recognition processing for a dynamic scene is performed, the high-luminance original image 320 is obtained by increasing the analog gain, thereby suppressing blurring. On the other hand, in a case where the recognition processing for a static scene is performed, the high-luminance original image 320 is obtained by increasing the exposure time, thereby suppressing generation of noise.

### [3. Second embodiment]

Next, a second embodiment of the present disclosure will be described. The second embodiment of the present disclosure is an example in which the sensor section 10b including the pixel array section 1001, the recognition section 220, and a component corresponding to the preprocessing section 210 are integrally incorporated in a CIS having a multilayer structure.

### (3-1. Configuration Example According to Second Embodiment)

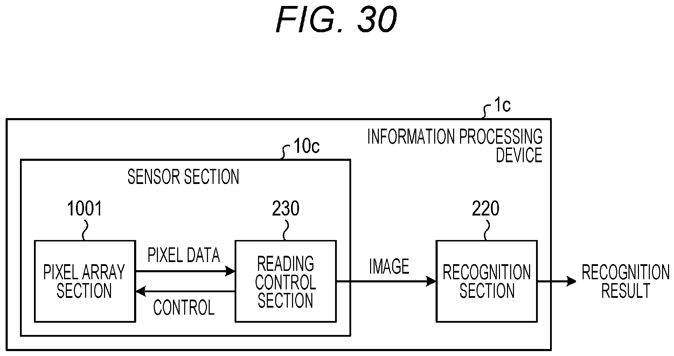

Fig. 30 is a block diagram depicting a configuration of an example of an information processing device according to the second embodiment. In Fig. 30, an information processing device 1c includes a sensor section 10c and a recognition section 220. Furthermore, the sensor section 10c includes a pixel array section 1001 and a reading control section 230. The reading control section 230 has, for example, a function corresponding to the preprocessing section 210 and a function of the control section 1100 in the imaging section 1200 described in the first embodiment.

Note that, in Fig. 30, the description will be given assuming that the vertical scanning section 1002, the AD conversion section 1003, and the signal processing section 1101 in the configuration described with reference to Fig. 5 are included in the pixel array section 1001.

The reading control section 230 supplies a control signal that specifies a pixel circuit 1000 from which a pixel signal is to be read to the pixel array section 1001. For example, the reading control section 230 can specify a line from which a pixel signal is to be read in the pixel array section 1001. Alternatively, the reading control section 230 can also specify a pixel circuit 1000 from which a pixel signal is to be read in the pixel array section 1001 in units of the pixel circuits 1000. At this time, the reading control section 230 can specify a pixel circuit 1000 corresponding to a pixel position of a sampling pixel by the phase shift subsampling described in the first embodiment in the pixel array section 1001.

The pixel array section 1001 converts the pixel signal read from the specified pixel circuit 1000 into digital pixel data, and passes the pixel data to the reading control section 230. The reading control section 230 passes the pixel data for one frame passed from the pixel array section 1001 to the recognition section 220 as image data. The image data is a sampling image obtained by the phase shift subsampling. The recognition section 220 performs the recognition processing on the passed image data.

In the second embodiment, the information processing device 1c can include a multilayer CIS having a two-layer structure in which semiconductor chips are stacked in two layers, which has been described with reference to Fig. 6A. Referring to Fig. 6A, a pixel section 2020a is formed in a semiconductor chip of a first layer, and a memory+logic section 2020b is formed in a semiconductor chip of a second layer. The pixel section 2020a includes at least the sensor section 10c in the information processing device 1c. The memory+logic section 2020b includes, for example, a drive circuit for driving the pixel array section 1001, the reading control section 230, and the recognition section 220. The memory+logic section 2020b can further include a frame memory.

As another example, the information processing device 1c can include a multilayer CIS having a three-layer structure in which semiconductor chips are stacked in three layers described with reference to Fig. 6B. In this case, the above-described pixel section 2020a is formed in a semiconductor chip of a first layer, a memory section 2020c including, for example, a frame memory is formed in a semiconductor chip of a second layer, and a logic section 2020d corresponding to the above-described memory+logic section 2020b is formed in a semiconductor chip of a third layer. In this case, the logic section 2020d includes, for example, a drive circuit for driving the pixel array section, the reading control section 230, and the recognition section 220. Furthermore, the memory section 2020c can include a frame memory and the memory 1202.

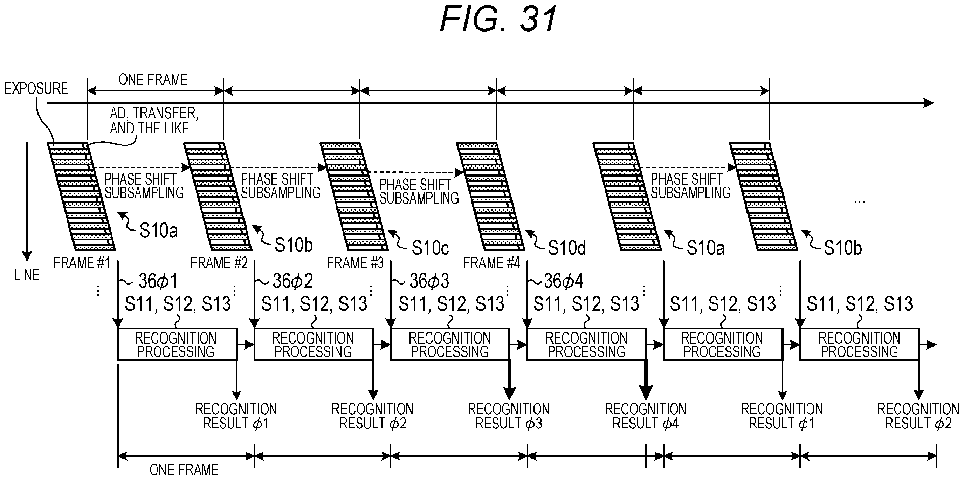

Next, a more specific configuration example for implementing the recognition processing according to the second embodiment will be described. Fig. 31 is a timing chart of an example illustrating control of reading and recognition processing according to the second embodiment. Since the meaning of each section in Fig. 31 is equivalent to that in Fig. 14 described above, a description thereof will be omitted here.

Furthermore, in the following description, as described with reference to Section (b) of Fig. 11, the divided region 35 serving as a unit of subsampling is set as a region including 4 pixels × 4 pixels, and sampling pixels are selected by thinning every other pixel in each of the row direction and the column direction. Furthermore, the captured image of the frame #1 is a target of the subsampling with the first phase, the captured image of the frame #2 is a target of the subsampling with the second phase, the captured image of the frame #3 is a target of the subsampling with the third phase, and the captured image of the frame #4 is a target of the subsampling with the fourth phase.

In the second embodiment, the reading control section 230 selectively reads a line including sampling pixels in imaging processing of each of the frames #1 to #4. For example, in the frame #1, sampling pixels are selected with the upper-left pixel of the divided region 35 as a base point, and in the frame #2, sampling pixels are selected with a pixel adjacent to the upper-left pixel of the divided region 35 as a base point. In other words, in a case where a line at the upper end of the frame is the first line, odd-numbered lines are selectively read in the frames #1 and #2, and even-numbered lines are selectively read in the frames #3 and #4.

For example, in the frame #1, the reading control section 230 selects pixel data of sampling pixels from pixel data of each read line, and generates a sampling image 36Φ1 from the selected pixel data (Step S10a). The reading control section 230 passes the generated sampling image 36Φ1 to the recognition section 220. The recognition section 220 performs the recognition processing on the basis of the sampling image 36Φ1 passed from the reading control section 230 (Step S11, Step S12, and Step S13), and outputs a recognition result Φ1.

Thereafter, for the frames #2, #3, and #4, similarly, the reading control section 230 generates sampling images 36Φ2, 36Φ3, and 36Φ4 by using sampling pixels selected from pixel data of each read line (Step 10b, Step 10c, and Step 10d). The recognition section 220 performs the recognition processing on the basis of the sampling images 36Φ2, 36Φ3, and 36Φ4 generated by the reading control section 230 (Step S11, Step S12, and Step S13), and outputs a recognition result Φ2, a recognition result Φ3, and a recognition result Φ4.

In addition, similarly to the first embodiment, the recognition section 220 sequentially integrates feature amounts extracted from the sampling images 36Φ1 to 36Φ4 by the recognition processing. The recognition section 220 outputs the recognition results Φ1 to Φ4 based on the sampling images 36Φ1 to 36Φ4 by using the integrated feature amount. That is, the information amount of each of the recognition results Φ1 to Φ4 obtained by the recognition processing based on each of the frames #1 to #4 increases every time the recognition processing is repeated, which indicates that the obtained recognition result becomes more detailed every time the recognition processing is performed.

As described above, in the second embodiment, the subsampling processing is performed in the sensor section 10c. Therefore, it is not necessary to perform reading from all the pixel circuits 1000 included in the pixel array section 1001. Therefore, it is possible to further shorten the latency of the recognition processing as compared with the first embodiment described above. In addition, since pixel circuits 1000 of a line including the sampling pixels are selectively read from all the pixel circuits 1000, the amount of pixel signals read from the pixel array section 1001 can be reduced, and the bus width can be reduced.

Furthermore, in the second embodiment, each pixel circuit 1000 is read by line performing thinning in the pixel array section 1001. Therefore, distortion of a captured image due to rolling shutter can be reduced. Furthermore, it is possible to reduce power consumption at the time of imaging in the pixel array section 1001. Furthermore, for a line thinned out by the subsampling, for example, it is also possible to perform imaging by changing an imaging condition such as exposure for the line to be read by the subsampling.

### (3-2. Application Example of Second Embodiment)

Next, an application example of the recognition processing of the second embodiment will be described.

### (3-2-1. First Application Example)

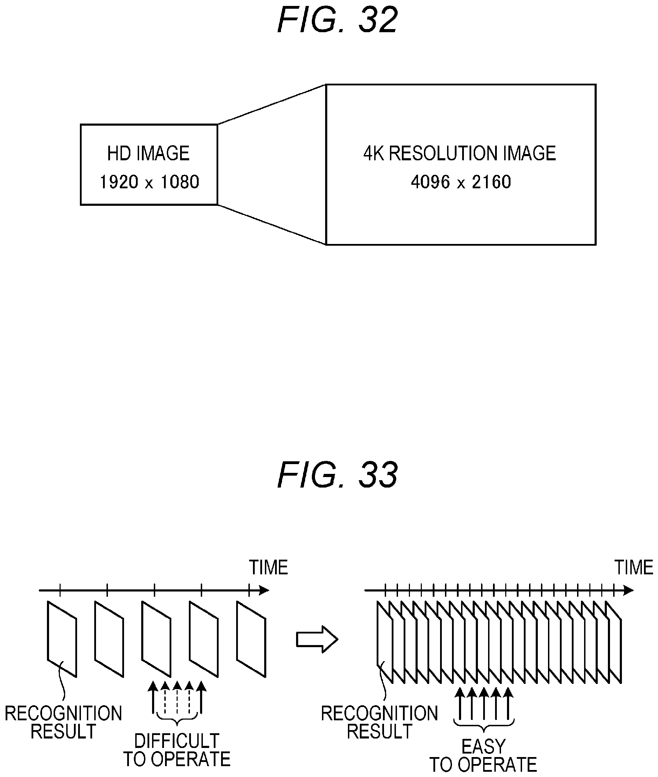

A first application example is application to recognition processing for a high-resolution captured image such as a 4K resolution image. Fig. 32 is a schematic diagram for explaining the first application example of the second embodiment. As for the 4K resolution image, an image of 1920 pixels × 1080 pixels (referred to as an HD image) is schematically depicted on the left side of Fig. 32, and a 4K resolution image of 4096 pixels × 2160 pixels is schematically depicted on the right side of Fig. 32. The number of pixels of the 4K resolution image is twice that of the HD image in each of the row direction and the column direction, and the number of pixels is four times that of the HD image.

In the second embodiment, since at least a part of the subsampling processing is performed inside the sensor section 10c when reading a pixel signal from the pixel array section 1001, the amount of data handled in one frame is small. Furthermore, the recognition section 220 performs the recognition processing for each frame on the basis of each sampling image by the subsampling processing. Therefore, it is possible to obtain a recognition result with high simultaneity with respect to the captured image. Furthermore, since the recognition section 220 sequentially integrates the feature amounts between frames, it is possible to obtain a more accurate recognition result by effectively utilizing the 4K resolution image.

### (3-2-2. Second Application Example)

A second application example is application to recognition processing for a sampling image whose resolution is reduced by the subsampling. Here, as the second application example, a user interface (UI) and improvement of user experience (UX) by the UI will be described. Fig. 33 is a schematic diagram for explaining the second application example of the second embodiment. The left side of Fig. 33 schematically depicts a UI according to an example in which a captured image is used without being reduced in size in the existing technology, and the right side of Fig. 33 schematically depicts the UI according to the second embodiment. Note that, as described above, in the recognition processing according to the second embodiment, as feature amounts are sequentially integrated for each frame, it is possible to obtain a recognition result with a resolution equivalent to that in a case where the recognition processing is performed using a captured image without reducing the size of the captured image.

According to the existing technology, as described with reference to Fig. 20, time corresponding to a plurality of frames is required to obtain a recognition result of a certain frame. Therefore, the recognition result is updated every plurality of frames. This means that it is difficult to perform the operation between frames, which is considered as being an unpreferable UX. On the other hand, in the second embodiment, it is possible to update, on the basis of a sampling image obtained by the subsampling, the recognition result for each frame although the resolution is low. Therefore, it is easy to perform the operation between frames, which is considered as being a preferable UX. As a result, it is possible to improve the UX of the UI related to the recognition processing according to the second embodiment as compared with the UI according to the existing technology that uses a captured image without reducing the size of the captured image.

Note that the second application example can be applied not only to the second embodiment but also to the above-described first embodiment and each modified example thereof.

### (3-2-3. Third Application Example)

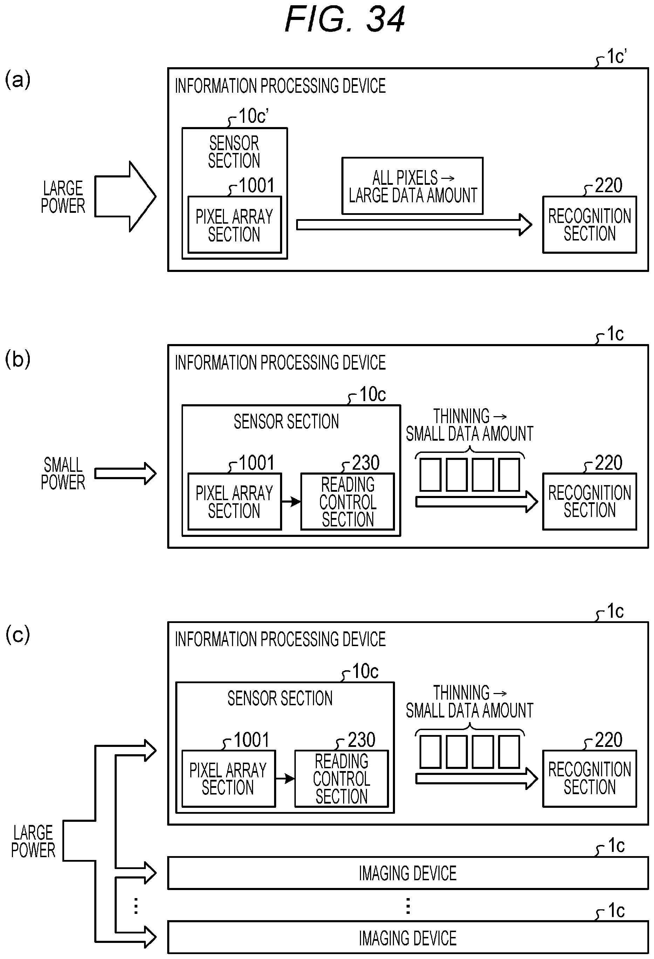

A third application example is an application example for data transfer and reduction of power consumption. Fig. 34 is a schematic diagram for explaining the third application example of the second embodiment. Section (a) of Fig. 34 schematically depicts a configuration example of an information processing device 1c' that performs recognition processing of using a captured image without reducing the size of the captured image in the existing technology. Section (b) of Fig. 34 schematically depicts a configuration example of the information processing device 1c according to the second embodiment. Note that it is assumed that the information processing devices 1c and 1c' perform the recognition processing on a captured image having the same size.

Note that, here, in the information processing device 1c according to the second embodiment, as described with reference to Section (b) of Fig. 11, the divided region 35 serving as a unit of subsampling is set as a region including 4 pixels × 4 pixels, and sampling pixels are selected by thinning every other pixel in each of the row direction and the column direction. Further, the captured images of the frames #1 to #4 are subjected to the subsampling with the first phase, the second phase, the third phase, and the fourth phase, respectively.

In the example of the information processing device 1c' depicted in Section (a) of Fig. 34 that uses a captured image without reducing the size of the captured image, in the recognition processing for the captured image of one frame, all pieces of pixel data included in one frame are transferred from a sensor section 10c' to a recognition section 220.

On the other hand, in the information processing device 1c according to the second embodiment depicted in Section (b) of Fig. 34, in the recognition processing for the captured image of one frame, only pixel data of a pixel position selected by thinning one frame is transferred. For example, in a case where the divided region 35 has a size of 4 pixels × 4 pixels, and subsampling in which every other pixel is thinned out in each of the row direction and the column direction in the divided region 35 as depicted in Section (b) of Fig. 11, pixel data transferred per frame is 1/4 of that in a case of Section (a).

As described above, in the information processing device 1c according to the second embodiment, the amount of pixel data transferred from the sensor section 10c to the recognition section 220 can be reduced, the bus width can be reduced, the processing amount of the recognition section 220 per frame is reduced, and lower power consumption can be achieved, as compared with the information processing device 1c' that uses a captured image for the recognition processing without reducing the size of the captured image.

On the other hand, in a case where power equivalent to that of the information processing device 1c' that uses a captured image without reducing the size of the captured image as depicted in Section (a) of Fig. 34 can be supplied to the information processing device 1c according to the second embodiment, for example, a plurality of information processing devices 1 c can be operated in parallel as depicted in Section (c) of Fig. 34.

### [4. Third embodiment]

Next, a third embodiment of the present disclosure will be described. The third embodiment is an example in which the sensor section 10c and the recognition section 220 are separated in the information processing device 1c according to the second embodiment described above.

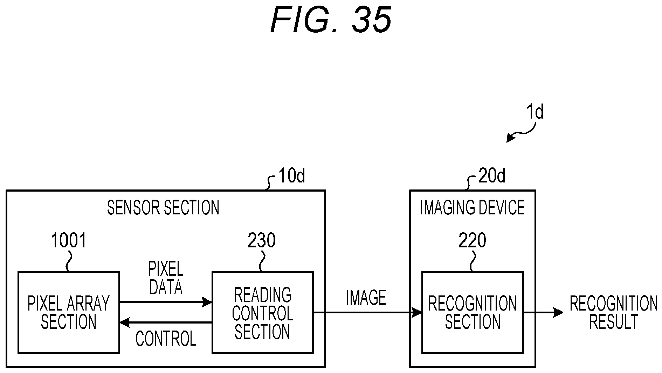

Fig. 35 is a block diagram depicting a configuration of an example of an information processing device according to the third embodiment. In Fig. 35, an information processing device 1d includes a sensor section 10d and a recognition processing section 20d, and the sensor section 10d includes a pixel array section 1001 and a reading control section 230. Furthermore, the recognition processing section 20d includes a recognition section 220.

Here, the sensor section 10d is formed by, for example, a multilayer CIS having a two-layer structure in which semiconductor chips are stacked in two layers, which has been described with reference to Fig. 6A. Referring to Fig. 6A, a pixel section 2020a is formed in a semiconductor chip of a first layer, and a memory+logic section 2020b is formed in a semiconductor chip of a second layer. The pixel section 2020a includes at least the pixel array section 1001 in the sensor section 10d. The memory+logic section 2020b includes, for example, a drive circuit for driving the pixel array section 1001 and the reading control section 230. The memory+logic section 2020b can further include a frame memory.

The sensor section 10d outputs image data of a sampling image from the reading control section 230, and supplies the image data to the recognition processing section 20d included in hardware different from the sensor section 10d. The recognition processing section 20d inputs the image data supplied from the sensor section 10d to the recognition section 220. The recognition section 220 performs the recognition processing on the basis of the input image data, and outputs a recognition result to the outside.

As another example, the sensor section 10d can be formed by a multilayer CIS having a three-layer structure in which semiconductor chips are stacked in three layers described with reference to Fig. 6B. In this case, the above-described pixel section 2020a is formed in a semiconductor chip of a first layer, a memory section 2020c including, for example, a frame memory is formed in a semiconductor chip of a second layer, and a logic section 2020b corresponding to the above-described memory+logic section 2020b is formed in a semiconductor chip of a third layer. In this case, the logic section 2020b includes, for example, a drive circuit for driving the pixel array section 1001 and the reading control section 230. Furthermore, the memory section 2020c can include a frame memory and the memory 1202.

In this manner, as the recognition processing section 20d (recognition section 220) is implemented by hardware separated from the sensor section 10d, the configuration of the recognition section 220, for example, the recognition model and the like, can be easily changed.

Furthermore, since the recognition processing is performed on the basis of a sampling image obtained by the subsampling in the sensor section 10d, the load of the recognition processing can be reduced as compared with a case where the recognition processing is performed using the image data 32 of the captured image as it is. Therefore, for example, a CPU, a DSP, or a GPU having low processing capability can be used in the recognition processing section 20d, and the cost of the information processing device 1d can be reduced.

### [5. Fourth Embodiment]

Next, a fourth embodiment of the present disclosure will be described. In the first to third embodiments described above, one subsampling is performed for one piece of image data 32, but this is not limited to this example. The fourth embodiment is an example in which the subsampling is performed a plurality of times for one piece of image data 32.

Note that all of the information processing device 1b according to the first embodiment and each modified example thereof described above, the information processing device 1c according to the second embodiment, and the information processing device 1d according to the third embodiment are applicable in the third embodiment. Hereinafter, a description will be given on the assumption that the information processing device 1b depicted in Fig. 9 is applied to the fourth embodiment.

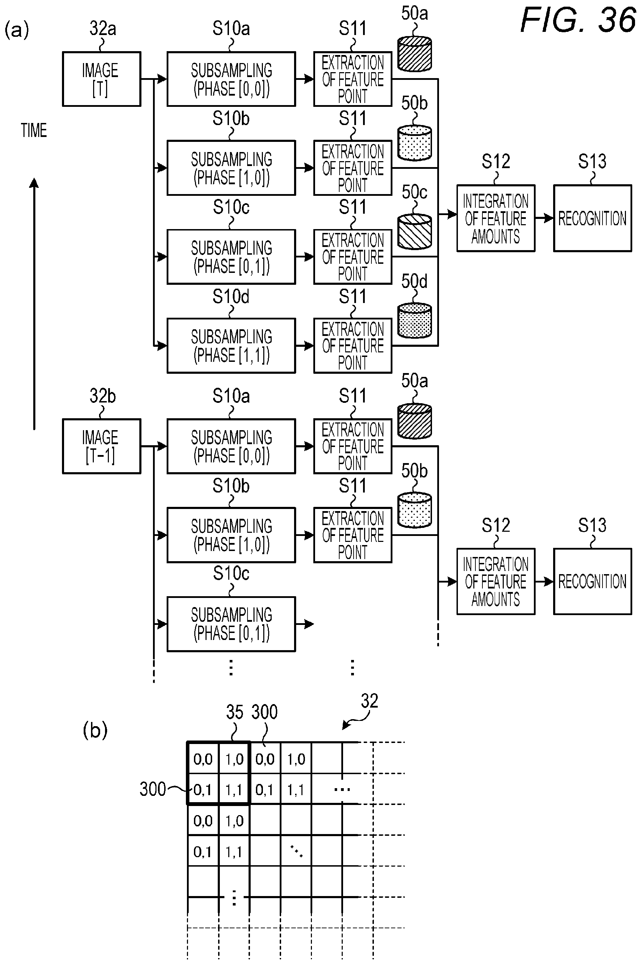

Fig. 36 is a schematic diagram for explaining subsampling processing in recognition processing according to the fourth embodiment. Here, it is assumed that the subsampling is performed in a similar manner to that in Section (b) of Fig. 13A described above as depicted in Section (b) of Fig. 36 for explanation. That is, in each divided region 35 which is a region of 2 pixels × 2 pixels, an upper-left pixel position is set to origin coordinates [0,0], and upper-right, lower-left, and lower-right pixel positions are set to coordinates [1,0], [0,1], and [1,1], respectively.

Furthermore, sampling of the pixels 300 is performed in the order of coordinates [1,1], [1,0], [0,1], and [0,0] with the lower-right pixel position [1,1] as a base point in each divided region 35. In addition, sampling images including sampling pixels acquired by the subsampling with the respective coordinates [1,1], [1,0], [0,1], and [0,0] as base points are referred to as a sampling image of a phase [1,1], a sampling image of a phase [1,0], a sampling image of a phase [0,1], a sampling image of a phase [0,0], and the like, respectively.

In Section (a) of Fig. 36, image data 32a is an image [T] at the most recent time T, and image data 32b is an image [T-1] at time T-1 of a frame immediately before the image data 32a. Hereinafter, an image at each time will be described as represented by the image [T] (image data 32a) at time T.

The preprocessing section 210 performs the subsampling on one piece of image data 32a while periodically shifting the position (Steps S10a to S10d). For example, during one frame period from acquisition of the image data 32a to acquisition of the next image data, the preprocessing section 210 sequentially performs the subsampling with the coordinates [1,1], [1,0], [0,1], and [0,0] as base points, and acquires the sampling image of the phase [1,1], the sampling image of the phase [1,0], the sampling image of the phase [0,1], and the sampling image of the phase [0,0].

The recognition section 220 performs feature amount extraction on each of the sampling image of the phase [1,1], the sampling image of the phase [1,0], the sampling image of the phase [0,1], and the sampling image of the phase [0,0] (Step S11), to extract feature amounts 50a, 50b, 50c, and 50d.

The recognition section 220 performs processing of integrating the feature amounts 50a, 50b, 50c, and 50d extracted from the image data 32a (Step S12), and performs the recognition processing on the basis of a feature amount obtained by integrating the feature amounts 50a, 50b, 50c, and 50d (Step S13).

As described above, the feature amount extraction processing is performed on a sampling image of each phase obtained by performing the subsampling while shifting the phase for one piece of image data 32a, as a result of which the recognition processing based on the integrated feature amount can be performed at a higher speed.

Here, in the above description, the subsampling for all the phases [1,1], [1,0], [0,1], and [0,0] is performed in the divided region 35 including 2 pixels × 2 pixels, the recognition processing for the entire one piece of image data 32a is performed. This is not limited to this example, and the subsampling may be selectively performed for a specific phase among the phases [1,1], [1,0], [0,1], and [0,0].

For example, to the subsampling is performed only on the phases [1,1] and [0,0] positioned diagonally among the respective phases [1,1], [1,0], [0,1], and [0,0], and the feature amounts of the acquired sampling images of the phases [1,1] and [0,0] are extracted to perform the recognition processing. As a result, the processing amounts of the feature extraction and the human initial processing can be reduced, and power consumption in the recognition processing section 20b can be suppressed.

Furthermore, for example, a result of performing the recognition processing on the basis of the feature amount obtained by performing the subsampling on one (for example, the phase [1,1]) of the phases [1,1], [1,0], [0,1], and [0,0] can be output as a promptly reported result. In this case, after the promptly reported result is output, the subsampling for other phases (for example, [1,0], [0,1] and [0,0]) is performed, the recognition processing is performed on the basis of a feature amount obtained by integrating the feature amounts of [1,1], [1,0], [0,1], and [0,0], and a recognition result is output.

Further, in this case, the subsequent processing (subsampling with other phases, feature extraction, and the like) can be omitted as long as a sufficient recognition result can be obtained from the promptly reported result. In this case, processing for the next image data can be started immediately after the output of the promptly reported result, and the frame rate can be further increased.

### [6. Fifth Embodiment]

### (6-1. Application Example of Technology According to Present Disclosure)

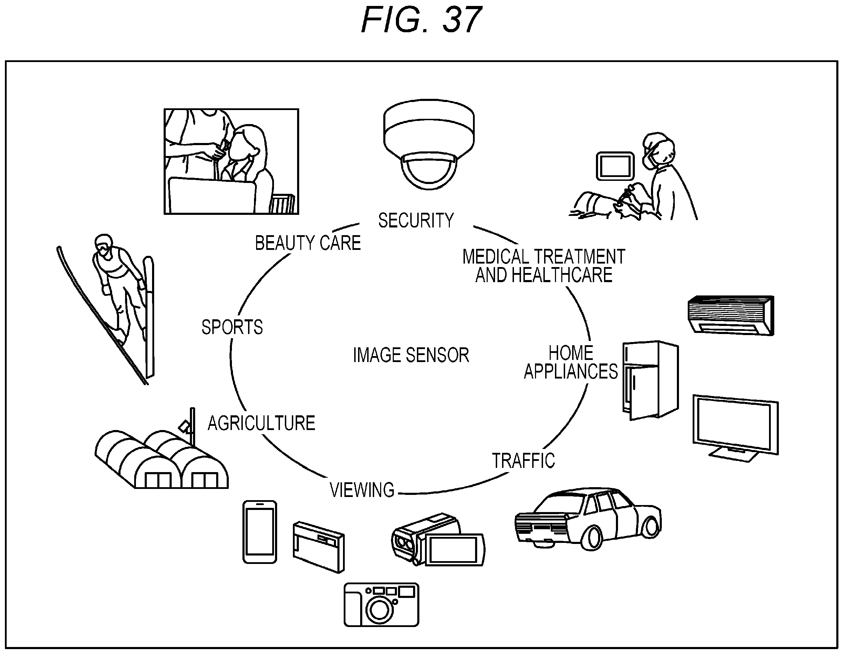

Next, application examples of the information processing devices 1b, 1c, and 1d according to the first embodiment and each modified example thereof, the second embodiment, the third embodiment, and the fourth embodiment according to the present disclosure will be described as a fifth embodiment. Fig. 37 is a diagram depicting examples of use of the information processing devices 1b, 1c, and 1d according to the first embodiment and each modified example thereof, the second embodiment, the third embodiment, and the fourth embodiment. Note that, in the following description, the information processing devices 1b, 1c, and 1d will be described as representatives of the information processing device 1b in a case where it is not particularly necessary to distinguish them.

For example, the information processing device 1a described above can be used in various cases where light such as visible light, infrared light, ultraviolet light, and X-rays is sensed and the recognition processing is performed on the basis of a sensing result as follows.

- A device that captures an image provided for viewing, such as a digital camera and a portable device with a camera function
- A device provided for traffic, such as an in-vehicle sensor for capturing an image of the region in front of, behind, surrounding, inside, or the like of a vehicle, a monitoring camera for monitoring a traveling vehicle or a road, or a distance measurement sensor for measuring the distance between vehicles or the like, for the purpose of safe driving such as automatic stop, recognition of driver's state, and the like
- A device provided for home appliances, such as a television, a refrigerator, and an air conditioner, to capture an image of the gesture of the user and perform a device operation in accordance with the gesture
- A device provided for medical treatment and healthcare, such as an endoscope or a device for capturing an image of blood vessels by receiving infrared light
- A device provided for security, such as a monitoring camera for security or a camera for personal authentication
- A device provided for beauty care, such as a skin measuring device for capturing an image of skin or a microscope for capturing an image of scalp
- A device provided for sports, such as an action camera or a wearable camera for use in sports or the like
- A device provided for agriculture, such as a camera for monitoring the state of fields and crops

### (6-2. Example of Application to Mobile Body)

The technology (present technology) according to the present disclosure can be applied to various products. For example, the technology according to an embodiment of the present disclosure may be implemented as a device mounted in any one of mobile bodies such as a vehicle, an electric vehicle, a hybrid electric vehicle, a motorcycle, a bicycle, a personal mobility device, a plane, a drone, a ship, a robot, and the like.

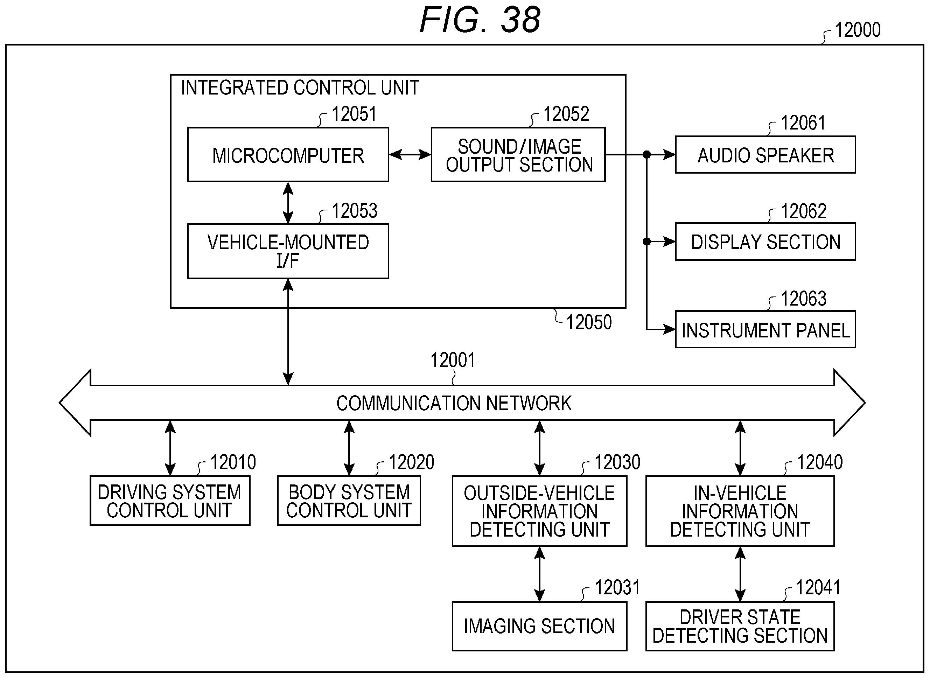

Fig. 38 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in Fig. 38, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 38, an audio speaker 12061, a display section 12062, and an instrument panel 12063 are illustrated as the output device. The display section 12062 may, for example, include at least one of an on-board display and a head-up display.

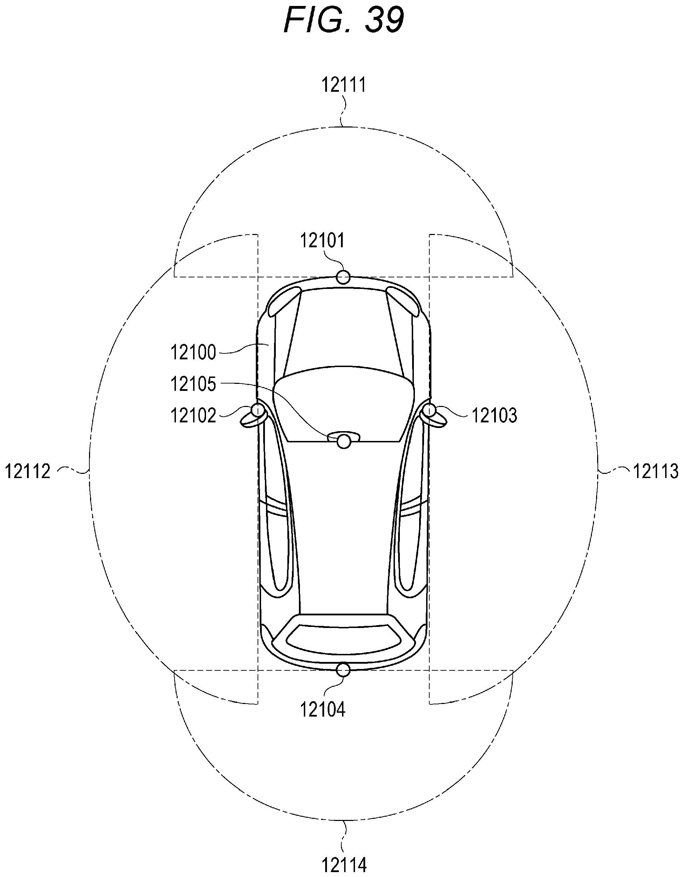

Fig. 39 is a diagram depicting an example of the installation position of the imaging section 12031.

In Fig. 39, a vehicle 12100 includes, as the imaging section 12031, imaging sections 12101, 12102, 12103, 12104, and 12105.

The imaging sections 12101, 12102, 12103, 12104, and 12105 are, for example, disposed at positions on a front nose, sideview mirrors, a rear bumper, a back door of the vehicle 12100 as well as a position on an upper portion of a windshield within the interior of the vehicle, or the like. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The image of the front of the vehicle 12100 acquired by the imaging sections 12101 and 12105 is used mainly to detect a preceding vehicle, a pedestrian, an obstacle, a signal, a traffic sign, a lane, or the like.

Incidentally, Fig. 39 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. Further, the sound/image output section 12052 may also control the display section 12062 so that an icon or the like representing the pedestrian is displayed at a desired position.

Hereinabove, an example of the vehicle control system to which the technology according to an embodiment of the present disclosure can be applied has been described. The technology according to an embodiment of the present disclosure can be applied to the imaging section 12031 and the outside-vehicle information detecting unit 12030 in the above-described configuration. Specifically, for example, the sensor section 10b of the information processing device 1b is applied to the imaging section 12031, and the recognition processing section 20b is applied to the outside-vehicle information detecting unit 12030. The recognition result output from the recognition processing section 20b is passed to the integrated control unit 12050 via, for example, the communication network 12001.

As described above, by applying the technology according to an embodiment of the present disclosure to the imaging section 12031 and the outside-vehicle information detecting unit 12030, it is possible to recognize each of a target object positioned at a short distance and a target object positioned at a long distance, and it is possible to perform recognize a target object positioned at a short distance with high simultaneity, so that it is possible to more reliably support driving.

Note that the effects described in the present specification are merely illustrative and not limitative, and the present technology may have other effects.

Note that the present technology can also have the following configuration.
(1) An information processing device including:
   a setting section that sets a pixel position for acquiring a sampling pixel for each divided region obtained by dividing imaging information including pixels;
   a calculation section that calculates a feature amount of a sampling image including the sampling pixel; and
   a recognition section that performs recognition processing on the basis of the feature amount of the sampling image and outputs a recognition processing result, in which
   the setting section
   sets different pixel positions for first imaging information and second imaging information acquired after the first imaging information in time series among pieces of the imaging information.
(2) The information processing device according to (1), in which
   the recognition section
   performs machine learning processing by using a recurrent neural network (RNN) using the sampling pixel set in the first imaging information and the sampling pixel set in the second imaging information, and performs the recognition processing on the basis of a result of the machine learning processing.
(3) The information processing device according to (1) or (2), in which
   the setting section
   sets the pixel position so as to rotate in the divided region in a constant cycle in response to acquisition of the imaging information.
(4) The information processing device according to (1) or (2), in which
   the setting section
   arbitrarily set the pixel position in the divided region in response to acquisition of the imaging information.
(5) The information processing device according to (1) or (2), in which
   the setting section
   sets the pixel position in the divided region in response to acquisition of the imaging information on the basis of an instruction from the outside.
(6) The information processing device according to any one of (1) to (5), in which
   the setting section
   sets all pixel positions included in the divided region as the pixel positions across a plurality of pieces of the imaging information continuous in time series.
(7) The information processing device according to any one of (1) to (6), in which
   the setting section
   sets all pixel positions included in the imaging information as the pixel positions across a plurality of pieces of the imaging information continuous in time series.
(8) The information processing device according to any one of (1) to (7), further including an accumulation section that accumulates the feature amount calculated by the calculation section, in which
   the recognition section
   performs the recognition processing on the basis of at least some of the feature amounts accumulated in the accumulation section, and outputs the recognition processing result.
(9) The information processing device according to (8), in which
   the recognition section
   performs the recognition processing on the basis of a feature amount obtained by integrating a plurality of the feature amounts accumulated in the accumulation section.
(10) The information processing device according to (8), in which
   the recognition section
   integrates the feature amount calculated by the calculation section in response to acquisition of the imaging information with at least some of the feature amounts accumulated in the accumulation section until immediately before the acquisition, and performing the recognition processing on the basis of the integrated feature amount.
(11) The information processing device according to any one of (8) to (10), in which
   the recognition section
   performs the recognition processing on the basis of a feature amount selected according to a predetermined condition from among the feature amounts accumulated in the accumulation section.
(12) The information processing device according to (11), in which
   the recognition section
   performs the recognition processing on the basis of the most recent feature amount in time series among the feature amounts accumulated in the accumulation section.
(13) The information processing device according to any one of (8) to (12), in which
   the recognition section
   discards a feature amount corresponding to a predetermined condition among the feature amounts accumulated in the accumulation section.
(14) The information processing device according to any one of (1) to (13), in which
   the recognition section
   performs the recognition processing on the feature amount of the sampling image on the basis of training data for each pixel corresponding to the pixel position of each divided region.
(15) The information processing device according to any one of (1) to (14), in which
   the setting section
   sets the pixel position for calculating the feature amount in a second pattern different from a first pattern in which the pixel position included in the sampling image subjected to the recognition processing is set according to the recognition processing performed by the recognition section.
(16) The information processing device according to any one of (1) to (15), in which
   the setting section
   makes an exposure condition for acquiring the first imaging information different from an exposure condition for acquiring the second imaging information.
(17) An information processing method
   performed by a processor, the information processing method including:
   a setting step of setting a pixel position for acquiring a sampling pixel for each divided region obtained by dividing imaging information including pixels;
   a calculation step of calculating a feature amount of a sampling image including the sampling pixel; and
   a recognition step of performing recognition processing on the basis of the feature amount of the sampling image and outputting a recognition processing result, in which
   in the setting step,
   different pixel positions are set for first imaging information and second imaging information acquired after the first imaging information in time series among pieces of the imaging information.
(18) An information processing program for causing a computer to perform:
   a setting step of setting a pixel position for acquiring a sampling pixel for each divided region obtained by dividing imaging information including pixels;
   a calculation step of calculating a feature amount of a sampling image including the sampling pixel; and
   a recognition step of performing recognition processing on the basis of the feature amount of the sampling image and outputting a recognition processing result, in which
   in the setting step,
   different pixel positions are set for first imaging information and second imaging information acquired after the first imaging information in time series among pieces of the imaging information.

### REFERENCE SIGNS LIST

1a, 1b, 1c, 1d Information processing device
10a, 10b, 10c, 10d Sensor section
20a, 20b, 20d Recognition processing section
30a, 30b Captured image
32, 32a, 32a', 32b, 32c, 32d Image data
35, 35' Divided region
36, 36Φ1, 36Φ1', 36Φ2, 36Φ3, 36Φ4, 36Φx Sampling image
40, 60, 61, 62, 63, 64, 65, 66, 70, 71 Recognition result
41, 42, 43, 44 Object
50a, 50a', 50b, 50c, 50d Feature amount
210 Preprocessing section
211 Reading section
212 Use region acquisition section
220 Recognition section
221 Feature amount calculation section
222 Feature amount accumulation control section
223 Feature amount accumulation section
224 Use region determination section
225 Recognition processing execution section
230 Reading control section
300 Pixel
3101, 3102, 3103, 3104, 3105, 3106, 3107, 3108, 3109 Captured image
320, 320ExpΦ1, 320ExpΦ2, 320ExpΦ3, 320ExpΦ4, 320Rn1, 320Rn2, 320Rnn, 320Φ1, 320Φ2, 320Φ3, 320Φ4 Original image
321, 321a, 321b, 321c, 321d Size-reduced image
1000 Pixel circuit
1001 Pixel array section
1200 Imaging section
1202 Memory
1203 DSP
1205 CPU

## Claims

1. An information processing device comprising:
a setting section that sets a pixel position for acquiring a sampling pixel for each divided region obtained by dividing imaging information including pixels;
a calculation section that calculates a feature amount of a sampling image including the sampling pixel; and
a recognition section that performs recognition processing on a basis of the feature amount of the sampling image and outputs a recognition processing result, wherein
the setting section
sets different pixel positions for first imaging information and second imaging information acquired after the first imaging information in time series among pieces of the imaging information.

2. The information processing device according to claim 1, wherein
the recognition section
performs machine learning processing by using a recurrent neural network (RNN) using the sampling pixel set in the first imaging information and the sampling pixel set in the second imaging information, and performs the recognition processing on a basis of a result of the machine learning processing.

3. The information processing device according to claim 1, wherein
the setting section
sets the pixel position so as to rotate in the divided region in a constant cycle in response to acquisition of the imaging information.

4. The information processing device according to claim 1, wherein
the setting section
arbitrarily set the pixel position in the divided region in response to acquisition of the imaging information.

5. The information processing device according to claim 1, wherein
the setting section
sets the pixel position in the divided region in response to acquisition of the imaging information on a basis of an instruction from the outside.

6. The information processing device according to claim 1, wherein
the setting section
sets all pixel positions included in the divided region as the pixel positions across a plurality of pieces of the imaging information continuous in time series.

7. The information processing device according to claim 1, wherein
the setting section
sets all pixel positions included in the imaging information as the pixel positions across a plurality of pieces of the imaging information continuous in time series.

8. The information processing device according to claim 1, further comprising an accumulation section that accumulates the feature amount calculated by the calculation section, wherein
the recognition section
performs the recognition processing on a basis of at least some of the feature amounts accumulated in the accumulation section, and outputs the recognition processing result.

9. The information processing device according to claim 8, wherein
the recognition section
performs the recognition processing on a basis of a feature amount obtained by integrating a plurality of the feature amounts accumulated in the accumulation section.

10. The information processing device according to claim 8, wherein
the recognition section
integrates the feature amount calculated by the calculation section in response to acquisition of the imaging information with at least some of the feature amounts accumulated in the accumulation section until immediately before the acquisition, and performs the recognition processing on a basis of the integrated feature amount.

11. The information processing device according to claim 8, wherein
the recognition section
performs the recognition processing on a basis of a feature amount selected according to a predetermined condition from among the feature amounts accumulated in the accumulation section.

12. The information processing device according to claim 11, wherein
the recognition section
performs the recognition processing on a basis of a most recent feature amount in time series among the feature amounts accumulated in the accumulation section.

13. The information processing device according to claim 8, wherein
the recognition section
discards a feature amount corresponding to a predetermined condition among the feature amounts accumulated in the accumulation section.

14. The information processing device according to claim 1, wherein
the recognition section
performs the recognition processing on the feature amount of the sampling image on a basis of training data for each pixel corresponding to the pixel position of each divided region.

15. The information processing device according to claim 1, wherein
the setting section
sets the pixel position for calculating the feature amount in a second pattern different from a first pattern in which the pixel position included in the sampling image subjected to the recognition processing is set according to the recognition processing performed by the recognition section.

16. The information processing device according to claim 1, wherein
the setting section
makes an exposure condition for acquiring the first imaging information different from an exposure condition for acquiring the second imaging information.

17. An information processing method
performed by a processor, the information processing method comprising:
a setting step of setting a pixel position for acquiring a sampling pixel for each divided region obtained by dividing imaging information including pixels;
a calculation step of calculating a feature amount of a sampling image including the sampling pixel; and
a recognition step of performing recognition processing on a basis of the feature amount of the sampling image and outputting a recognition processing result, wherein
in the setting step,
different pixel positions are set for first imaging information and second imaging information acquired after the first imaging information in time series among pieces of the imaging information.

18. An information processing program for causing a computer to perform:
a setting step of setting a pixel position for acquiring a sampling pixel for each divided region obtained by dividing imaging information including pixels;
a calculation step of calculating a feature amount of a sampling image including the sampling pixel; and
a recognition step of performing recognition processing on a basis of the feature amount of the sampling image and outputting a recognition processing result, wherein
in the setting step,
different pixel positions are set for first imaging information and second imaging information acquired after the first imaging information in time series among pieces of the imaging information.
